(19) **Europäisches Patentamt**
**European Patent Office**
**Office européen des brevets**

(11) **EP 4 255 216 B1**

(12) **EUROPÄISCHE PATENTSCHRIFT**

(45) Veröffentlichungstag und Bekanntmachung des Hinweises auf die Patenterteilung:
**14.05.2025 Patentblatt 2025/20**

(21) Anmeldenummer: **21823563.8**

(22) Anmeldetag: **03.12.2021**

(51) Internationale Patentklassifikation (IPC):
**A23L 23/10** (2016.01) **A23L 29/231** (2016.01)
**A23L 27/60** (2016.01) **A23L 29/206** (2016.01)

(52) Gemeinsame Patentklassifikation (CPC):
**A23L 29/231; A23L 23/10; A23L 27/60; A23L 29/206**

(86) Internationale Anmeldenummer:
**PCT/EP2021/084173**

(87) Internationale Veröffentlichungsnummer:
**WO 2022/117817 (09.06.2022 Gazette 2022/23)**

(54) **MEHRKOMPONENTENSYSTEM ZUR HERSTELLUNG VON SOSSEN UND/ODER SUPPEN AUF PFLANZLICHER BASIS**

MULTI-COMPONENT SYSTEM FOR PREPARING PLANT-BASED SAUCES AND/OR SOUPS

SYSTÈME À INGRÉDIENTS MULTIPLES POUR LA PRÉPARATION DE SAUCES ET/OU DE SOUPES À BASE DE PLANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2020 DE 102020132293**

(43) Veröffentlichungstag der Anmeldung:
**11.10.2023 Patentblatt 2023/41**

(73) Patentinhaber: **Herbstreith & Fox GmbH & Co. KG Pektin-Fabriken**
**75305 Neuenbürg (DE)**

(72) Erfinder:
• **FOX, Sven**
**75305 Neuenbürg (DE)**
• **PUHL, Jens**
**14542 Werder (Havel) (DE)**

(74) Vertreter: **Viering, Jentschura & Partner mbB Patent- und Rechtsanwälte**
**Hamborner Straße 53**
**40472 Düsseldorf (DE)**

(56) Entgegenhaltungen:
**EP-B1- 0 772 406**       **WO-A1-00/70971**
**WO-A1-2021/250159**    **WO-A2-2019/048715**
**DE-A1- 102020 122 510**   **DE-A1- 102020 122 518**
**DE-A1- 19 943 188**

• **MAY ET AL: "Industrial pectins: Sources, production and applications", CARBOHYDRATE POLYMERS, APPLIED SCIENCE PUBLISHERS , LTD BARKING, GB, vol. 12, no. 1, 1 January 1990 (1990-01-01), pages 79 - 99, XP024147258, ISSN: 0144-8617, [retrieved on 19900101], DOI: 10.1016/ 0144-8617(90)90105-2**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Mehrkomponentensystem zur Herstellung einer Soße oder einer Suppe, eine Verwendung des Mehrkomponentensystems zur Herstellung einer Soße oder Suppe, sowie ein Verfahren zur Herstellung der Soße und/oder der Suppe mittels des erfindungsgemäßen Mehrkomponentensystems.

**Hintergrund der Erfindung**

In der Gastronomie und in der Lebensmittelindustrie wird der Geschmack vieler Gerichte durch die im Gericht enthaltende Soße bestimmt. In Abhängigkeit des gewünschten Geschmacks werden dabei ganz verschiedenartige Soßen eingesetzt, die auf Grundlage unterschiedlicher Komponenten hergestellt werden. Während in der höherwertigen Gastronomie hierzu jede Soße von Grund auf frisch zubereitet wird, werden im preiswerten Segment regelmäßig vorgefertigte Soßen eingesetzt. Bei der Zubereitung von Grund auf kann zwar die gewünschte Geschmacksnote genau bestimmt werden, allerdings ist die Zubereitung zeit- und kostenintensiv und erfordert geschultes Personal. Vorgefertigte Komplettsoßen hingegen haben den Nachteil, dass sie regelmäßig geschmacklich nicht optimal auf das angebotene Gericht angepasst sind. Dies kann ein nicht zufriedenstellendes Geschmackserlebnis zur Folge haben. Des Weiteren weisen vorgefertigte Soßen häufig einen hohen Salz- und Kaloriengehalt auf.

Neben diesen beiden Ansätzen besteht für einige Soßen auch die Möglichkeit, ausgehend von einer Grundsoße über weitere Zusätze den Geschmack der Soße in Abhängigkeit der spezifischen Anwendung zu modifizieren. Das Konzept der Grundsoße stammt aus der klassischen Küche Frankreichs und ist bereits seit langem in der Gastronomie etabliert. Hierbei wird eine Grundsoße durch die Zugabe von Würzmitteln, geschmacksgebenden Zutaten und anderen Lebensmitteln verfeinert, um auf diese Weise die gewünschte Geschmacksrichtung zu treffen. Aus den Hauptzutaten Knochen, Brühen, Fonds, Wurzelgemüse, Tomaten, Tomatenmark, Mehl, Butter, Milch oder Sahne wird in einem aufwendigen Verfahren eine Grundsoße hergestellt.

Die verwendeten aromatischen Flüssigkeiten wie Fonds, Weine, Öle oder Milchprodukte bestimmen meist schon den Geschmack, der sich anschließend nur eingeschränkt modifizieren lässt. Somit sind die Grundsoßen auf eine geringe Anzahl an Anwendungen limitiert und weisen nur eine begrenzte Bandbreite an möglichen Geschmacksvariationen auf. Zudem ist die Herstellung solcher Grundsoßen anspruchsvoll und erfordert den Einsatz von geschultem Personal. Die Konsistenz der Grundsoße lässt sich durch das Andicken mit Mehlschwitze, Stärke, Ei oder kalter Butter variieren. Hierbei kommt es auf die genaue Dosierung und das spezifische Vorgehen an, sodass auch beim Verdicken erfahrenes Personal benötigt wird.

In WO 00/70971 A1 wird eine Kombination einer trockenen Gewürzmischung, die einen Puffer und/oder eine alkalische Substanz enthält, mit einer angesäuerten, emulsifizierten Soßenmischung mit sehr hohem Salz- und Feststoffanteil beschrieben. Diese Kombination soll besonders stabil gegen mikrobiologischen Befall sein. Nachteilig an der in WO 00/70971 A1 beschriebenen Kombination ist jedoch der hohe Salzgehalt, der gemeinhin als gesundheitsschädlich erachtet wird.

In EP 0 653 166 A1 wird eine dickflüssige Soße beschrieben, die 10-60% Fett, 0,1-2% Alkylcellulose und 0,1-3% Verdickungsmittel enthält und einen pH-Wert von weniger als 5 aufweist. Diese dickflüssige Soße lässt sich durch den Zusatz von Butter, Gemüse, Gewürzen, Wein und Ähnlichem geschmacklich modifizieren. Hierbei ist die geschmackliche Bandbreite insbesondere durch den hohen Fettgehalt begrenzt. Zudem lassen sich nur wenige Arten an besonders dickflüssigen Soßen mit diesem Ansatz herstellen.

Die WO 2019/048715 A2 beschreibt ein Verfahren zur Herstellung einer erweiterten Pektin-enthaltenden Biomassezusammensetzung, die einen Pektingehalt von 20-50% aufweist und sich beispielsweise zur Herstellung von Suppen oder Soßen eignet. Nachteilig ist das aufwendige Herstellungsverfahren der erweiterten Pektin-enthaltenden Biomassezusammensetzung. Aus einem Pektin-enthaltenden Ausgangsmaterial wird zunächst in alkoholisch-saurem Milieu unter Einwirkung mechanischer Energie eine aktivierte Pektin-enthaltenden Biomassezusammensetzung erstellt, aus der dann wiederum in alkoholisch-saurem Milieu unter Einwirkung mechanischer Energie die erweiterten Pektin-enthaltenden Biomassezusammensetzung hergestellt wird.

Die DE 199 43 188 beschreibt ein Verfahren zur Herstellung eines Ballaststoffes sowie Lebensmittelprodukte unter Verwendung eines solchen Ballaststoffes. Der Ballaststoff weißt dabei einen löslichen Ballaststoffanteil von mehr als 10 Gew.% und eine Wasserbindekapazität von weniger als 17 g/g auf.

Somit besteht weiterhin ein Bedarf an einem Soßensystem, mit dem auf einfache und kostengünstige Weise eine große Variation an unterschiedlichen Soßen in flexibler Weise hergestellt werden kann.

Eine ähnliche Problematik stellt sich im Bereich von Suppen, bei denen auch erhebliche Qualitäts- und Zeitunterschiede bei der Zubereitung zwischen einer frisch hergestellten und einer Fertigsuppe bestehen.

Die vorliegende Erfindung stellt sich somit die Aufgabe, ein System bereitzustellen, mit dem eine große Bandbreite an unterschiedlichen Soßen und Suppen unkompliziert hergestellt werden kann.

## Zusammenfassung der Erfindung

Nach einem ersten Aspekt der vorliegenden Erfindung wird die Aufgabe durch ein Mehrkomponentensystem zur Herstellung von Soßen und/oder Suppen gemäß Anspruch 1 gelöst. Das erfindungsgemäße Mehrkomponentensystem eignet sich zur Herstellung einer großen Bandbreite unterschiedlicher Soßen und Suppen. Die Grundkomponente stellt die Basis der Soße oder Suppe dar und sorgt für eine Grundstruktur und vorzugsweise einen Grundgeschmack. Mit der Feintexturkomponente wird dann die Feintextur der Soße oder Suppe bestimmt. Durch die flexible Kombination der Grundkomponente mit der Feintexturkomponente lässt sich ein breites Spektrum an geschmacklich unterschiedlichen Soßen und/oder Suppen mit verschiedenartiger Konsistenz in variabler Weise herstellen. Das Mehrkomponentensystem erlaubt eine einfache, schnelle und flexible Herstellung unterschiedlicher Soßen und Suppen.

Das erfindungsgemäße Mehrkomponentensystem stellt gewissermaßen einen Baukasten bereit, der aufbauend auf ausgewählten Grundsoßen mit potenziell hunderten von Feintexturen kombiniert werden kann. So kann hier eine Handvoll Grundsoßen, die an die klassischen Grundsoßen der Kochkunst angelehnt sind (Béchamel, Velouté, Espagnole und Hollandaise) unzählige geschmackliche Ausprägungen bei der Feintextur erfahren. Dabei können die Grundsoßen frei mit der Feintextur kombiniert werden und somit unendliche viele Geschmackskombinationen entstehen. Es sind damit letztlich tausende von Kombination möglich, aus denen der Koch/Anwender selbst wählen kann. Die Mehrkomponentenkombination stellt, damit eine Lösung bereit, die einerseits als "Convenient" Food schnell und unkompliziert anwendbar ist, die aber auch in der Kombination der Grundkomponente mit der Feintesturkomponente, aber speziell durch die Verfeinerung mit der Verfeinerungskomponente die Soßen von einer "convenient"-Soße zu einer individuellen Soße hebt und dabei immer noch einfach und schnell herstellbar bleibt.

Das Mehrkomponentensystem eignet sich nicht nur für "professionelle Anwender" / Gastronomie, sondern genauso als "Ready-to-Use" Baukasten für den Endverbraucher als Normalverbraucher (beispielsweise eine Grundkomponente plus 5 Feintexturgeschmacksrichtungen in einem Set).

Es kann damit nicht nur im Großhandel, sondern auch im Lebensmitteleinzelhandel oder Onlinehandel vertrieben werden.

## Grundkomponente

Das erfindungsgemäße Mehrkomponentensystem zur Herstellung von Soßen und/oder Suppen enthält eine Grundkomponente, die ein Bindemittel für Flüssigkeiten, wie Wasser enthält. Dieses Bindemittel wird im Folgenden auch kurz als "Flüssigkeitsbindemittel" bezeichnet. Diese Grundkomponente bindet das Wasser und gibt der Soße und/oder Suppe die grundsätzliche Konsistenz.

Das erfindungsgemäße Mehrkomponentensystem enthält eine Grundkomponente, die als Flüssigkeitsbindemittel eine pektinhaltige Pflanzenfaser gemäß Anspruch 1 aufweist. Ein solches Flüssigkeitsbindemittel eignet sich hervorragend, um der Soße oder Suppe eine Grundstruktur und Basiskonsistenz zu geben.

Das in der Grundkomponente enthaltene Flüssigkeitsbindemittel weist gemäß der Erfindung ein Wasserbindevermögen von mehr als 19 g/g, wobei hier jeweils die Menge an Wasser in Gramm angegebenen ist, die von einem Gramm Bindemittel gebunden werden können, auf. Ein solch hohes Wasserbindevermögen erlaubt allerdings nur eine grobe Einstellung der Viskosität der Soße oder Suppe, da die Viskosität und die Textur von vielen Faktoren abhängig sind, wie beispielsweise von den Feststoffanteilen der zu texturierenden Flüssigkeit.

Erfindungsgemäß enthält die Grundkomponente als Flüssigkeitsbindemittel eine Pflanzenfaser. Pflanzenfasern eignen sich sehr gut als Flüssigkeitsbindemittel, da sie ein besonders hohes Wasserbindevermögen aufweisen. Zudem haben Pflanzenfasern gegenüber den üblicherweise in Soßen oder Suppen enthaltenen Hydrokolloiden einige entscheidende Vorteile. Hydrokolloide verklumpen im Zuge des Kochvorgangs durch die Bildung von langkettigen Hydrokolloidsträngen. Dies kann zum Anbrennen an der Hitzequelle und zur Hautausbildung an der Soßen- oder Suppenoberfläche führen. Um dies zu verhindern, muss eine Soße oder Suppe, die Hydrokolloide als Flüssigkeitsbindemittel enthält, regelmäßig gerührt und vorsichtig erhitzt werden. Das regelmäßige Rühren bindet Personal und/oder erfordert teures Equipment. Das langsame und vorsichtige Erhitzen macht den Herstellungsprozess weniger effizient und kann zu längeren Wartezeiten für Gäste führen. Diese Probleme werden durch den Einsatz von Pflanzenfasern als Flüssigkeitsbindemittel gelöst. Die Pflanzenfasern bilden keine komplexen Stränge und führen nicht zu Verklumpungen. Somit kann eine erfindungsgemäße Soße oder Suppe, deren Grundkomponente als Flüssigkeitsbindemittel Pflanzenfaser enthält, schneller und in effizienterer Weise aufgekocht werden. Durch den kurzen Verbund der Pflanzenfaser trocknet die Oberfläche der damit angedickten Flüssigkeit nicht aus und verkrustet nicht wie bei Hydrokolloiden, so dass das Wasser ungehindert verdampfen kann und damit zu keiner Hautbildung kommt. Weiterhin haben Pflanzenfasern den Vorteil, dass sie zu einer besseren, d.h. unverfälschten Geschmacksfreisetzung führen. Im Gegensatz dazu führen Hydrokolloide als Bindemittel zu einer Geschmacksmaskierung. Hierbei treten vor allem die würzenden Zutaten in der Geschmackswahrnehmung stark zurück, so dass bei Hydrokolloiden als Bindemittel häufig versucht wird, diese Geschmacksmaskierung durch einen erhöhten Salzanteil zu kompensieren.

Besonders vorteilhaft ist es hierbei, wenn die als Wasserbindemittel in der Grundkomponente eingesetzte Pflanzenfaser nativ ist. Nativ heißt hierbei, dass die Pflanzenfaser nicht vorher in Wasser aufgeschert wurde. Handelt es sich bei dem in der Grundkomponente enthaltenen Wasserbindemittel um eine native Pflanzenfaser, so weist die Grundkomponente ein besonders hohes Wasserbindevermögen auf, bei dem der Quellvorgang der Fasern zudem besonders schnell und temperaturunempfindlich erfolgt.

Herkömmliche Bindesysteme können, wenn diese nicht richtig ausgekocht werden, ein Nachdicken / Nachziehen mit sich bringen. Bei Mehl beträgt die Auskochzeit ca. 30 min., bei Stärke 10 - 15 min. Dieses hat auch zu geschehen, um den arteigenen Geschmack des Bindesystems auszukochen. Die native Pflanzenfaser als Bestandteil der Grundkomponente hat nach der richtigen Quellzeit immer eine gleichbleibende Viskosität, selbst wenn das Produkt abkühlt, bleibt die Viskosität über das gesamte Temperaturspektrum stabil. Eine erneute Wasserzugabe, ein notwendiges Mixen zur Zerschlagung der Hydrokolloidketten oder das Einhalten von langen Kochzeiten und genauer Dosierung entfällt.

Das Mehrkomponentensystem ist bei Verwendung von Pflanzenfasern aufgrund der Kapillarwirkung dieser Ballaststofffasern auch kalt anwendbar. Es ist klumpenfrei einrührbar und ist somit ein fast vollwertiger Kaltbinderersatz. Hier ist im Stand der Technik gewöhnlich der Einsatz von kaltquellenden u.a. chemisch modifizierten Produkten, die speziell auf diese Eigenschaften ausgelegt sind, notwendig. Hydrokolloide, solange nicht modifiziert, benötigen für die Reaktion immer eine Wärmebehandlung. Zusätzlich ist in den traditionellen Bindesystemen ein Hartfettanteil für eine bessere Handhabung enthalten, der erst zum Schmelzen gebracht werden muss.

Die Erfindung kann somit auch bei niedrigen Temperaturen als Texturgeber (Quark, Joghurt, Fruchtpüree, Kaltschalen) eingesetzt werden und schont so die Inhaltsstoffe und den Geschmack. Darüber hinaus eignet sich die Erfindung in der neutralen Variante zur "Rettung" und geschmacksneutralen Viskositätsgebung von Pürees wie Kartoffelpüree, Selleriepüree oder reinen Gemüsepürees, denen üblicherweise Kartoffeln oder andere stärkehaltige Produkte zugesetzt werden, um eine entsprechende Konsistenz zu erzeugen.

Das Mehrkomponentensystem ist durch die Verwendung von Pflanzenfasern kalt portionierbar und gut reversibel. Warme Speisen vorzubereiten und zu portionieren, sowie dann herunterzukühlen, ist ebenfalls möglich. Hier gibt es bisher auch keine Lösung, da bisherige Bindesysteme entweder auf kalte oder warme Anwendungen ausgelegt sind. Durch die erstarrten Hydrokolloidketten in kaltem Zustand ist bisher ein behutsames Erwärmen und ständiges Rühren notwendig, um ein Anbrennen zu vermeiden. Bei der Regeneration mit Hydrokolloidsystemen entsteht häufig eine unschöne Haut und die Ränder trocknen aus.

Weiter vorteilhaft ist es, dass es sich bei der Pflanzenfaser um eine protopektinhaltige Pflanzenfaser mit einem signifikanten Anteil an wasserlöslichem Pektin handelt. Der Anteil an wasserlöslichem Pektin beträgt erfindungsgemäß weniger als 10 Gew%. Er kann damit beispielsweise, 3 Gew%, 4 Gew%, 5 Gew%, 6 Gew%, 7 Gew%, 8 Gew% oder 9 Gew% betragen. Aufgrund dieses Anteils an wasserlöslichem Pektin wird die Faser im Rahmen der Anmeldung auch als pektinhaltige Faser bezeichnet. Derartige Pflanzenfasern haben sich als besonders gut geeignet für das Binden von Wasser herausgestellt.

Erfindungsgemäß ist die Pflanzenfaser eine pektinhaltige aktivierbare Citrusfaser oder eine pektinhaltige aktivierbare Apfelfaser. Solche Pflanzenfasern können preiswert erhalten werden und weisen hervorragende Wasserbindeeigenschaften auf.

Gemäß einer bevorzugten Ausgestaltung des erfindungsgemäßen Mehrkomponentensystems weist die Grundkomponente eine Basisgeschmacksrichtung auf. Mit dieser Basisgeschmacksrichtung gibt die Grundkomponente bereits eine dezente Grundrichtung für den Geschmack der Soße oder Suppe vor, der sich allerdings noch variabel durch die anderen Bestandteile der Soße oder Suppe modifizieren lässt.

Eine Basisgeschmacksrichtung der Grundkomponente lässt sich dadurch erzielen, dass die Grundkomponente neben dem Flüssigkeitsbindemittel eine Geschmackskomponente ausgewählt aus der Gruppe bestehend aus Gemüsepulver, beispielsweise Selleriepulver, Karottenpulver, Zwiebelpulver, Lauchpulver, Knoblauchpulver, Tomatenpulver, Rote-Beete-Pulver und Mischungen davon, Milchpulver, Sahnepulver und Mischungen davon enthält. Besonders vorzugsweise orientiert sich die Basisgeschmacksrichtung an den klassischen Grundsoßen, die dem Fachmann bereits aus der französischen Küche bekannt sind. Mögliche Basisgeschmacksrichtungen können hierbei als helle Grundsoße, dunkle Grundsoße und Tomatensoße beschrieben werden. Eine Grundkomponente mit der Basisgeschmacksrichtung "dunkle Grundsoße" enthält vorzugsweise Gemüsepulver. Eine Grundkomponente mit der Basisgeschmacksrichtung "helle Grundsoße" enthält vorzugsweise Gemüsepulver, Milchpulver und Sahnepulver. Eine Grundkomponente mit der Basisgeschmacksrichtung "Tomatensoße" enthält vorzugsweise Tomatenpulver.

Gemäß einer weiteren bevorzugten Ausgestaltungsform der Erfindung enthält die Grundkomponente zudem Inhaltsstoffe aus der Gruppe bestehend aus Gewürze, Salz, natürliche Aromastoffe und Mischungen davon. Mit diesen weiteren Inhaltsstoffen lässt sich die Grundkomponente geschmacklich optimal abrunden.

Die unterschiedlichen Bestandteile können in breit variierenden Anteilen in der Grundkomponente a. vorliegen. Damit die Soße oder Suppe eine gute Konsistenz und Viskosität aufweist, hat es sich als vorteilhaft erwiesen, wenn die Grundkomponente von 1 bis 99 Gew%, vorzugsweise von 2 bis 80 Gew%, bevorzugt von 5 bis 60 Gew%, weiter bevorzugt von 10 bis 45 Gew% und besonders bevorzugt von 15 bis 40 Gew%, jeweils bezogen auf das Gesamtgewicht der trockenen Grundkomponente a., Wasserbindemittel enthält.

Gemäß einer weiteren vorzugsweisen Ausgestaltung der Erfindung enthält die Grundkomponente a. 10 bis 90 Gew%, vorzugsweise 15 bis 85 Gew%, bevorzugt 20 bis 80 Gew% oder besonders bevorzugt 25 bis 75 Gew% Geschmackskomponente, jeweils bezogen auf das Gesamtgewicht der trockenen Grundkomponente a. Dieser Anteil an Geschmackskomponente in der Grundkomponente a. eignet sich hervorragend zum Einstellen der Basisgeschmacksrichtung.

Zudem ist es aus gesundheitlichen Gründen vorteilhaft, wenn der Salzgehalt der Grundkomponente a. geringgehalten wird. Vorzugsweise enthält die Grundkomponente a. zwischen 5 Gew% und 10 Gew% Salz, jeweils bezogen auf das Gesamtgewicht der trockenen Grundkomponente a. Durch die Tatsache, dass für die Herstellung der Sauce oder der Suppe nur eine Menge an 45 bis 75 g Grundkomponente pro Liter Suppe bzw. Sauce verwendet werden muss, ergeben sich damit finale Salzgehalte von weniger als 5 g Salz/Liter. Herkömmliche Saucenpulver enthalten auch 5 bis 10 Gew%, führen aber aufgrund des höheren Grundeintrags an Saucenpulver von mehr als 100 g/Liter zu Salzgehalten von über 10 g oder sogar über 15 g Salz/Liter Sauce. Die vorliegende Erfindung macht es möglich, dass bis zu 66 % weniger Salz (= 5,0 g anstelle bis zu 15,0 g Salz / l) als in handelsüblichen Produkte eingesetzt werden kann bei gleichem Salzempfinden für den Gast.

In einer bevorzugten Ausgestaltung der Erfindung ist die Grundkomponente a. ein Feststoff, insbesondere ein Pulver. Auf diese Weise lässt sich die Grundkomponente a. besonders gut dosieren.

Weiter ist die Grundkomponente a. vorzugsweise im Wesentlichen frei von Wasser, sodass das Quellverhalten des Flüssigkeitsbindemittels besonders wirksam ist. Hierbei bedeutet "im Wesentlichen frei von Wasser", dass der Wassergehalt weniger als 5 Gew%, vorteilhafterweise weniger als 1 Gew%, insbesondere weniger als 0,5 Gew%, vorzugsweise weniger als 0,3 Gew%, bevorzugt weniger als 0,2 Gew%, besonders bevorzugt weniger als 0,1 Gew% und besonders bevorzugt weniger als 0,05 Gew%, jeweils bezogen auf das Gesamtgewicht der Grundkomponente a., der Grundkomponente a. ausmacht.

## Die aktivierbare pektinhaltige Citrusfaser

In einer erfindungsgemäßen Ausführungsform wird für die Grundkomponente a. als Flüssigkeitsbindemittel eine aktivierbare pektinhaltige Citrusfaser eingesetzt. Durch den sauren Aufschluss als Prozessschritt im Herstellungsverfahren kann die Faserstruktur aufgeschlossen werden und durch anschließende alkoholische Waschschritte mit schonendem Trocknen diese Struktur entsprechend aufrechterhalten werden.

Aufgrund des sauren Extraktionsschrittes ist der Pektingehalt der Citrusfaser stark reduziert worden, so dass die aktivierbare pektinhaltige Citrusfaser erfindungsgemäß weniger als 10 Gew%, bevorzugt weniger als 8 Gew% und besonders bevorzugt weniger als 6 Gew% an wasserlöslichem Pektin aufweist. So kann der Gehalt an wasserlöslichem Pektin in dieser Citrusfaser beispielsweise 2 Gew%, 3 Gew%, 4 Gew%, 5 Gew%, 6 Gew%, 7 Gew%, 8 Gew% oder 9 Gew% betragen. Bei diesem residualen Pektin handelt es sich um hochverestertes Pektin. Unter einem hochveresterten Pektin wird erfindungsgemäß ein Pektin verstanden, das einen Veresterungsgrad von mindestens 50% besitzt. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JECFA (Monograph 19-2016, Joint FAO/WHO Expert Committee on Food Additives) bestimmt werden.

Die aktivierbare pektinhaltige Citrusfaser hat nach einer vorteilhaften Ausführungsform in einer wässrigen 4 Gew%igen Suspension eine Festigkeit von zwischen 60 g und 240 g, bevorzugt von zwischen 120 g und 200 g und besonders bevorzugt von zwischen 140 und 180 g.

Die aktivierbare pektinhaltige Citrusfaser hat vorteilhafterweise ein Wasserbindevermögen von mehr als 20 g/g, bevorzugt von mehr als 22 g/g, besonders bevorzugt von mehr als 24 g/g, und insbesondere bevorzugt von zwischen 24 und 26 g/g. Ein solch vorteilhaft hohes Wasserbindevermögen führt zu einer hohen Viskosität und über diese dann auch zu einem geringeren Faserverbrauch bei cremiger Textur.

In einer Ausführungsform weist die aktivierbare pektinhaltige Citrusfaser in einer 2,5 Gew%igen Suspension eine Fließgrenze II (Rotation) von 0,1 - 1,0 Pa, vorteilhafterweise von 0,3 - 0,9 Pa, und besonders vorteilhafterweise von 0,6 - 0,8 Pa auf. Erfindungsgemäß hat die aktivierbare pektinhaltige Citrusfaser bei einer Faserdispersion entsprechend eine Fließgrenze I (Rotation) von 1,0 - 4,0 Pa, vorteilhafterweise von 1,5 - 3,5 Pa und besonders vorteilhafterweise von 2,0 - 3,0 Pa.

Gemäß einer weiteren Ausführungsform hat die aktivierbare pektinhaltige Citrusfaser in einer 2,5 Gew%igen Suspension eine Fließgrenze II (Cross Over) von 0,1 - 1,0 Pa, vorteilhafterweise von 0,3 - 0,9 Pa und besonders vorteilhafterweise von 0,6 - 0,8 Pa. Bei einer Faserdispersion hat die aktivierbare pektinhaltige Citrusfaser eine Fließgrenze I (Cross Over) von 1,0 - 4,5 Pa, vorteilhafterweise von 1,5 - 4,0 Pa und besonders vorteilhafterweise von 2,0 - 3,5 Pa.

In einer Ausführungsform hat die aktivierbare pektinhaltige Citrusfaser eine dynamische Weissenbergzahl in einer 2,5 Gew%igen Fasersuspension von 4,5 - 8,0, vorteilhafterweise von 5,0 - 7,5 und besonders vorteilhaft von 7,0 - 7,5. Nach Scheraktivierung hat die aktivierbare pektinhaltige Citrusfaser in einer 2,5 Gew%igen Faserdispersion entsprechend eine dynamische Weissenbergzahl von 5,0 - 9,0, vorteilhafterweise von 6,0 - 8,5 und besonders vorteilhaft von 7,0 - 8,0.

Für die aktivierbare pektinhaltige Citrusfaser können die Merkmale der letzten drei vorangegangenen Absätze gegebenenfalls auch in beliebiger Permutation kombiniert werden.

So kann die erfindungsgemäße pektinhaltige Citrusfaser in einer speziellen Ausführungsform alle Merkmale der der letzten drei vorangegangenen Absätze aufweisen, wobei diese pektinhaltige Citrusfaser vorzugsweise durch das nachfolgend beschriebene Herstellungsverfahren erhältlich ist oder dadurch erhalten wird.

Zur Bestimmung der Fließgrenze I (Rotation), Fließgrenze I (Cross Over), und der dynamischen Weißenbergzahl in einer 2,5 Gew%igen Dispersion wird die aktivierbare pektinhaltige Citrusfaser entsprechend der in den Beispielen offenbarten Methode als 2,5 Gew%ige Lösung dispergiert, die Messung erfolgt nach 1 h bei 20°C.

Zur Bestimmung der Fließgrenze II (Rotation), der Fließgrenze II (Cross Over) und der dynamischen Weißenbergzahl in einer 2,5 Gew%igen Suspension wird die aktivierbare pektinhaltige Citrusfaser entsprechend der in den Beispielen offenbarten Methode als 2,5 Gew%ige Lösung suspendiert, die Messung erfolgt nach 1 h bei 20°C.

Vorzugsweise weist die aktivierbare pektinhaltige Citrusfaser eine Viskosität von zwischen 150 bis 600 mPas, bevorzugt von 200 bis 550 mPas, und besonders bevorzugt von 250 bis 500 mPas auf, wobei die aktivierbare pektinhaltige Citrusfaser in Wasser als 2,5 Gew%ige Lösung dispergiert wird und die Viskosität mit einer Scherrate von 50 s$^{-1}$ bei 20°C gemessen wird.

Zur Viskositätsbestimmung wird die aktivierbare pektinhaltige Citrusfaser in demineralisiertem Wasser mit der in den Beispielen offenbarten Methode als 2,5 Gew%ige Lösung dispergiert und die Viskosität bei 20°C und vier Scherabschnitten (erster und dritter Abschnitt = konstantes Profil; zweiter und vierter Abschnitt = lineare Rampe; Auswertung) jeweils bei einer Schergeschwindigkeit von 50 s$^{-1}$) bestimmt (Rheometer; Physica MCR Serie, Messkörper CC25 (entspricht Z3 DIN), Fa. Anton Paar, Graz, Österreich). Eine pektinhaltige Citrusfaser mit dieser hohen Viskosität hat den Vorteil, dass für das Andicken des Endprodukts geringere Mengen an Fasern notwendig sind. Zudem erzeugt die Faser damit eine cremige Textur.

Gemäß einer Ausführungsform weist die aktivierbare pektinhaltige Citrusfaser eine Feuchtigkeit von weniger als 15 Gew%, bevorzugt von weniger als 10 Gew% und besonders bevorzugt von weniger als 8 Gew% auf.

Es ist auch bevorzugt, dass die aktivierbare pektinhaltige Citrusfaser in 1,0 Gew%iger wässriger Suspension einen pH-Wert von 3,1 bis 4,75 und bevorzugt von 3,4 bis 4,2 aufweist.

Die aktivierbare pektinhaltige Citrusfaser hat vorteilhaftweise eine Korngröße, bei der mindestens 90 Gew% der Partikel kleiner als 450 μm, bevorzugt kleiner als 350 μm und insbesondere kleiner als 250 μm sind.

Gemäß einer vorteilhaften Ausführungsform hat die aktivierbare pektinhaltige Citrusfaser einen Helligkeitswert L* > 84, bevorzugt von L* > 86 und besonders bevorzugt von L* > 88. Damit sind die Citrusfasern nahezu farblos und führen bei einem Einsatz in Lebensmittelprodukten nicht zu einer nennenswerten Verfärbung der Produkte.

In vorteilhafter Weise hat die aktivierbare pektinhaltige Citrusfaser einen Ballaststoffgehalt von 80 bis 95 Gew%.

Die erfindungsgemäß verwendete, aktivierbare pektinhaltige Citrusfaser liegt vorzugsweise in Pulverform vor. Dies hat den Vorteil, dass hiermit eine Formulierung mit geringem Gewicht und hoher Lagerstabilität vorliegt, die auch prozesstechnisch in einfacher Weise eingesetzt werden kann. Diese Formulierung wird erst durch die erfindungsgemäß verwendete, aktivierbare pektinhaltige Citrusfaser ermöglicht, die im Gegensatz zu modifizierten Stärken beim Einrühren in Flüssigkeiten nicht zur Klumpenbildung neigt.

**Herstellung der aktivierbaren pektinhaltigen Citrusfaser**

Die aktivierbare pektinhaltige Citrusfaser ist durch ein Verfahren erhältlich, das die folgenden Schritte umfasst:

(a) Bereitstellen eines Rohmaterials, das Zellwandmaterial einer essbaren Citrusfrucht enthält;

(b) Aufschluss des Rohmaterials durch Inkubation einer wässrigen Suspension des Rohmaterials bei einem sauren pH-Wert;

(c) Ein- oder mehrstufige Trennung des aufgeschlossenen Materials aus Schritt (b) von der wässrigen Suspension;

(d) Waschen des in Schritt (c) abgetrennten Materials mit einer wässrigen Lösung und Abtrennung grober oder nicht aufgeschlossener Partikel;

(e) Trennung des gewaschenen Materials aus Schritt (d) von der wässrigen Lösung;

(f) Mindestens zweimaliges Waschen des abgetrennten Materials aus Schritt (e) mit einem organischen Lösungsmittel und jeweils anschließender Trennung des gewaschenen Materials von dem organischen Lösungsmittel;

(g) Optionale zusätzliche Entfernung des organischen Lösungsmittels durch Inkontaktbringen des gewaschenen Materials aus Schritt (f) mit Wasserdampf;

(h) Trocknen des Materials aus Schritt (f) oder (g) umfassend eine Trocknung bei Normaldruck zum Erhalten der aktivierbaren pektinhaltigen Citrusfaser.

Das Herstellungsverfahren führt zu Citrusfasern mit einer großen inneren Oberfläche, was auch das Wasserbindungsvermögen erhöht und mit einer guten Viskositätsbildung einhergeht.

Diese Fasern stellen aktivierbare Fasern dar, die durch die Partialaktivierung im Herstellungsverfahren eine zufriedenstellende Festigkeit aufweisen. Zum Erhalten der optimalen rheologischen Eigenschaften wie Viskosität oder Texturierung bedarf es allerdings anwenderseitig der Anwendung von zusätzlichen Scherkräfte. Es handelt sich damit auch um partiell-aktivierte Fasern, die aber noch weiter aktivierbar sind.

Wie die Erfinder festgestellt haben, weisen die mit dem beschriebenen Verfahren hergestellten Citrusfasern gute rheologische Eigenschaften auf. Die erfindungsgemäßen Fasern können einfach rehydratisiert werden und die vorteilhaften rheologischen Eigenschaften bleiben auch nach der Rehydratisierung erhalten.

Das Herstellungsverfahren führt zu Citrusfasern, die in hohem Maße geschmacks- und geruchsneutral sind und daher vorteilhaft für die Anwendung im Lebensmittelbereich sind. Das Eigenaroma der übrigen Zutaten wird nicht maskiert und kann sich daher optimal entfalten.

Als Rohmaterial können Citrusfrüchte und bevorzugt Verarbeitungsrückstände von Citrusfrüchten eingesetzt werden. Als Rohmaterial zum Einsatz in dem hier beschriebenen Verfahren kann entsprechend Citrusschale, (und hier Albedo und/oder Flavedo), Citrusvesikel, Segmentmembranen oder eine Kombination hieraus verwendet werden. In bevorzugter Weise wird als Rohmaterial Citrustrester verwendet, also die Pressrückstände von Citrusfrüchten, die neben den Schalen typischerweise auch das Fruchtfleisch enthalten.

Als Citrusfrüchte können hierbei alle dem Fachmann bekannten Citrusfrüchte verwendet werden. In nicht einschränkender Weise seien hier beispielhaft aufgeführt: Mandarine *(Citrus reticulata)*, Clementine (*Citrus x aurantium* Clementine-Gruppe, Syn.: *Citrus clementina*), Satsuma (*Citrus xaurantium* Satsuma-Gruppe, Syn.: *Citrus unshiu*), Mangshan *(Citrus mangshanensis)*, Orange (*Citrus xaurantium* Orangen-Gruppe, Syn.: *Citrus sinensis*), Bitterorange (*Citrus xaurantium* Bitterorangen-Gruppe), Bergamotte (*Citrus xlimon* Bergamotte-Gruppe, Syn.: *Citrus bergamia*), Pampelmuse (*Citrus maxima*), Grapefruit *(Citrus xaurantium* Grapefruit-Gruppe, Syn.: *Citrus paradisi)* Pomelo (*Citrus xaurantium* Pomelo-Gruppe), echte Limette (*Citrus xaurantiifolia*), gewöhnliche Limette (*Citrus xaurantiifolia*, Syn.: *Citrus latifolia*), Kaffernlimette (*Citrus hystrix*), Rangpur-Limette (*Citrus xjambhiri*), Zitrone (*Citrus xlimon* Zitronen-Gruppe), Zitronatzitrone (*Citrus medica*) und Kumquats *(Citrus japonica,* Syn.: *Fortunella).* Bevorzugt sind hierbei die Orange (*Citrus \*aurantium* Orangen-Gruppe, Syn.: *Citrus sinensis*) und die Zitrone (*Citrus ˣlimon* Zitronen-Gruppe).

Der saure Aufschluss im Schritt (b) des Verfahrens dient der Entfernung von Pektin durch Überführung des Protopektins in lösliches Pektin und gleichzeitiger Aktivierung der Faser durch Vergrößerung der inneren Oberfläche. Weiterhin wird das Rohmaterial durch den Aufschluss thermisch zerkleinert. Durch die saure Inkubation im wässrigen Milieu unter Einwirkung von Hitze zerfällt es in Citrusfasern. Damit wird eine thermische Zerkleinerung erreicht, ein mechanischer Zerkleinerungsschritt ist im Rahmen des Herstellungsverfahrens damit nicht notwendig. Dies stellt einen entscheidenden Vorteil gegenüber herkömmlichen Faser-Herstellungsverfahren dar, die im Gegensatz dazu einen Scherungsschritt (wie beispielsweise durch eine (Hoch-)Druckhomogenisierung) benötigen, um eine Faser mit ausreichenden rheologischen Eigenschaften zu erhalten.

Durch den sauren Aufschluss als Prozessschritt (b) im Herstellungsverfahren kann die Faserstruktur aufgeschlossen werden und durch anschließende alkoholische Waschschritte mit schonendem Trocknen diese Struktur entsprechend aufrechterhalten werden.

Aufgrund des sauren Extraktionsschritts weist die aktivierbare, pektinhaltige Citrusfaser weniger als 10 Gew%, bevorzugt weniger als 8 Gew% und besonders bevorzugt weniger als 6 Gew% an wasserlöslichem Pektin auf. Die aktivierbare, pektinhaltige Citrusfaser weist vorteilhafterweise einen wasserlöslichen Pektingehalt von zwischen 2 Gew% und 8 Gew% und besonders bevorzugt von zwischen 2 und 6 Gew% auf. Der Gehalt an wasserlöslichem Pektin in dieser Citrusfaser kann beispielsweise 2 Gew%, 3 Gew%, 4 Gew%, 5 Gew%, 6 Gew%, 7 Gew%, 8 Gew%, 9 Gew% oder 9,5 Gew% betragen.

Das Rohmaterial liegt bei dem Aufschluss im Schritt (b) als wässrige Suspension vor. Eine Suspension ist gemäß der Erfindung ein heterogenes Stoffgemisch aus einer Flüssigkeit und darin fein verteilten Festkörpern (Rohmaterial-Partikel). Da die Suspension zur Sedimentation und Phasentrennung tendiert, werden die Partikel geeignetermaßen durch Schütteln oder Rühren in der Schwebe gehalten. Es liegt somit keine Dispersion vor, bei der die Partikel durch mechanische Einwirkung (Scherung) so zerkleinert werden, dass sie feindispers vorliegen.

Zur Erzielung eines sauren pH-Wertes im Schritt (b) kann der Fachmann auf alle ihm bekannten Säuren oder sauren Pufferlösungen zurückgreifen. So kann beispielsweise eine organische Säure wie Citronensäure eingesetzt werden.

Alternativ oder in Kombination hierzu kann auch eine Mineralsäure eingesetzt werden. Beispielhaft seien erwähnt: Schwefelsäure, Salzsäure, Salpetersäure oder schweflige Säure. Bevorzugt wird Salpetersäure eingesetzt.

Bei dem sauren Aufschluss im Schritt (b) des Verfahrens liegt der pH-Wert der Suspension zwischen pH = 0,5 und pH = 4,0, bevorzugt zwischen pH = 1,0 und pH = 3,5 und besonders bevorzugt zwischen pH = 1,5 und pH = 3,0.

Erfindungsgemäß besteht die Flüssigkeit zur Herstellung der wässrigen Suspension zu mehr als 50 Vol%, bevorzugt zu mehr als 60, 70, 80 oder sogar 90 Vol% aus Wasser. In einer bevorzugten Ausführungsform enthält die Flüssigkeit kein organisches Lösungsmittel und insbesondere keinen Alkohol. Damit liegt eine wasserbasierte saure Extraktion vor.

In einer Ausführungsform erfolgt bei dem Herstellungsverfahren und insbesondere bei dem sauren Aufschluss im Schritt (b) keine enzymatische Behandlung des Rohmaterials durch Zugabe eines Enzyms, insbesondere keine Amylase-Behandlung.

Die Inkubation erfolgt bei dem sauren Aufschluss im Schritt (b) bei einer Temperatur zwischen 60°C und 95°C, bevorzugt zwischen 70°C und 90°C und besonders bevorzugt zwischen 75°C und 85°C.

Die Inkubation im Schritt (b) erfolgt über eine Zeitdauer zwischen 60 min und 8 Stunden und bevorzugt zwischen 2 h und 6 Stunden.

Die wässrige Suspension hat bei dem sauren Aufschluss im Schritt (b) geeignetermaßen eine Trockenmasse von zwischen 0,5 Gew% und 5 Gew%, bevorzugt von zwischen 1 Gew% und 4 Gew%, und besonders bevorzugt von zwischen 1,5 Gew% und 3 Gew%.

Die wässrige Suspension wird während des Aufschlusses im Schritt (b) gerührt oder geschüttelt. Dies erfolgt bevorzugt in kontinuierlicher Weise, damit die Partikel in der Suspension in der Schwebe gehalten werden.

Im Schritt (c) des Verfahrens wird das aufgeschlossene Material von der wässrigen Lösung getrennt und damit zurückgewonnen. Diese Trennung erfolgt als einstufige oder mehrstufige Trennung.

In vorteilhafter Weise wird das aufgeschlossene Material im Schritt (c) einer mehrstufigen Trennung unterzogen. Hierbei ist es bevorzugt, wenn bei der Trennung von der wässrigen Suspension stufenweise die Abtrennung von immer feineren Partikeln erfolgt. Dies bedeutet, dass beispielsweise bei einer zweistufigen Trennung beide Stufen eine Abtrennung von größeren Partikel leisten, wobei bei der zweiten Stufe im Vergleich zur ersten Stufe feinere Partikel abgetrennt werden, um eine möglichst vollständige Abtrennung der Partikel aus der wässrigen Suspension zu erzielen. Bevorzugt erfolgt die erste Abtrennung von Partikeln mit Dekantern und die zweite Abtrennung mit Separatoren. Damit wird das Material mit jedem Trennungsschritt immer feinpartikulärer.

Nach dem sauren Aufschluss im Schritt (b) und der Abtrennung des aufgeschlossenen Materials im Schritt (c), wird das abgetrennte Material mit einer wässrigen Lösung im Schritt (d) gewaschen. Durch diesen Schritt können verbliebene wasserlösliche Stoffe, wie beispielsweise Zucker entfernt werden. Gerade die Entfernung von Zucker mit Hilfe dieses Schrittes trägt dazu bei, dass die Citrusfaser weniger adhäsiv ist und damit besser zu prozessieren und anzuwenden ist.

Im Rahmen der Erfindung wird unter der "wässrigen Lösung" die für das Waschen im Schritt (d) eingesetzte wässrige Flüssigkeit verstanden. Das Gemisch aus dieser wässrigen Lösung und dem aufgeschlossenen Material wird als "Waschmixtur" bezeichnet.

Vorteilhafterweise wird das Waschen gemäß Schritt (d) mit Wasser als wässriger Lösung durchgeführt. Besonders vorteilhaft ist hier der Einsatz von deionisiertem Wasser.

In einer Ausführungsform besteht die wässrige Lösung zu mehr als 50 Vol%, bevorzugt zu mehr als 60, 70, 80 oder sogar 90 Vol% aus Wasser. In einer bevorzugten Ausführungsform enthält die wässrige Lösung kein organisches Lösungsmittel und insbesondere keinen Alkohol. Damit liegt eine wasserbasierte Waschung vor und gerade kein Wasser-Alkohol-Austausch wie es bei der Faserwaschung mit einem Gemisch aus Alkohol und Wasser ist, wobei dieses Gemisch mehr als 50 Vol% Alkohol aufweist und typischerweise einen Alkoholgehalt von mehr als 70 Vol% besitzt.

Alternativ kann als wässrige Lösung auch eine Salzlösung mit einer Ionenstärke von I < 0.2 mol / l eingesetzt werden.

Das Waschen gemäß Schritt (d) erfolgt vorteilhafterweise bei einer Temperatur zwischen 30°C und 90°C, bevorzugt zwischen 40°C und 80°C und besonders bevorzugt zwischen 50°C und 70°C.

Die Zeitdauer des Inkontaktbringens mit der wässrigen Lösung im Schritt (d) erfolgt über eine Zeitdauer von zwischen 10 min und 2 Stunden, bevorzugt von zwischen 30 min und einer Stunde.

Bei dem Waschen gemäß Schritt (d) beträgt die Trockenmasse in der Waschmixtur zwischen 0,1 Gew% und 5 Gew%, bevorzugt zwischen 0,5 Gew% und 3 Gew% und besonders bevorzugt von zwischen 1 Gew% und 2 Gew%.

Vorteilhafter wird das Waschen gemäß Schritt (d) unter mechanischer Bewegung der Waschmixtur durchgeführt. Dies erfolgt zweckmäßiger mittels Rühren oder Schütteln der Waschmixtur.

Beim Waschen gemäß Schritt (d) erfolgt eine Abtrennung grober oder nicht aufgeschlossener Partikel. Diese Partikel-Abtrennung erfolgt im Rahmen der Trennung des gewaschenen Materials von der Waschflüssigkeit. Besonders vorteilhaft ist hier eine Abtrennung von Partikeln mit einer Korngröße von mehr als 500 $\mu$m bevorzugter von mehr als 400 $\mu$m und am bevorzugtesten von mehr als 350 $\mu$m. Die Abtrennung erfolgt vorteilhafterweise mit einer Passiermaschine oder einer Bandpresse. Dadurch werden sowohl grobpartikuläre Verunreinigungen des Rohmaterials als auch unzureichend aufgeschlossenes Material entfernt.

Nach dem Waschen im Schritt (d) mit der wässrigen Lösung wird gemäß Schritt (e) das gewaschene Material von der wässrigen Lösung abgetrennt. Diese Abtrennung erfolgt vorteilhafterweise mit einem Dekanter oder einem Separator.

Im Schritt (f) erfolgt dann ein weiterer Waschschritt, der allerdings mit einem organischen Lösungsmittel erfolgt. Hierbei handelt es sich um ein mindestens zweimaliges Waschen mit einem organischen Lösungsmittel.

Das organische Lösungsmittel kann auch als Gemisch aus dem organischen Lösungsmittel und Wasser eingesetzt werden, wobei dieses Gemisch dann mehr als 50 Vol% an organischem Lösungsmittel aufweist und vorzugsweise mehr als 70 Vol% an organischem Lösungsmittel aufweist.

Das organische Lösungsmittel im Schritt (f) ist vorteilhafterweise ein Alkohol, der ausgewählt sein kann aus der Gruppe bestehend aus Methanol, Ethanol und Isopropanol.

Der Waschschritt gemäß Schritt (f) erfolgt bei einer Temperatur zwischen 40°C und 75°C, bevorzugt zwischen 50°C und 70°C und besonders bevorzugt 60°C und 65°C.

Die Zeitdauer des Inkontaktbringens mit dem organischen Lösungsmittel im Schritt (f) erfolgt über eine Zeitdauer von zwischen 60 min und 10 h und bevorzugt zwischen 2 h und 8 h.

Jeder Waschschritt mit dem organischen Lösungsmittel umfasst ein Inkontaktbringen des Materials mit dem organischen Lösungsmittel für eine bestimmte Zeitdauer gefolgt von der Abtrennung des Materials von dem organischen Lösungsmittel. Für diese Abtrennung wird bevorzugt ein Dekanter oder eine Presse verwendet.

Bei dem Waschen mit dem organischen Lösungsmittel im Schritt (f) beträgt die Trockenmasse in der Waschlösung von zwischen 0,5 Gew% und 15 Gew%, bevorzugt zwischen 1,0 Gew% und 10 Gew%, und besonders bevorzugt zwischen 1,5 Gew% und 5,0 Gew%.

Das Waschen mit dem organischen Lösungsmittel im Schritt (f) wird bevorzugt unter mechanischer Bewegung der Waschmixtur durchgeführt. Bevorzugt wird das Waschen in einem Behälter mit Rührwerk durchgeführt.

Bei dem Waschen mit dem organischen Lösungsmittel im Schritt (f) wird in vorteilhafter Weise eine Vorrichtung zur Vergleichmäßigung der Suspension verwendet. Diese Vorrichtung ist bevorzugt ein Zahnkranzdispergierer.

Nach einer vorteilhaften Ausführungsform erfolgt das Waschen mit dem organischen Lösungsmittel im Schritt (f) im Gegenstromverfahren.

In einer Ausführungsform erfolgt bei dem Waschen mit dem organischen Lösungsmittel im Schritt (f) eine partielle Neutralisation durch Zugabe von Na- oder K-Salzen, NaOH oder KOH.

Bei dem Waschen mit dem organischen Lösungsmittel im Schritt (f) kann zusätzlich auch eine Entfärbung des Materials durchgeführt werden. Diese Entfärbung kann durch Zugabe eines oder mehrerer Oxidationsmittel erfolgen. Beispielhaft seien hier die Oxidationsmittel Chlordioxid und Wasserstoffperoxid erwähnt, die alleine oder in Kombination angewendet werden können.

Nach einer vorteilhaften Ausführungsform nimmt bei dem mindestens zweimaligen Waschen mit einem organischen Lösungsmittel die finale Konzentration des organischen Lösungsmittels in der Lösung mit jedem Waschschritt zu. Durch diesen inkrementell steigenden Anteil an organischem Lösungsmittel wird der Wasseranteil in dem Fasermaterial kontrolliert verringert, so dass die rheologischen Eigenschaften der Fasern bei den nachfolgenden Schritten zur Lösungsmittelentziehung und Trocknung erhalten bleiben und kein Kollabieren der partiell-aktivierten Faserstruktur erfolgt.

Vorzugsweise beträgt die finale Konzentration des organischen Lösungsmittels im ersten Waschschritt zwischen 60 bis 70 Vol.-%, im zweiten Waschschritt zwischen 70 und 85 Vol.-% und in einem optionalen dritten Waschschritt zwischen 80 und 90 Vol.-%.

Gemäß dem optionalen Schritt (g) kann das Lösungsmittel zusätzlich durch Inkontaktbringen des Materials mit Wasserdampf verringert werden. Dies wird vorzugsweise mit einem Stripper durchgeführt, bei dem das Material im Gegenstrom mit Wasserdampf als Strippgas in Kontakt gebracht wird.

Nach einer vorteilhaften Ausführungsform wird das Material vor dem Trocknen gemäß Schritt (h) mit Wasser befeuchtet. Dies geschieht bevorzugt durch Einbringen des Materials in eine Befeuchtungsschnecke und Besprühen mit Wasser.

Im Schritt (h) erfolgt das Trocknen des gewaschenen Materials aus Schritt (f) oder des gestrippten Materials aus Schritt (g), wobei das Trocknen eine Trocknung unter Normaldruck umfasst. Beispiele für geeignete Trocknungsverfahren sind Wirbelschichttrocknung, Fließbetttrocknung, Bandtrockner, Trommeltrockner oder Schaufeltrockner. Besonders bevorzugt ist hier die Fließbetttrocknung. Diese hat den Vorteil, dass das Produkt aufgelockert getrocknet wird, was den anschließenden Vermahlschritt vereinfacht. Zudem vermeidet die Trocknungsart durch den gut dosierbaren Wärmeeintrag eine Schädigung des Produktes durch lokale Überhitzung.

Die Trocknung unter Normaldruck im Schritt (h) erfolgt zweckmäßigerweise bei einer Temperatur von zwischen 50°C und 130°C, bevorzugt von zwischen 60°C und 120°C und besonders bevorzugt von zwischen 70°C und 110°C. Im Anschluss an die Trocknung wird das Produkt zweckmäßigerweise auf Raumtemperatur abgekühlt.

Gemäß einer vorteilhaften Ausführungsform umfasst das Verfahren nach dem Trocknen in Schritt (h) zusätzlich einen Zerkleinerungs-, Vermahlungs- oder Siebschritt. Dieser ist vorteilhafterweise so ausgestaltet, dass als Ergebnis 90 Gew% der Partikel eine Korngröße von weniger 450 $\mu$m, bevorzugt eine Korngröße von weniger als 350 $\mu$m und insbesondere eine Korngröße von weniger als 250 $\mu$m aufweisen. Bei dieser Korngröße ist die Faser gut dispergierbar und zeigt ein optimales Quellvermögen.

Die für die erfindungsgemäße Verwendung eingesetzte, aktivierbare pektinhaltige Citrusfaser und ein Verfahren zu ihrer Herstellung werden in der Anmeldung DE 10 2020 122 510.5 offenbart.

**Die aktivierbare pektinhaltige Apfelfaser**

In einer alternativen erfindungsgemäßen Ausführungsform wird für die Grundkomponente a. als Flüssigkeitsbindemittel eine aktivierbare pektinhaltige Apfelfaser eingesetzt. Durch den sauren Aufschluss als Prozessschritt im Herstellungsverfahren kann die Faserstruktur aufgeschlossen werden und durch anschließende alkoholische Waschschritte mit schonendem Trocknen diese Struktur entsprechend aufrechterhalten werden.

Aufgrund des sauren Extraktionsschrittes ist der Pektingehalt der Apfelfaser stark reduziert worden, so dass die aktivierbare pektinhaltige Apfelfaser weniger als 10 Gew%, bevorzugt weniger als 8 Gew% und besonders bevorzugt weniger als 6 Gew% an wasserlöslichem Pektin aufweist. Der Gehalt an wasserlöslichem Pektin in der aktivierbaren pektinhaltigen Apfelfaser kann beispielsweise 2 Gew%, 3 Gew%, 4 Gew%, 5 Gew%, 6 Gew%, 7 Gew%, 8 Gew% oder 9 Gew% betragen.

Bei diesem residualen wasserlöslichen Pektin handelt es sich um hochverestertes Pektin. Unter einem hochveresterten Pektin wird erfindungsgemäß ein Pektin verstanden, das einen Veresterungsgrad von mindestens 50% besitzt. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JECFA (Monograph 19-2016, Joint FAO/WHO Expert Committee on Food Additives) bestimmt werden.

Die aktivierbare pektinhaltige Apfelfaser hat nach einer vorteilhaften Ausführungsform eine Festigkeit von zwischen 5 g und 100 g, bevorzugt von zwischen 20 g und 60 g und besonders bevorzugt von zwischen 30 und 50 g, wobei die aktivierbare pektinhaltige Apfelfaser als wässrige Suspension mit einer Faserkonzentration von 6 Gew% vermessen wird.

Die aktivierbare pektinhaltige Apfelfaser hat vorteilhafterweise ein Wasserbindevermögen von mehr als 19 g/g, bevorzugt von mehr als 21 g/g, besonders bevorzugt von mehr als 23 g/g. Ein solch vorteilhaft hohes Wasserbindevermögen führt zu einer hohen Viskosität und über diese dann auch zu einem geringeren Faserverbrauch bei cremiger Textur.

In einer Ausführungsform weist die aktivierbare pektinhaltige Apfelfaser in einer 2,5 Gew%igen Suspension eine Fließgrenze II (Rotation) von 0,1 bis 1,0 Pa, vorteilhafterweise von 0,15 bis 0,75 Pa, und besonders vorteilhafterweise von 0,25 bis 0,5 Pa. Erfindungsgemäß hat die aktivierbare pektinhaltige Apfelfaser bei einer 2,5 Gew%igen Dispersion entsprechend eine Fließgrenze I (Rotation) von 0,75 bis 3,75 Pa, vorteilhafterweise von 1,0 bis 3,5 Pa und besonders vorteilhafterweise von 1,25 bis 3,25 Pa hat.

Gemäß einer weiteren Ausführungsform hat die aktivierbare pektinhaltige Apfelfaser in einer 2,5 Gew%igen Suspension eine Fließgrenze II (Cross Over) von 0,1 bis 1,0 Pa, vorteilhafterweise von 0,15 bis 0,75 Pa und besonders vorteilhafterweise von 0,25 bis 0,5 Pa. In einer 2,5 Gew%igen Dispersion hat die aktivierbare pektinhaltige Apfelfaser eine Fließgrenze I (Cross Over) von 0,75 bis 4,25 Pa, vorteilhafterweise von 1,5 bis 4,0 Pa und besonders vorteilhafterweise von 1,75 bis 3,75 Pa.

In einer Ausführungsform hat die aktivierbare pektinhaltige Apfelfaser in einer 2,5 Gew%igen Fasersuspension eine dynamische Weissenbergzahl von 3,0 Pa bis 7,0 Pa, vorteilhafterweise von 3,5 Pa bis 6,5 Pa und besonders vorteilhaft von 4,5 Pa bis 6,0 Pa. Nach Scheraktivierung hat die aktivierbare pektinhaltige Apfelfaser in einer 2,5 Gew%igen Faserdispersion entsprechend eine dynamische Weissenbergzahl 4,0 Pa bis 7,5 Pa, vorteilhafterweise von 4,5 Pa bis 7,0 Pa und besonders vorteilhaft von 5,0 Pa bis 6,5 Pa.

Zur Bestimmung der Fließgrenze I (Rotation), Fließgrenze I (Cross Over) und der dynamischen Weißenbergzahl in der Faserdispersion wird die Apfelfaser in demineralisiertem Wasser mit der in den Beispielen offenbarten Methode als 2,5 Gew%ige Lösung dispergiert.

Zur Bestimmung der Fließgrenze Rotation II, Fließgrenze Cross Over II und der dynamischen Weißenbergzahl in der Fasersuspension wird die Apfelfaser in demineralisiertem Wasser mit der in den Beispielen offenbarten Methode als 2,5 Gew%ige Lösung suspendiert.

Vorzugsweise weist die aktivierbare pektinhaltige Apfelfaser eine Viskosität von zwischen 50 bis 350 mPas, bevorzugt von 75 bis 200 mPas, und besonders bevorzugt von 100 bis 150 mPas auf, wobei die aktivierbare pektinhaltige Apfelfaser in Wasser als 2,5 Gew%ige Lösung dispergiert wird und die Viskosität mit einer Scherrate von 50 s$^{-1}$ bei 20°C gemessen wird.

Zur Viskositätsbestimmung wird die aktivierbare pektinhaltige Apfelfaser in demineralisiertem Wasser mit der in den Beispielen offenbarten Methode als 2,5 Gew%ige Lösung dispergiert und die Viskosität bei 20°C und vier Scherabschnitten (erster und dritter Abschnitt = konstantes Profil; zweiter und vierter Abschnitt = lineare Rampe; Messung jeweils bei einer Schergeschwindigkeit von 50 s$^{-1}$) bestimmt (Rheometer; Physica MCR 101, Messkörper CC25 (entspricht Z3 DIN), Fa. Anton Paar, Graz, Österreich). Eine aktivierbare pektinhaltige Apfelfaser mit dieser hohen Viskosität hat den Vorteil, dass für das Andicken des Endprodukts geringere Mengen an Fasern notwendig sind. Zudem erzeugt die Faser damit eine cremige Textur.

Gemäß einer Ausführungsform weist die aktivierbare pektinhaltige Apfelfaser eine Feuchtigkeit von weniger als 15 Gew%, bevorzugt von weniger als 10 Gew% und besonders bevorzugt von weniger als 8 Gew% auf.

Es ist auch bevorzugt, dass die aktivierbare pektinhaltige Apfelfaser in 1,0 Gew%iger wässriger Suspension einen pH-Wert von 3,5 bis 5,0 und bevorzugt von 4,0 bis 4,6 aufweist.

Die aktivierbare pektinhaltige Apfelfaser hat vorteilhaftweise eine Korngröße, bei der mindestens 90 Gew% der Partikel kleiner als 450 $\mu$m, bevorzugt kleiner als 350 $\mu$m und insbesondere kleiner als 250 $\mu$m sind.

Gemäß einer vorteilhaften Ausführungsform hat die aktivierbare pektinhaltige Apfelfaser einen Helligkeitswert $L^* > 54$, bevorzugt von $L^* > 55$ und besonders bevorzugt von $L^* > 56$. Bei einem solchen Helligkeitswert weist die Apfelfaser eine leichte Braunfärbung auf, was sie insbesondere für dunkle Saucen oder Suppen geeignet macht und hier einen Mehrwert darstellt. Hierbei kann auch durch Verwendung der Apfelfaser in der Grundkomponente und/oder der Feintexturkomponente die Farbgebung gezielt angepasst werden und an den Soßen- bzw. Suppentyp angepasst werden (wie beispielsweise in einer Safran-Lachssoße).

In vorteilhafter Weise hat die aktivierbare pektinhaltige Apfelfaser einen Ballaststoffgehalt von 80 bis 95 Gew%.

Die erfindungsgemäß verwendete aktivierbare pektinhaltige Apfelfaser liegt vorzugsweise in Pulverform vor. Dies hat den Vorteil, dass hiermit eine Formulierung mit geringem Gewicht und hoher Lagerstabilität vorliegt, die auch prozesstechnisch in einfacher Weise eingesetzt werden kann. Diese Formulierung wird erst durch die erfindungsgemäß verwendete Apfelfaser ermöglicht, die im Gegensatz zu modifizierten Stärken beim Einrühren in Flüssigkeiten nicht zur Klumpenbildung neigt.

## Herstellung der aktivierbaren pektinhaltigen Apfelfaser

Die aktivierbare pektinhaltige Apfelfaser ist durch ein Verfahren erhältlich, das die folgenden Schritte umfasst:

(a) Bereitstellen eines Rohmaterials, das Zellwandmaterial eines Apfels enthält;

(b) Aufschluss des Rohmaterials durch Inkubation einer wässrigen Suspension des Rohmaterials bei einem sauren pH-Wert;

(c) Ein- oder mehrstufige Abtrennung von groben Partikeln von dem aufgeschlossenen Material aus Schritt (b) in wässriger Suspension;

(d) Abtrennung des in Schritt (c) erhaltenen, von groben Partikeln befreiten Materials, aus der wässrigen Suspension;

(e) Waschen des in Schritt (d) abgetrennten Materials mit einer wässrigen Lösung;

(f) Trennung des gewaschenen Materials aus Schritt (e) von der wässrigen Lösung;

(g) Mindestens zweimaliges Waschen des abgetrennten Materials aus Schritt (f) mit einem organischen Lösungsmittel und jeweils anschließender Trennung des gewaschenen Materials von dem organischen Lösungsmittel;

(h) Optionale zusätzliche Entfernung des organischen Lösungsmittels durch Inkontaktbringen des gewaschenen Materials aus Schritt (g) mit Wasserdampf;

(i) Trocknen des Materials aus Schritt (g) oder (h) umfassend eine Trocknung bei Normaldruck zum Erhalten der aktivierbaren pektinhaltigen Apfelfaser.

Das Herstellungsverfahren führt zu Apfelfasern mit einer großen inneren Oberfläche, was auch das Wasserbindungsvermögen erhöht und mit einer guten Viskositätsbildung einhergeht. Diese Fasern stellen aktivierbare Fasern dar, die durch die Partialaktivierung im Herstellungsverfahren eine zufriedenstellende Festigkeit aufweisen. Zum Erhalten der optimalen rheologischen Eigenschaften wie Viskosität oder Texturierung bedarf es allerdings anwenderseitig der Anwendung von zusätzlichen Scherkräfte. Es handelt sich damit auch um partiell-aktivierte Fasern, die aber noch weiter aktivierbar sind.

Wie die Erfinder festgestellt haben, weisen die mit dem beschriebenen Verfahren hergestellten Apfelfasern gute rheologische Eigenschaften auf. Die Fasern können einfach rehydratisiert werden und die vorteilhaften rheologischen Eigenschaften bleiben auch nach der Rehydratisierung erhalten.

Das Herstellungsverfahren führt zu Apfelfasern, die in hohem Maße geschmacks- und geruchsneutral sind und daher vorteilhaft für die Anwendung im Lebensmittelbereich sind. Das Eigenaroma der übrigen Zutaten wird nicht maskiert und kann sich daher optimal entfalten. Die Apfelfasern werden aus Äpfeln gewonnen und stellen so natürliche Inhaltsstoffe mit bekannten positiven Eigenschaften dar.

Die aktivierbare pektinhaltige Apfelfaser kann aus allen dem Fachmann bekannten Kulturäpfeln Malus *domesticus*) gewonnen werden. Als Ausgangsmaterial können hier vorteilhafterweise Verarbeitungsrückstände von Äpfeln eingesetzt werden. Als Ausgangsmaterial kann entsprechend Apfelschale, Kerngehäuse, Kerne oder Fruchtfleisch oder eine Kombination hiervon verwendet werden. In bevorzugter Weise wird als Ausgangsmaterial Apfeltrester verwendet, also die Pressrückstände von Äpfeln, die neben den Schalen typischerweise auch die oben genannten Bestandteile enthalten.

Der saure Aufschluss im Schritt (b) des Verfahrens dient der Entfernung von Pektin durch Überführung des Protopektins in lösliches Pektin und gleichzeitiger Aktivierung der Faser durch Vergrößerung der inneren Oberfläche. Weiterhin wird das Rohmaterial durch den Aufschluss thermisch zerkleinert. Durch die saure Inkubation im wässrigen Milieu unter Einwirkung von Hitze zerfällt es in Apfelfasern. Damit wird eine thermische Zerkleinerung erreicht, ein mechanischer Zerkleinerungsschritt ist damit im Rahmen des Herstellungsverfahrens nicht notwendig. Dies stellt einen entscheidenden Vorteil gegenüber herkömmlichen Faser-Herstellungsverfahren dar, die im Gegensatz dazu einen Scherungsschritt (wie beispielsweise durch eine (Hoch-)Druckhomogenisierung) benötigen, um eine Faser mit ausreichenden rheologischen Eigenschaften zu erhalten.

Durch den sauren Aufschluss als Prozessschritt im Herstellungsverfahren kann die Faserstruktur aufgeschlossen werden und durch anschließende alkoholische Waschschritte mit schonendem Trocknen diese Struktur entsprechend aufrechterhalten werden.

Aufgrund des sauren Extraktionsschritts weist die aktivierbare Apfelfaser weniger als 10 Gew%, bevorzugt weniger als 8 Gew% und besonders bevorzugt weniger als 6 Gew% an wasserlöslichem Pektin auf. Die aktivierbare, pektinhaltige Apfelfaser weist vorteilhafterweise einen wasserlöslichen Pektingehalt von zwischen 2 Gew% und 8 Gew% und besonders bevorzugt von zwischen 2 und 6 Gew% auf. Der Gehalt an wasserlöslichem Pektin in dieser Apfelfaser kann beispielsweise 2 Gew%, 3 Gew%, 4 Gew%, 5 Gew%, 6 Gew%, 7 Gew%, 8 Gew%, 9 Gew% oder 9,5 Gew% betragen.

Das Rohmaterial liegt bei dem Aufschluss im Schritt (b) als wässrige Suspension vor. Eine Suspension ist gemäß der Erfindung ein heterogenes Stoffgemisch aus einer Flüssigkeit und darin fein verteilten Festkörpern (Rohmaterial-Partikel). Da die Suspension zur Sedimentation und Phasentrennung tendiert, werden die Partikel geeignetermaßen durch Schütteln oder Rühren in der Schwebe gehalten. Es liegt somit keine Dispersion vor, bei der die Partikel durch mechanische Einwirkung (Scherung) so zerkleinert werden, dass sie feindispers vorliegen.

Zur Erzielung eines sauren pH-Wertes im Schritt (b) kann der Fachmann auf alle ihm bekannten Säuren oder sauren Pufferlösungen zurückgreifen. So kann beispielsweise eine organische Säure wie Citronensäure eingesetzt werden.

Alternativ oder in Kombination hierzu kann auch eine Mineralsäure eingesetzt werden. Beispielhaft seien erwähnt: Schwefelsäure, Salzsäure, Salpetersäure oder schweflige Säure. Bevorzugt wird Schwefelsäure eingesetzt.

Bei dem sauren Aufschluss im Schritt (b) des Verfahrens liegt der pH-Wert der Suspension zwischen pH = 0,5 und pH = 4,0, bevorzugt zwischen pH = 1,0 und pH = 3,5 und besonders bevorzugt zwischen pH = 1,5 und pH = 3,0.

Erfindungsgemäß besteht die Flüssigkeit zur Herstellung der wässrigen Suspension zu mehr als 50 Vol%, bevorzugt zu mehr als 60, 70, 80 oder sogar 90 Vol% aus Wasser. In einer bevorzugten Ausführungsform enthält die Flüssigkeit kein organisches Lösungsmittel und insbesondere keinen Alkohol. Damit liegt eine wasserbasierte saure Extraktion vor.

In einer Ausführungsform erfolgt bei dem Herstellungsverfahren und insbesondere bei dem sauren Aufschluss im Schritt (b) keine enzymatische Behandlung des Rohmaterials durch Zugabe eines Enzyms, insbesondere keine Amylase-Behandlung.

Die Inkubation im Schritt (b) erfolgt bei dem sauren Aufschluss bei einer Temperatur zwischen 60°C und 95°C, bevorzugt zwischen 70°C und 90°C und besonders bevorzugt zwischen 75°C und 85°C.

Die Inkubation im Schritt (b) erfolgt über eine Zeitdauer zwischen 60 min und 8 Stunden und bevorzugt zwischen 2 h und 6 Stunden.

Die wässrige Suspension im Schritt (b) hat bei dem sauren Aufschluss geeignetermaßen eine Trockenmasse von zwischen 0,5 Gew% und 5 Gew%, bevorzugt von zwischen 1 Gew% und 4 Gew%, und besonders bevorzugt von zwischen 1,5 Gew% und 3 Gew%.

Die wässrige Suspension wird zweckmäßigerweise während des Aufschlusses im Schritt (b) gerührt oder geschüttelt. Dies erfolgt bevorzugt in kontinuierlicher Weise, damit die Partikel in der Suspension in der Schwebe gehalten werden.

Im Schritt (c) des Verfahrens wird das aufgeschlossene Material von groben Partikeln getrennt. Diese Trennung erfolgt als einstufige oder mehrstufige Trennung.

Bei der ein- oder mehrstufigen Trennung im Schritt (c) ist es vorteilhaft, dass eine Abtrennung von Partikeln mit einer Korngröße von mehr als 1000 μm erfolgt. Dadurch werden sowohl grobpartikuläre Verunreinigungen des Rohmaterials als auch unzureichend aufgeschlossenes Material entfernt.

In vorteilhafter Weise wird das aufgeschlossene Material im Schritt (c) einer mehrstufigen Trennung unterzogen. Hierbei ist es bevorzugt, wenn bei der Trennung von der wässrigen Flüssigkeit stufenweise die Abtrennung von immer feineren Partikeln erfolgt. Dies bedeutet, dass beispielsweise bei einer zweistufigen Trennung beide Stufen eine Abtrennung von größeren Partikeln leisten, wobei bei der zweiten Stufe im Vergleich zur ersten Stufe feinere Partikel abgetrennt werden. Damit wird das Material mit jedem Trennungsschritt immer feinpartikulärer.

Besonders vorteilhaft ist hier im Schritt (c) eine zweistufige Trennung mit einer Abtrennung von Partikeln mit einer Korngröße von mehr als 1000 μm in der ersten Stufe und einer Abtrennung von Partikeln mit einer Korngröße von mehr als 500 μm in der zweiten Stufe. Die Abtrennung in diesen beiden Stufen erfolgt vorteilhafterweise mittels einer Siebtrommel, einer Passiermaschine oder einer anderen Art der Nasssiebung.

Nach dem sauren Aufschluss im Schritt (b), der Entfernung grober Partikel im Schritt (c) und der Abtrennung des aufgeschlossenen Materials aus der wässrigen Suspension im Schritt (d), was bevorzugt mittels Dekanter erfolgt, wird das abgetrennte Material im Schritt (e) mit einer wässrigen Lösung gewaschen. Durch diesen Schritt können verbliebene wasserlösliche Stoffe, wie beispielsweise Zucker entfernt werden. Gerade die Entfernung von Zucker mit Hilfe dieses Schrittes trägt dazu bei, dass die Apfelfaser weniger adhäsiv ist und damit besser zu prozessieren und anzuwenden ist.

Im Rahmen der Erfindung wird unter der "wässrigen Lösung" die für das Waschen im Schritt (e) eingesetzte wässrige Flüssigkeit verstanden. Das Gemisch aus dieser wässrigen Lösung und dem aufgeschlossenen Material wird als "Waschmixtur" bezeichnet.

Vorteilhafterweise wird das Waschen gemäß Schritt (e) mit Wasser als wässrige Lösung durchgeführt. Besonders vorteilhaft ist hier der Einsatz von deionisiertem Wasser.

In einer Ausführungsform besteht die wässrige Lösung zu mehr als 50 Vol%, bevorzugt zu mehr als 60, 70, 80 oder sogar 90 Vol% aus Wasser. In einer bevorzugten Ausführungsform enthält die wässrige Lösung kein organisches Lösungsmittel und insbesondere keinen Alkohol. Damit liegt eine wasserbasierte Waschung vor und gerade kein Wasser-Alkohol-Austausch wie es bei der Faserwaschung mit einem Gemisch aus Alkohol und Wasser ist, wobei dieses Gemisch mehr als 50 Vol% Alkohol aufweist und typischerweise einen Alkoholgehalt von mehr als 70 Vol% besitzt.

Alternativ kann als wässrige Lösung auch eine Salzlösung mit einer Ionenstärke von I < 0.2 mol / l eingesetzt werden.

Das Waschen gemäß Schritt (e) erfolgt vorteilhafterweise bei einer Temperatur zwischen 30°C und 90°C, bevorzugt zwischen 40°C und 80°C und besonders bevorzugt zwischen 50°C und 70°C.

Die Zeitdauer des Inkontaktbringens im Schritt (e) mit der wässrigen Lösung erfolgt über eine Zeitdauer von zwischen 10 min und 2 Stunden, bevorzugt von zwischen 30 min und einer Stunde.

Bei dem Waschen gemäß Schritt (e) beträgt die Trockenmasse in der Waschmixtur zwischen 0,1 Gew% und 5 Gew%, bevorzugt zwischen 0,5 Gew% und 3 Gew% und besonders bevorzugt von zwischen 1 Gew% und 2 Gew%.

Vorteilhafter wird das Waschen gemäß Schritt (e) unter mechanischer Bewegung der Waschmixtur durchgeführt. Dies erfolgt zweckmäßigerweise mittels Rühren oder Schütteln der Waschmixtur.

Nach dem Waschen mit der wässrigen Lösung wird gemäß Schritt (f) das gewaschene Material von der wässrigen Lösung abgetrennt. Diese Abtrennung erfolgt vorteilhafterweise mit einem Dekanter oder einem Separator.

Im Schritt (g) erfolgt dann ein weiterer Waschschritt, der allerdings mit einem organischen Lösungsmittel erfolgt. Hierbei handelt es sich um ein mindestens zweimaliges Waschen mit einem organischen Lösungsmittel.

Das organische Lösungsmittel ist vorteilhafterweise ein Alkohol, der ausgewählt sein kann aus der Gruppe bestehend aus Methanol, Ethanol und Isopropanol.

Das organische Lösungsmittel kann auch als Gemisch aus dem organischen Lösungsmittel und Wasser eingesetzt werden, wobei dieses Gemisch dann mehr als 50 Vol% an organischem Lösungsmittel aufweist und vorzugsweise mehr als 70 Vol% an organischem Lösungsmittel besitzt.

Der Waschschritt im Schritt (g) erfolgt bei einer Temperatur zwischen 40°C und 75°C, bevorzugt zwischen 50°C und 70°C und besonders bevorzugt zwischen 60°C und 65°C.

Die Zeitdauer des Inkontaktbringens mit dem organischen Lösungsmittel erfolgt über eine Zeitdauer von zwischen 60 min und 10 h und bevorzugt von zwischen 2 h und 8 h.

Jeder Waschschritt mit dem organischen Lösungsmittel umfasst ein Inkontaktbringen des Materials mit dem organischen Lösungsmittel für eine bestimmte Zeitdauer gefolgt von der Abtrennung des Materials von dem organischen Lösungsmittel. Für diese Abtrennung wird bevorzugt ein Dekanter oder eine Presse verwendet.

Bei dem Waschen mit dem organischen Lösungsmittel im Schritt (g) beträgt die Trockenmasse in der Waschlösung von zwischen 0,5 Gew% und 15 Gew%, bevorzugt zwischen 1,0 Gew% und 10 Gew%, und besonders bevorzugt zwischen 1,5 Gew% und 5,0 Gew%.

Das Waschen mit dem organischen Lösungsmittel im Schritt (g) wird bevorzugt unter mechanischer Bewegung der Waschmixtur durchgeführt. Bevorzugt wird das Waschen in einem Behälter mit Rührwerk durchgeführt.

Bei dem Waschen mit dem organischen Lösungsmittel im Schritt (g) wird in vorteilhafter Weise eine Vorrichtung zur Vergleichmäßigung der Suspension verwendet. Diese Vorrichtung ist bevorzugt ein Zahnkranzdispergierer.

Nach einer vorteilhaften Ausführungsform erfolgt das Waschen mit dem organischen Lösungsmittel im Schritt (g) im Gegenstromverfahren.

In einer Ausführungsform erfolgt bei dem Waschen mit dem organischen Lösungsmittel im Schritt (g) eine partielle Neutralisation durch Zugabe von NaOH, KOH oder Na- oder K-Salzen.

Bei dem Waschen mit dem organischen Lösungsmittel im Schritt (g) kann zusätzlich auch eine Entfärbung des Materials durchgeführt werden. Diese Entfärbung kann durch Zugabe eines oder mehrerer Oxidationsmittel erfolgen. Beispielhaft seien hier die Oxidationsmittel Chlordioxid und Wasserstoffperoxid erwähnt, die alleine oder in Kombination angewendet werden können.

Nach einer vorteilhaften Ausführungsform nimmt bei dem mindestens zweimaligen Waschen mit einem organischen Lösungsmittel in Schritt (g) die finale Konzentration des organischen Lösungsmittels in der Lösung mit jedem Waschschritt zu. Durch diesen inkrementell steigenden Anteil an organischem Lösungsmittel wird der Wasseranteil in dem Fasermaterial kontrolliert verringert, so dass die rheologischen Eigenschaften der Fasern bei dem nachfolgenden Schritt zur Lösungsmittelentziehung und Trocknung erhalten bleiben und kein Kollabieren der partiell-aktivierten Faserstruktur erfolgt.

Vorzugsweise beträgt die finale Konzentration des organischen Lösungsmittels im ersten Waschschritt zwischen 60 bis 70 Vol.-%, im zweiten Waschschritt zwischen 70 und 85 Vol.-% und in einem optionalen dritten Waschschritt zwischen 80 und 90 Vol.-%.

Gemäß dem optionalen Schritt (h) kann der Anteil des Lösungsmittels zusätzlich durch Inkontaktbringen des Materials mit Wasserdampf verringert werden. Dies wird vorzugsweise mit einem Stripper durchgeführt, bei dem das Material im Gegenstrom mit Wasserdampf als Strippgas in Kontakt gebracht wird.

Nach einer vorteilhaften Ausführungsform wird das Material vor dem Trocknen gemäß Schritt (h) mit Wasser befeuchtet. Dies geschieht bevorzugt durch Einbringen des Materials in eine Befeuchtungsschnecke und Besprühen mit Wasser.

Im Schritt (i) erfolgt das Trocknen des gewaschenen Materials aus Schritt (g) oder des gestrippten Materials aus Schritt (h), wobei das Trocknen eine Trocknung unter Normaldruck umfasst. Beispiele für geeignete Trocknungsverfahren sind Wirbelschichttrocknung, Fließbetttrocknung, Bandtrockner, Trommeltrockner oder Schaufeltrockner. Besonders bevorzugt ist hier die Fließbetttrocknung. Diese hat den Vorteil, dass das Produkt aufgelockert getrocknet wird, was den anschließenden Vermahlschritt vereinfacht. Zudem vermeidet die Trocknungsart durch den gut dosierbaren Wärmeeintrag eine Schädigung des Produktes durch lokale Überhitzung.

Die Trocknung unter Normaldruck im Schritt (i) erfolgt zweckmäßigerweise bei einer Temperatur von zwischen 50°C und 130°C, bevorzugt von zwischen 60°C und 120°C und besonders bevorzugt von zwischen 70°C und 110°C. Im Anschluss an die Trocknung wird das Produkt zweckmäßigerweise auf Raumtemperatur abgekühlt.

Gemäß einer vorteilhaften Ausführungsform umfasst das Verfahren nach dem Trocknen in Schritt (i) zusätzlich einen Zerkleinerungs-, Vermahlungs- oder Siebschritt. Dieser ist vorteilhafterweise so ausgestaltet, dass als Ergebnis 90 Gew% der Partikel eine Korngröße von weniger 450 $\mu$m, bevorzugt eine Korngröße von weniger als 350 $\mu$m und insbesondere eine Korngröße von weniger als 250 $\mu$m aufweisen. Bei dieser Korngröße ist die Faser gut dispergierbar und zeigt ein optimales Quellvermögen.

Die für die erfindungsgemäße Verwendung eingesetzte aktivierbare pektinhaltige Apfelfaser und ein Verfahren zu ihrer Herstellung wird in der Anmeldung DE 10 2020 115 525.5 offenbart.

### Feintexturkomponente

Die Feintexturkomponente im erfindungsgemäßen Mehrkomponentensystem ist für die Feintexturierung der Soße und/oder Suppe zuständig. Zudem enthält die Feintexturkomponente vorzugsweise das Aroma, das die Soße und/oder Suppe geschmacklich im Wesentlichen prägt.

Die Feintexturkomponente weist texturierende Eigenschaften auf, die aufgrund der Fasereigenschaften eine samtige Konsistenz der Soße oder Suppe mit glänzendem Erscheinungsbild ergeben.

Bei dem erfindungsgemäßen Mehrkomponentensystem enthält die Feintexturkomponente eine aktivierte Pflanzenfaser als texturgebenden Bestandteil zur Feintexturierung, wobei die aktivierte Pflanzenfaser eine aktivierte pektinhaltige Apfelfaser oder eine aktivierte pektinhaltige Citrusfaser gemäß Anspruch 1 ist. Eine aktivierte Pflanzenfaser ist hierbei eine Pflanzenfaser, die bereits im Herstellungsverfahren aktiviert wurde, insbesondere mittels des Einsatzes von Scherkräften. Unter einer "aktivierten Pflanzenfaser" ist gemäß der Erfindung eine Pflanzenfaser zu verstehen, die eine ausreichende Festigkeit aufweist, sodass es in der Anwendung keine zusätzlichen Scherkräfte bedarf, um anwenderseitig die optimalen rheologischen Eigenschaften wie Viskosität oder Texturierung zu erhalten.

Durch die oben beschriebene Aktivierung der Faser unter Oberflächenvergrößerung durch Scherung werden damit fein zerteilte Fasern mit flüssigkeitsgefüllten Kapillaren bereitgestellt, die insbesondere als Paste optimal zur Feintexturgebung eingesetzt werden können. Derartige Pflanzenfasern haben zudem den Vorteil, dass sie ebenfalls geschmacksneutral sind.

Bei dem Einsatz als Paste wird gewissermaßen "rückwärts" gearbeitet, insofern die hohe Anfangsviskosität durch die Zugabe der Feintexturkomponente zwar verringert wird, aber die die Feintextur als Samtigkeit und Glanz erzeugt wird. So kann im konkreten Fall der Suppe oder Soße bis zu 25 Gew% - 30 Gew% an Feintexturkomponente hinzugegeben werden.

Wie die Erfinder herausgefunden haben, kann mit einem sehr kleinen Anteil an Feintexturkomponente b. in der mit der Grundkomponente a. texturierten Flüssigkeit überraschenderweise, auch ohne zusätzliche Scherung, eine mögliche Rauigkeit durch Verkleinerung der Faserabstände zueinander, mit Füllung feinen Faserteilen durch Texturieren des freien Wassers, verhindert werden.

Dieses ist aufgrund der eingesetzten, vergleichsweise geringen Menge an Feintexturkomponente b im Verhältnis zur Gesamtmenge der zu texturierenden Flüssigkeit bemerkenswert und bildet so eine neue Grundlage für die Feineinstellung von Viskosität bei Nutzung der gleichen Grundzutaten.

Hierbei bleiben aber alle gewünschten Eigenschaften, die dem aktuellen Stand einer guten Soße entsprechen erhalten. Vor allem der Erhalt des Glanzes ist hier hervorzuheben.

Auch die insgesamt positiven Effekte, die durch eine Texturierung mit Pflanzenfasern bereits in der ersten Ausarbeitung bekannt sind (Anbrennverhalten, Hautbildung) bleiben nur durch diese Kombination vollständig erhalten.

Durch die Vortexturierung mit der Pflanzenfasern enthaltenden Grundkomponente a. und anschließender Feintexturierung mit Feintexturkomponente b wird zudem ein Texturierungsproblem umgangen, das bei der Nutzung von nativen Pflanzenfasern häufig auftritt. Durch die geringen Mengen von 1,5 Gew% - 2,0 Gew% Trockenmasse / Liter bei der Pflanzenfasern enthaltenden Grundkomponente a. (im Vergleich zu einer herkömmlichen Hydrokolloid bei einer Roux von 8,0 Gew% - 10,0 Gew% Trockenmasse / Liter) kann es schnell zu einer Überdosierung kommen, die für den Nutzer sehr umständlich nachgearbeitet werden muss.

Das Bearbeiten der Viskosität von Flüssigkeiten durch die Texturierung in zwei getrennten Komponenten und entsprechender Möglichkeit zur nacheinander erfolgenden Zugabe (zwei separate, aufeinander aufbauende Texturierungs-Bearbeitungsphasen) mit der Pflanzenfasern enthaltenden Grundkomponente a. und der Feintexturkomponente b ermöglicht so eine hohe Flüssigkeitsbindung und individuelle Feinsteinstellung. Hier ist insbesondere vorteilhaft die Feintexturkomponente b in pastöser Form einzusetzen, die damit aufgrund ihres pastösen Zustandes die Viskosität - auch kalt - viel exakter einstellen lässt, als die auf Texturierungsmittel aus dem Stand der Technik, und das ohne zusätzliches Auskochen oder Nachquellen.

Die Erfindung basiert so wesentlich auf einem Synergismus zwischen der Pflanzenfasern enthaltenden Grundkomponente a. und der Pflanzenfasern enthaltenden Feintexturkomponente b. Die Grundkomponente a. erlaubt einen effektiven und geschmacksneutralen Viskositätsaufbau von großen Flüssigkeitsmengen und damit eine "Vortexturierung". Für einen Liter Flüssigkeit reichen bereits zwischen 1,5 Gew% und 2,0 Gew% an Grundkomponente a. aus, um eine Suppen- oder Soßenkonsistenz aufzubauen. Bei der erfindungsgemäßen Verwendung einer nativen Pflanzenfaser ist eine schnelle Bindung des freien Wassers zu beobachten, so dass der gesamte Quellvorgang der Faser innerhalb weniger Minuten, auch in kalten Flüssigkeiten, komplett abgeschlossen, so dass sich das übliche Nachquellen oder bei Hydrokolloiden teilweise notwendige "Auskochen" entfällt.

Die Verwendung einer nativen Pflanzenfaser als Bestandteil der Grundkomponente bringt es aber mit sich, dass die Fasern unter Umständen noch eine gewisse Rauigkeit in fertig gequollenem Zustand auf der Zunge und beim Abschlucken mit sich bringen können.

Um diesen Effekt abzumildern, wird üblicherweise das Produkt Scherkräften ausgesetzt (Mixstab), um die Oberfläche der Fasern zu zerschlagen und eine mögliche Rauigkeit zu umgehen.

Dadurch bildet sich allerdings ein pulpiges Erscheinungsbild, wie bei einer reinen Tomatensoße oder einem Gulasch, das bei einer Vielzahl von Soßen nicht gewünscht ist und auch nicht dem üblichen Bild einer Soße entspricht.

Eine mögliche Rauigkeit kann auch durch den Einsatz von Fett kaschiert werden, was aber neben der erheblichen Kalorienzunahme auch mit einer Geschmacksveränderung bzw. - kaschierung einhergeht.

Außerdem zerstört der Schervorgang den durch das enthaltene Pektin entstehenden Glanz, der ebenfalls zu einer wünschenswerten Eigenschaft einer guten Soße zählt.

Hier kommt die Feintexturkomponente b. ins Spiel, die ohne Fett oder Scherung, in einfacher und kontrollierter Weise die gewünschte Feintexturierung leistet, ohne die von der Grundkomponente erzeugten positiven rheologischen oder sensorischen Eigenschaften zu stören.

Die beiden Komponenten wirken somit in synergistischer Weise zusammen und bilden damit den Grundstock für ein neuartiges Konzept zur Soßen- oder Suppenherstellung.

Verfahren zur Herstellung solcher aktivierter Pflanzenfasern sind dem Fachmann bekannt. Dabei werden Pflanzenfasern in Wasser Scherkräften ausgesetzt, was zu einer Oberflächenvergrößerung durch Veränderung der Faserstruktur führt.

Es hat sich überraschenderweise herausgestellt, dass eine Texturkomponente enthaltend eine aktivierte Pflanzenfaser besonders gut geeignet ist zur Feineinstellung der Textur und der rheologischen Eigenschaften der Soße oder Suppe.

Erfindungsgemäß ist die aktivierte Pflanzenfaser eine aktivierte Citrusfaser oder eine aktivierte Apfelfaser.

**Die aktivierte pektinhaltige Apfelfaser**

In einer erfindungsgemäßen Ausführungsform wird für die Feintexturkomponente b. als Texturierungsmittel eine aktivierte pektinhaltige Apfelfaser eingesetzt. Durch den sauren Aufschluss als Prozessschritt im Herstellungsverfahren kann die Faserstruktur aufgeschlossen werden und durch anschließende alkoholische Waschschritte mit schonendem Trocknen diese Struktur entsprechend aufrechterhalten werden.

Aufgrund des sauren Extraktionsschrittes ist der Pektingehalt der Apfelfaser stark reduziert worden, so dass die aktivierte pektinhaltige Apfelfaser erfindungsgemäß weniger als 10 Gew%, bevorzugt weniger als 8 Gew% und besonders bevorzugt weniger als 6 Gew% an wasserlöslichem Pektin aufweist. Der Gehalt an wasserlöslichem Pektin in der aktivierten pektinhaltigen Apfelfaser kann beispielsweise 2 Gew%, 3 Gew%, 4 Gew%, 5 Gew%, 6 Gew%, 7 Gew%, 8 Gew% oder 9 Gew% betragen.

Bei diesem residualen wasserlöslichen Pektin handelt es sich um hochverestertes Pektin. Unter einem hochveresterten Pektin wird erfindungsgemäß ein Pektin verstanden, das einen Veresterungsgrad von mindestens 50% besitzt. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JECFA (Monograph 19-2016, Joint FAO/WHO Expert Committee on Food Additives) bestimmt werden.

Die aktivierte pektinhaltige Apfelfaser hat nach einer vorteilhaften Ausführungsform eine Festigkeit von mehr als 50 g, bevorzugt von mehr als 75 g und besonders bevorzugt von mehr als 100 g. Hierzu wird die aktivierte Apfelfaser in Wasser als 6 Gew%ige Lösung suspendiert.

Die aktivierte pektinhaltige Apfelfaser hat vorteilhafterweise ein Wasserbindevermögen von mehr als 20 g/g, bevorzugt von mehr als 22 g/g, besonders bevorzugt von mehr als 24 g/g, und insbesondere bevorzugt von mehr als 27,0 g/g. Ein solch vorteilhaft hohes Wasserbindevermögen führt zu einer hohen Viskosität und über diese dann auch zu einem geringeren Faserverbrauch bei cremiger Textur.

In einer Ausführungsform weist die aktivierte pektinhaltige Apfelfaser in einer 2,5 Gew%igen Suspension eine Fließgrenze II (Rotation) von mehr als 0,1 Pa, vorteilhafterweise von mehr als 0,5 Pa, und besonders vorteilhafterweise von mehr als 1,0 Pa. Bei einer 2,5 Gew%igen Dispersion hat die aktivierte pektinhaltige Apfelfaser erfindungsgemäß entsprechend eine Fließgrenze I (Rotation) von mehr als 5,0 Pa, vorteilhafterweise von mehr als 6,0 Pa und besonders vorteilhafterweise von mehr als 7,0 Pa.

Gemäß einer weiteren Ausführungsform hat die aktivierte pektinhaltige Apfelfaser in einer 2,5 Gew%igen Suspension eine Fließgrenze II (Cross Over) von mehr als 0,1 Pa, vorteilhafterweise von mehr als 0,5 Pa und besonders vorteilhafterweise von mehr als 1,0 Pa. In einer 2,5 Gew%igen Dispersion hat die aktivierte pektinhaltige Apfelfaser eine Fließgrenze I (Cross Over) von mehr als 5,0 Pa, vorteilhafterweise von mehr als 6,0 Pa und besonders vorteilhafterweise von mehr als 7,0 Pa.

In einer Ausführungsform hat die aktivierte pektinhaltige Apfelfaser in einer 2,5 Gew%igen Fasersuspension eine dynamische Weissenbergzahl von mehr als 4,0, vorteilhafterweise von mehr als 5,0 und besonders vorteilhaft von mehr als 6,0. Nach Scheraktivierung hat die aktivierte pektinhaltige Apfelfaser in einer 2,5 Gew%igen Faserdispersion entsprechend eine dynamische Weissenbergzahl von mehr als 6,5 vorteilhafterweise von mehr als 7,5 und besonders vorteilhaft von mehr als 8,5.

Zur Bestimmung der Fließgrenze I (Rotation), Fließgrenze I (Cross Over) und der dynamischen Weißenbergzahl einer 2,5 Gew%igen Dispersion wird die Apfelfaser in demineralisiertem Wasser mit der in den Beispielen offenbarten Methode als 2,5 Gew%ige Lösung dispergiert.

Zur Bestimmung der Fließgrenze II (Rotation), Fließgrenze II (Cross Over) und der dynamischen Weißenbergzahl einer 2,5 Gew%igen Suspension wird die Apfelfaser in demineralisiertem Wasser mit der in den Beispielen offenbarten Methode als 2,5 Gew%ige Lösung suspendiert.

Vorzugsweise weist die aktivierte pektinhaltige Apfelfaser eine Viskosität von mehr als 100 mPas, bevorzugt von mehr als 200 mPas, und besonders bevorzugt von mehr als 350 mPas auf, wobei die aktivierte Apfelfaser in Wasser als 2,5 Gew%ige Lösung dispergiert wird und die Viskosität mit einer Scherrate von 50 s$^{-1}$ bei 20°C gemessen wird.

Zur Viskositätsbestimmung wird die Apfelfaser in demineralisiertem Wasser mit der in den Beispielen offenbarten Methode als 2,5 Gew%ige Lösung dispergiert und die Viskosität bei 20°C und vier Scherabschnitten (erster und dritter Abschnitt = konstantes Profil; zweiter und vierter Abschnitt = lineare Rampe; Messung jeweils bei einer Schergeschwindigkeit von 50 s$^{-1}$) bestimmt (Rheometer; Physica MCR 101, Messkörper CC25 (entspricht Z3 DIN), Fa. Anton Paar, Graz, Österreich). Eine aktivierte Apfelfaser mit dieser hohen Viskosität hat den Vorteil, dass für das Andicken des Endprodukts geringere Mengen an Fasern notwendig sind. Zudem erzeugt die Faser damit eine cremige Textur.

Gemäß einer Ausführungsform weist die aktivierte pektinhaltige Apfelfaser eine Feuchtigkeit von weniger als 15 Gew%, bevorzugt von weniger als 8 Gew% und besonders bevorzugt von weniger als 6 Gew% auf.

Es ist auch bevorzugt, dass die aktivierte pektinhaltige Apfelfaser in 1,0 Gew%iger wässriger Suspension einen pH-Wert von 3,5 bis 5,0 und bevorzugt von 4,0 bis 4,6 aufweist.

Die aktivierte pektinhaltige Apfelfaser hat vorteilhaftweise eine Korngröße, bei der mindestens 90 Gew% der Partikel kleiner als 400 μm, bevorzugt kleiner als 350 μm und insbesondere kleiner als 300 μm sind.

Gemäß einer vorteilhaften Ausführungsform hat die aktivierte pektinhaltige Apfelfaser einen Helligkeitswert L* > 60, bevorzugt von L* > 61 und besonders bevorzugt von L*> 62. Bei einem solchen Helligkeitswert weist die Apfelfaser eine leichte Braunfärbung auf, was sie insbesondere für dunkle Saucen oder Suppen geeignet macht und hier einen Mehrwert darstellt. Hierbei kann auch durch Verwendung der Apfelfaser in der Grundkomponente und/oder der Feintexturkomponente die Farbgebung gezielt angepasst werden und an den Soßen- bzw. Suppentyp angepasst werden (wie beispielsweise in einer Safran-Lachssoße).

In vorteilhafter Weise hat die aktivierte pektinhaltige Apfelfaser einen Ballaststoffgehalt von 80 bis 95 Gew%.

Die erfindungsgemäß verwendete aktivierte pektinhaltige Apfelfaser liegt vorzugsweise in Pulverform vor. Dies hat den Vorteil, dass hiermit eine Formulierung mit geringem Gewicht und hoher Lagerstabilität vorliegt, die auch prozesstechnisch in einfacher Weise eingesetzt werden kann. Diese Formulierung wird erst durch die erfindungsgemäß verwendete aktivierte pektinhaltige Apfelfaser ermöglicht, die im Gegensatz zu modifizierten Stärken beim Einrühren in Flüssigkeiten nicht zur Klumpenbildung neigt.

**Herstellung der aktivierten pektinhaltigen Apfelfaser**

Die aktivierte pektinhaltige Apfelfaser ist durch ein Verfahren erhältlich, das die folgenden Schritte umfasst:

(a) Bereitstellen eines Rohmaterials, das Zellwandmaterial eines Apfels enthält;
(b) Aufschluss des Rohmaterials durch Inkubation einer wässrigen Suspension des Rohmaterials bei einem sauren pH-Wert;
(c) Ein- oder mehrstufige Abtrennung von groben Partikeln von dem aufgeschlossenen Material aus Schritt (b) in wässriger Suspension;
(d) Abtrennung des in Schritt (c) erhaltenen, von groben Partikeln befreiten Materials aus der wässrigen Suspension;
(e) Waschen des in Schritt (d) abgetrennten Materials mit einer wässrigen Lösung;
(f) Trennung des gewaschenen Materials aus Schritt (e) von der wässrigen Lösung;
(g) Mindestens zweimaliges Waschen des abgetrennten Materials aus Schritt (f) mit einem organischen Lösungsmittel und jeweils anschließender Trennung des gewaschenen Materials von dem organischen Lösungsmittel;
(h) Optionale zusätzliche Entfernung des organischen Lösungsmittels durch Inkontaktbringen des gewaschenen Materials aus Schritt (g) mit Wasserdampf;
(i) Trocknen des Materials aus Schritt (g) oder (h) umfassend eine Vakuumtrocknung zum Erhalten der aktivierten pektinhaltigen Apfelfaser.

Die aktivierte pektinhaltige Apfelfaser kann aus allen dem Fachmann bekannten Kulturäpfeln Malus *domesticus*) gewonnen werden. Als Ausgangsmaterial können hier vorteilhafterweise Verarbeitungsrückstände von Äpfeln eingesetzt werden. Als Ausgangsmaterial kann entsprechend Apfelschale, Kerngehäuse, Kerne oder Fruchtfleisch oder eine Kombination hiervon verwendet werden. In bevorzugter Weise wird als Ausgangsmaterial Apfeltrester verwendet, also die Pressrückstände von Äpfeln, die neben den Schalen typischerweise auch die oben genannten Bestandteile enthalten.

Das erfindungsgemäße Herstellungsverfahren führt zu Apfelfasern mit einer großen inneren Oberfläche, was auch das Wasserbindungsvermögen erhöht und mit einer guten Viskositätsbildung einhergeht.

Diese Fasern stellen aktivierte Fasern dar, die in wässriger Suspension eine ausreichende Festigkeit aufweisen, so dass es in der Anwendung keiner zusätzlichen Scherkräfte bedarf, um anwenderseitig die optimalen rheologischen Eigenschaften wie Viskosität oder Texturierung zu erhalten. Die aktivierte pektinhaltige Apfelfaser wird im Rahmen der Anmeldung synonym als pektinhaltige Apfelfaser bezeichnet.

Wie die Erfinder festgestellt haben, weisen die mit dem erfindungsgemäßen Verfahren hergestellten Apfelfasern gute rheologische Eigenschaften auf. Die erfindungsgemäßen Fasern können einfach rehydratisiert werden und die vorteilhaften rheologischen Eigenschaften bleiben auch nach der Rehydratisierung erhalten.

Das erfindungsgemäße Herstellungsverfahren führt zu Apfelfasern, die in hohem Maße geschmacks- und geruchsneutral sind und daher vorteilhaft für die Anwendung im Lebensmittelbereich sind. Das Eigenaroma der übrigen Zutaten wird nicht maskiert und kann sich daher optimal entfalten.

Die erfindungsgemäßen Apfelfasern werden aus Äpfeln gewonnen und stellen so natürliche Inhaltsstoffe mit bekannten positiven Eigenschaften dar.

Der saure Aufschluss im Schritt (b) des Verfahrens dient der Entfernung von Pektin durch Überführung des Protopektins in lösliches Pektin und gleichzeitiger Aktivierung der Faser durch Vergrößerung der inneren Oberfläche. Weiterhin wird das Rohmaterial durch den Aufschluss thermisch zerkleinert. Durch die saure Inkubation im wässrigen Milieu unter Einwirkung von Hitze zerfällt es in Apfelfasern. Damit wird eine thermische Zerkleinerung erreicht, ein mechanischer Zerkleinerungsschritt ist im Rahmen des Herstellungsverfahrens somit nicht notwendig. Dies stellt einen entscheidenden Vorteil gegenüber herkömmlichen Faser-Herstellungsverfahren dar, die im Gegensatz dazu einen Scherungsschritt (wie beispielsweise durch eine (Hoch-)Druckhomogenisierung) benötigen, um eine Faser mit ausreichenden rheologischen Eigenschaften zu erhalten.

Durch den sauren Aufschluss als Prozessschritt im Herstellungsverfahren kann die Faserstruktur aufgeschlossen werden und durch anschließende alkoholische Waschschritte mit schonendem Trocknen diese Struktur entsprechend aufrechterhalten werden.

Aufgrund des sauren Extraktionsschritts weist die aktivierte, pektinhaltige Apfelfaser erfindungsgemäß weniger als 10 Gew%, bevorzugt weniger als 8 Gew% und besonders bevorzugt weniger als 6 Gew% an wasserlöslichem Pektin aufweist. Die aktivierte, pektinhaltige Apfelfaser weist vorteilhafterweise einen wasserlöslichen Pektingehalt von zwischen 2 Gew% und 8 Gew% und besonders bevorzugt von zwischen 2 und 6 Gew% auf. Der Gehalt an wasserlöslichem Pektin in dieser Apfelfaser kann beispielsweise 2 Gew%, 3 Gew%, 4 Gew%, 5 Gew%, 6 Gew%, 7 Gew%, 8 Gew%, 9 Gew% oder 9,5 Gew% betragen.

Das Rohmaterial liegt bei dem Aufschluss im Schritt (b) als wässrige Suspension vor. Eine Suspension ist gemäß der Erfindung ein heterogenes Stoffgemisch aus einer Flüssigkeit und darin fein verteilten Festkörpern (Rohmaterial-Partikel). Da die Suspension zur Sedimentation und Phasentrennung tendiert, werden die Partikel geeignetermaßen durch Schütteln oder Rühren in der Schwebe gehalten. Es liegt somit keine Dispersion vor, bei der die Partikel durch mechanische Einwirkung (Scherung) so zerkleinert werden, dass sie feindispers vorliegen.

Zur Erzielung eines sauren pH-Wertes im Schritt (b) kann der Fachmann auf alle ihm bekannten Säuren oder sauren Pufferlösungen zurückgreifen. So kann beispielsweise eine organische Säure wie Citronensäure eingesetzt werden.

Alternativ oder in Kombination hierzu kann auch eine Mineralsäure eingesetzt werden. Beispielhaft seien erwähnt: Schwefelsäure, Salzsäure, Salpetersäure oder schweflige Säure. Bevorzugt wird Schwefelsäure eingesetzt.

Bei dem sauren Aufschluss im Schritt (b) des Verfahrens liegt der pH-Wert der Suspension zwischen pH = 0,5 und pH = 4,0, bevorzugt zwischen pH = 1,0 und pH = 3,5 und besonders bevorzugt zwischen pH = 1,5 und pH = 3,0.

Erfindungsgemäß besteht die Flüssigkeit zur Herstellung der wässrigen Suspension zu mehr als 50 Vol%, bevorzugt zu mehr als 60, 70, 80 oder sogar 90 Vol% aus Wasser. In einer bevorzugten Ausführungsform enthält die Flüssigkeit kein organisches Lösungsmittel und insbesondere keinen Alkohol. Damit liegt eine wasserbasierte saure Extraktion vor.

In einer Ausführungsform erfolgt bei dem Herstellungsverfahren und insbesondere bei dem sauren Aufschluss im Schritt (b) keine enzymatische Behandlung des Rohmaterials durch Zugabe eines Enzyms, insbesondere keine Amylase-Behandlung.

Die Inkubation bei dem sauren Aufschluss im Schritt (b) erfolgt bei einer Temperatur zwischen 60°C und 95°C, bevorzugt zwischen 70°C und 90°C und besonders bevorzugt zwischen 75°C und 85°C.

Die Inkubation im Schritt (b) erfolgt über eine Zeitdauer zwischen 60 min und 10 Stunden und bevorzugt zwischen 2 h und 6 Stunden.

Die wässrige Suspension hat bei dem sauren Aufschluss im Schritt (b) geeignetermaßen eine Trockenmasse von zwischen 0,5 Gew% und 5 Gew%, bevorzugt von zwischen 1 Gew% und 4 Gew%, und besonders bevorzugt von zwischen 1,5 Gew% und 3 Gew%.

Die wässrige Suspension wird während des Aufschlusses im Schritt (b) gerührt oder geschüttelt. Dies erfolgt bevorzugt in kontinuierlicher Weise, damit die Partikel in der Suspension in der Schwebe gehalten werden.

Im Schritt (c) des Verfahrens wird das aufgeschlossene Material von groben Partikeln getrennt. Diese Trennung erfolgt als einstufige oder mehrstufige Trennung.

Bei der ein- oder mehrstufigen Trennung gemäß Schritt (c) ist es vorteilhaft, dass eine Abtrennung von Partikeln mit einer Korngröße von mehr als 1000 μm, bevorzugt von mehr als 500 μm erfolgt. Dadurch werden sowohl grobpartikuläre Bestandteile des Rohmaterials als auch unzureichend aufgeschlossenes Material entfernt.

In vorteilhafter Weise wird das aufgeschlossene Material gemäß Schritt (c) einer mehrstufigen Trennung unterzogen. Hierbei ist es bevorzugt, wenn bei der Abtrennung der groben Partikel stufenweise die Abtrennung von immer feineren Partikeln erfolgt. Dies bedeutet, dass beispielsweise bei einer zweistufigen Trennung beide Stufen eine Abtrennung von größeren Partikel leisten, wobei bei der zweiten Stufe im Vergleich zur ersten Stufe feinere Partikel abgetrennt werden. Damit wird das Material mit jedem Trennungsschritt immer feinpartikulärer.

Besonders vorteilhaft ist hier gemäß Schritt (c) eine zweistufige Trennung mit einer Abtrennung von Partikeln mit einer Korngröße von mehr als 1000 μm in der ersten Stufe und einer Abtrennung von Partikeln mit einer Korngröße von mehr als 500 μm in der zweiten Stufe. Die Abtrennung in diesen beiden Stufen erfolgt vorteilhafterweise mit einer Siebtrommel, einer Passiermaschine oder einer anderen Art der Nasssiebung.

Nach dem sauren Aufschluss im Schritt (b), der Entfernung grober Partikel gemäß Schritt (c) und der Abtrennung des aufgeschlossenen Materials aus der wässrigen Suspension im Schritt (d) wird das abgetrennte Material im Schritt (e) mit einer wässrigen Lösung gewaschen. Durch diesen Schritt können verbliebene wasserlösliche Stoffe, wie beispielsweise fruchteigene Zucker entfernt werden. Gerade die Entfernung von Zucker mit Hilfe dieses Schrittes trägt dazu bei, dass die Apfelfaser weniger adhäsiv ist und damit besser zu prozessieren und anzuwenden ist.

Im Rahmen der Erfindung wird unter der "wässrigen Lösung" die für das Waschen im Schritt (e) eingesetzte wässrige Flüssigkeit verstanden. Das Gemisch aus dieser wässrigen Lösung und dem aufgeschlossenen Material wird als "Waschmixtur" bezeichnet.

Vorteilhafterweise wird das Waschen gemäß Schritt (e) mit Wasser als wässrige Lösung durchgeführt. Besonders vorteilhaft ist hier der Einsatz von deionisiertem Wasser.

In einer Ausführungsform besteht die wässrige Lösung zu mehr als 50 Vol%, bevorzugt zu mehr als 60, 70, 80 oder sogar 90 Vol% aus Wasser. In einer bevorzugten Ausführungsform enthält die wässrige Lösung kein organisches Lösungsmittel und insbesondere keinen Alkohol. Damit liegt eine wasserbasierte Waschung vor und gerade kein Wasser-Alkohol-Austausch wie es bei der Faserwaschung mit einem Gemisch aus Alkohol und Wasser ist, wobei dieses Gemisch mehr als 50 Vol% Alkohol aufweist und typischerweise einen Alkoholgehalt von mehr als 70 Vol% besitzt.

Alternativ kann als wässrige Lösung auch eine Salzlösung mit einer Ionenstärke von I < 0.2 mol / l eingesetzt werden.

Das Waschen gemäß Schritt (e) erfolgt vorteilhafterweise bei einer Temperatur zwischen 30°C und 90°C, bevorzugt zwischen 40°C und 80°C und besonders bevorzugt zwischen 50°C und 70°C.

Die Zeitdauer des Inkontaktbringens im Schritt (e) mit der wässrigen Lösung erfolgt über eine Zeitdauer von zwischen 10 min und 2 Stunden, bevorzugt von zwischen 30 min und einer Stunde.

Bei dem Waschen gemäß Schritt (e) beträgt die Trockenmasse in der Waschmixtur zwischen 0,1 Gew% und 5 Gew%, bevorzugt zwischen 0,5 Gew% und 3 Gew% und besonders bevorzugt von zwischen 1 Gew% und 2 Gew%.

Vorteilhafter wird das Waschen gemäß Schritt (e) unter mechanischer Bewegung der Waschmixtur durchgeführt. Dies erfolgt zweckmäßigerweise mittels Rühren oder Schütteln der Waschmixtur.

Optional kann während der Wäsche im Schritt (e) auch hier eine Abtrennung von Partikeln mit einer Korngröße von mehr als 500 μm bevorzugter von mehr als 400 μm und am bevorzugtesten von mehr als 350 μm erfolgen. Die Abtrennung erfolgt vorteilhafterweise mit einer Passiermaschine oder einer Bandpresse. Dadurch werden sowohl grobpartikuläre Bestandteile des Rohmaterials als auch unzureichend aufgeschlossenes Material entfernt.

Nach dem Waschen mit der wässrigen Lösung im Schritt (e) wird gemäß Schritt (f) das gewaschene Material von der wässrigen Lösung abgetrennt. Diese Abtrennung erfolgt vorteilhafterweise mit einem Dekanter oder einem Separator.

Im Schritt (g) erfolgt dann ein weiterer Waschschritt, der allerdings mit einem organischen Lösungsmittel erfolgt. Hierbei handelt es sich um ein mindestens zweimaliges Waschen mit einem organischen Lösungsmittel.

Das organische Lösungsmittel kann auch als Gemisch aus dem organischen Lösungsmittel und Wasser eingesetzt werden, wobei dieses Gemisch dann mehr als 50 Vol% an organischem Lösungsmittel aufweist und vorzugsweise mehr als 70 Vol% an organischem Lösungsmittel besitzt.

Das organische Lösungsmittel ist vorteilhafterweise ein Alkohol, der ausgewählt sein kann aus der Gruppe bestehend aus Methanol, Ethanol und Isopropanol.

Der Waschschritt im Schritt (g) erfolgt bei einer Temperatur zwischen 40°C und 75°C, bevorzugt zwischen 50°C und 70°C und besonders bevorzugt zwischen 60°C und 65°C.

Die Zeitdauer des Inkontaktbringens mit dem organischen Lösungsmittel im Schritt (g) erfolgt über eine Zeitdauer von zwischen 60 min und 10 h und bevorzugt von zwischen 2 h und 8 h.

Jeder Waschschritt mit dem organischen Lösungsmittel umfasst ein Inkontaktbringen des Materials mit dem organischen Lösungsmittel für eine bestimmte Zeitdauer, gefolgt von der Abtrennung des Materials von dem organischen Lösungsmittel. Für diese Abtrennung wird bevorzugt ein Dekanter oder eine Presse verwendet.

Bei dem Waschen mit dem organischen Lösungsmittel im Schritt (g) beträgt die Trockenmasse in der Waschlösung von zwischen 0,5 Gew% und 15 Gew%, bevorzugt zwischen 1,0 Gew% und 10 Gew%, und besonders bevorzugt zwischen 1,5 Gew% und 5,0 Gew%.

Das Waschen mit dem organischen Lösungsmittel im Schritt (g) wird bevorzugt unter mechanischer Bewegung der Waschmixtur durchgeführt. Bevorzugt wird das Waschen in einem Behälter mit Rührwerk durchgeführt.

Bei dem Waschen mit dem organischen Lösungsmittel im Schritt (g) wird in vorteilhafter Weise eine Vorrichtung zur Vergleichmäßigung der Suspension verwendet. Diese Vorrichtung ist bevorzugt ein Zahnkranzdispergierer.

Nach einer vorteilhaften Ausführungsform erfolgt das Waschen mit dem organischen Lösungsmittel im Schritt (g) im Gegenstromverfahren.

In einer Ausführungsform erfolgt bei dem Waschen mit dem organischen Lösungsmittel im Schritt (g) eine partielle Neutralisation durch Zugabe von NaOH, KOH oder Na- oder K-Salzen.

Bei dem Waschen mit dem organischen Lösungsmittel im Schritt (g) kann zusätzlich auch eine Entfärbung des Materials durchgeführt werden. Diese Entfärbung kann durch Zugabe eines oder mehrerer Oxidationsmittel erfolgen. Beispielhaft seien hier die Oxidationsmittel Chlordioxid und Wasserstoffperoxid erwähnt, die alleine oder in Kombination angewendet werden können.

Nach einer vorteilhaften Ausführungsform nimmt bei dem mindestens zweimaligen Waschen mit einem organischen Lösungsmittel in Schritt (g) die finale Konzentration des organischen Lösungsmittels in der Lösung mit jedem Waschschritt zu. Durch diesen inkrementell steigenden Anteil an organischem Lösungsmittel wird der Wasseranteil in dem Fasermaterial kontrolliert verringert, so dass die rheologischen Eigenschaften der Fasern bei den nachfolgenden Schritten zur Lösungsmittelentziehung und Trocknung erhalten bleiben und kein Kollabieren der aktivierten Faserstruktur erfolgt.

Vorzugsweise beträgt die finale Konzentration des organischen Lösungsmittels im ersten Waschschritt zwischen 60 bis 70 Vol.-%, im zweiten Waschschritt zwischen 70 und 85 Vol.-% und in einem optionalen dritten Waschschritt zwischen 80 und 90 Vol.-%.

Gemäß dem optionalen Schritt (h) kann der Anteil des Lösungsmittels zusätzlich durch Inkontaktbringen des Materials mit Wasserdampf verringert werden. Dies wird vorzugsweise mit einem Stripper durchgeführt, bei dem das Material im Gegenstrom mit Wasserdampf als Strippgas in Kontakt gebracht wird.

Im Schritt (i) erfolgt das Trocknen des gewaschenen Materials aus Schritt (g) oder des gestrippten Materials aus Schritt (h), wobei das Trocknen eine Vakuumtrocknung umfasst und bevorzugt aus dem Vakuumtrocknen besteht. Bei der Vakuumtrocknung wird das gewaschene Material als Trockengut einem Unterdruck ausgesetzt, was den Siedepunkt reduziert und somit auch bei niedrigen Temperaturen zu einer Verdampfung des Wassers führt. Die dem Trockengut kontinuierlich entzogene Verdampfungswärme wird geeigneterweise bis zur Temperaturkonstanz von außen nachgeführt. Die Vakuumtrocknung hat den Effekt, dass sie den Gleichgewichtsdampfdruck erniedrigt, was den Kapillartransport begünstigt. Dies hat sich insbesondere für das vorliegende Apfelfasermaterial als vorteilhaft herausgestellt, da hierdurch die aktivierten geöffneten Faserstrukturen und damit die hieraus resultierenden rheologischen Eigenschaften erhalten bleiben. Vorzugsweise erfolgt die Vakuumtrocknung bei einem absoluten Unterdruck von weniger als 400 mbar, bevorzugt von weniger als 300 mbar, weiterhin bevorzugt von weniger als 250 mbar und insbesondere bevorzugt von weniger als 200 mbar.

Die Trocknung unter Vakuum im Schritt (i) erfolgt zweckmäßigerweise bei einer Mantel Temperatur von zwischen 40°C und 100°C, bevorzugt von zwischen 50°C und 90°C und besonders bevorzugt von zwischen 60°C und 80°C. Im Anschluss an die Trocknung wird das Produkt zweckmäßigerweise auf Raumtemperatur abgekühlt.

Gemäß einer vorteilhaften Ausführungsform umfasst das Verfahren nach dem Trocknen in Schritt (i) zusätzlich einen Zerkleinerungs-, Vermahlungs- oder Siebschritt. Dieser ist vorteilhafterweise so ausgestaltet, dass als Ergebnis 90 Gew% der Partikel eine Korngröße von weniger 400 $\mu$m, bevorzugt eine Korngröße von weniger als 350 $\mu$m und insbesondere eine Korngröße von weniger als 300 $\mu$m aufweisen. Bei dieser Korngröße ist die Faser gut dispergierbar und zeigt ein optimales Quellvermögen.

Die für die erfindungsgemäße Verwendung eingesetzte aktivierte pektinhaltige Apfelfaser und ein Verfahren zu ihrer Herstellung wird in der Anmeldung DE 10 2020 122 520.2 offenbart.

## Die aktivierte pektinhaltige Citrusfaser

In einer alternativen erfindungsgemäßen Ausführungsform wird für die Feintexturkomponente b. als Texturierungsmittel eine aktivierte pektinhaltige Citrusfaser eingesetzt. Durch den sauren Aufschluss als Prozessschritt im Herstellungsverfahren kann die Faserstruktur aufgeschlossen werden und durch anschließende alkoholische Waschschritte mit schonendem Trocknen diese Struktur entsprechend aufrechterhalten werden.

Aufgrund des sauren Extraktionsschritts ist der Pektingehalt der aktivierten pektinhaltigen Citrusfaser stark reduziert, so dass diese Citrusfaser erfindungsgemäß weniger als 10 Gew%, bevorzugt weniger als 8 Gew% und besonders bevorzugt weniger als 6 Gew% an wasserlöslichem Pektin aufweist. Der Gehalt an wasserlöslichem Pektin in dieser Citrusfaser kann beispielsweise 2 Gew%, 3 Gew%, 4 Gew%, 5 Gew%, 6 Gew%, 7 Gew%, 8 Gew% oder 9 Gew% betragen.

Bei diesem residualen wasserlöslichen Pektin handelt es sich um hochverestertes Pektin. Unter einem hochveresterten Pektin wird erfindungsgemäß ein Pektin verstanden, das einen Veresterungsgrad von mindestens 50% besitzt. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JECFA (Monograph 19-2016, Joint FAO/WHO Expert Committee on Food Additives) bestimmt werden.

Die aktivierte pektinhaltige Citrusfaser hat nach einer vorteilhaften Ausführungsform in einer 4 Gew%igen wässrigen Suspension eine Festigkeit von mindestens 150 g, besonders vorteilhaft von mindestens 220 g.

Die aktivierte pektinhaltige Citrusfaser hat vorteilhafterweise ein Wasserbindevermögen von mehr als 22 g/g. Ein solch vorteilhaft hohes Wasserbindevermögen führt zu einer hohen Viskosität und über diese dann auch zu einem geringeren Faserverbrauch bei cremiger Textur.

In einer Ausführungsform weist die aktivierte pektinhaltige Citrusfaser in einer 2,5 Gew%igen Suspension eine Fließgrenze II (Rotation) von mehr als 1,5 Pa und vorteilhafterweise von mehr als 2,0 Pa auf. Bei einer 2,5 Gew%igen Faserdispersion hat die aktivierte pektinhaltige Citrusfaser erfindungsgemäß entsprechend eine Fließgrenze I (Rotation) von mehr als 5,5 Pa und vorteilhafterweise von mehr als 6,0 Pa.

Gemäß einer weiteren Ausführungsform hat die aktivierte pektinhaltige Citrusfaser in einer 2,5 Gew%igen Suspension eine Fließgrenze II (Cross Over) von mehr als 1,2 Pa und vorteilhafterweise von mehr als 1,5 Pa. Bei einer 2,5 Gew%igen Faserdispersion hat die aktivierte pektinhaltige Citrusfaser eine Fließgrenze I (Cross Over) von mehr als 6,0 Pa und vorteilhafterweise von mehr als 6,5 Pa.

In einer Ausführungsform hat die aktivierte pektinhaltige Citrusfaser eine dynamische Weissenbergzahl in der Fasersuspension von mehr als 7,0, vorteilhafterweise von mehr als 7,5 und besonders vorteilhaft von mehr als 8,0. Nach Scheraktivierung hat die aktivierte pektinhaltige Citrusfaser entsprechend eine dynamische Weissenbergzahl in der Faserdispersion von mehr als 6,0, vorteilhafterweise von mehr als 6,5 und besonders vorteilhaft von mehr als 7,0.

Zur Bestimmung der Fließgrenze I (Rotation), Fließgrenze I (Cross over) und der dynamischen Weißenbergzahl einer 2,5 Gew%igen Dispersion wird die Citrusfaser in demineralisiertem Wasser mit der in den Beispielen offenbarten Methode als 2,5 Gew%ige Lösung dispergiert.

Zur Bestimmung der Fließgrenze II (Rotation), Fließgrenze II (Cross over) und der dynamischen Weißenbergzahl einer 2,5 Gew%igen Suspension wird die Citrusfaser in demineralisiertem Wasser mit der in den Beispielen offenbarten Methode als 2,5 Gew%ige Lösung suspendiert.

Vorzugsweise weist die aktivierte pektinhaltige Citrusfaser eine Viskosität von mindestens 650 mPas auf, wobei die aktivierte pektinhaltige Citrusfaser in Wasser als 2,5 Gew%ige Lösung dispergiert wird und die Viskosität mit einer Scherrate von 50 s$^{-1}$ bei 20°C gemessen wird.

Zur Viskositätsbestimmung wird die aktivierte pektinhaltige Citrusfaser in demineralisiertem Wasser mit der in den Beispielen offenbarten Methode als 2,5 Gew%ige Lösung dispergiert und die Viskosität bei 20°C und vier Scherabschnitten (erster und dritter Abschnitt = konstantes Profil; zweiter und vierter Abschnitt = lineare Rampe; Messung jeweils bei einer Schergeschwindigkeit von 50 s$^{-1}$) bestimmt (Rheometer; Physica MCR Serie, Messkörper CC25 (entspricht Z3 DIN), Fa. Anton Paar, Graz, Österreich). Eine aktivierte pektinhaltige Citrusfaser mit dieser hohen Viskosität hat den Vorteil, dass für das Andicken des Endprodukts geringere Mengen an Fasern notwendig sind. Zudem erzeugt die Faser damit eine cremige Textur.

Gemäß einer Ausführungsform weist die aktivierte pektinhaltige Citrusfaser eine Feuchtigkeit von weniger als 15 Gew%, bevorzugt von weniger als 10 Gew% und besonders bevorzugt von weniger als 8 Gew% auf.

Es ist auch bevorzugt, dass die aktivierte pektinhaltige Citrusfaser in 1,0 Gew%iger wässriger Suspension einen pH-Wert von 3,1 bis 4,75 und bevorzugt von 3,4 bis 4,2 aufweist.

Die aktivierte pektinhaltige Citrusfaser hat vorteilhaftweise eine Korngröße, bei der mindestens 90 Gew% der Partikel kleiner als 250 $\mu$m, bevorzugt kleiner als 200 $\mu$m und insbesondere kleiner als 150 $\mu$m sind.

Gemäß einer vorteilhaften Ausführungsform hat die aktivierte pektinhaltige Citrusfaser einen Helligkeitswert L* > 90, bevorzugt von L* > 91 und besonders bevorzugt von L* > 92.

In vorteilhafter Weise hat die aktivierte pektinhaltige Citrusfaser einen Ballaststoffgehalt von 80 bis 95 Gew%.

Die erfindungsgemäß verwendete, aktivierte pektinhaltige Citrusfaser liegt vorzugsweise in Pulverform vor. Dies hat den Vorteil, dass hiermit eine Formulierung mit geringem Gewicht und hoher Lagerstabilität vorliegt, die auch prozesstechnisch in einfacher Weise eingesetzt werden kann. Diese Formulierung wird erst durch die erfindungsgemäß verwendete, aktivierte pektinhaltige Citrusfaser ermöglicht, die im Gegensatz zu modifizierten Stärken beim Einrühren in Flüssigkeiten nicht zur Klumpenbildung neigt.

**Herstellung der aktivierten pektinhaltigen Citrusfaser**

Die aktivierte pektinhaltige Citrusfaser ist durch ein Verfahren erhältlich, das die folgenden Schritte umfasst:

(a) Bereitstellen eines Rohmaterials, das Zellwandmaterial einer essbaren Citrusfrucht enthält;
(b) Aufschluss des Rohmaterials durch Inkubation einer wässrigen Suspension des Rohmaterials bei einem sauren pH-Wert;
(c) Ein- oder mehrstufige Trennung des aufgeschlossenen Materials aus Schritt (b) von der wässrigen Suspension;
(d) Waschen des in Schritt (c) abgetrennten Materials mit einer wässrigen Lösung und Abtrennung grober oder nicht aufgeschlossener Partikel;
(e) Trennung des gewaschenen Materials aus Schritt (d) von der wässrigen Lösung;
(f) Mindestens zweimaliges Waschen des abgetrennten Materials aus Schritt (e) mit einem organischen Lösungsmittel und jeweils anschließender Trennung des gewaschenen Materials von dem organischen Lösungsmittel;
(g) Optionale zusätzliche Entfernung des organischen Lösungsmittels durch Inkontaktbringen des gewaschenen Materials aus Schritt (f) mit Wasserdampf;
(h) Trocknen des Materials aus Schritt (f) oder (g) umfassend eine Vakuumtrocknung zum Erhalten der aktivierten pektinhaltigen Citrusfaser.

Als Rohmaterial können Citrusfrüchte und bevorzugt Verarbeitungsrückstände von Citrusfrüchten eingesetzt werden. Als Rohmaterial in dem Verfahren kann entsprechend Citrusschale, (und hier Albedo und/oder Flavedo), Citrusvesikel, Segmentmembranen oder eine Kombination hieraus verwendet werden. In bevorzugter Weise wird als Rohmaterial Citrustrester verwendet, also die Pressrückstände von Citrusfrüchten, die neben den Schalen typischerweise auch das Fruchtfleisch enthalten.

Diese Fasern stellen aktivierte Fasern dar, die in einer wässrigen Suspension eine ausreichende Festigkeit aufweisen, so dass es in der Anwendung keiner zusätzlichen Scherkräfte bedarf, um anwenderseitig die optimalen rheologischen Eigenschaften wie Viskosität oder Texturierung zu erhalten. Die aktivierte pektinhaltige Citrusfaser wird im Rahmen der Anmeldung synonym als pektinhaltige Citrusfaser bezeichnet.

Wie die Erfinder festgestellt haben, weisen die mit diesem Verfahren hergestellten Citrusfasern gute rheologische Eigenschaften auf. Die erfindungsgemäßen Fasern können einfach rehydratisiert werden und die vorteilhaften rheologischen Eigenschaften bleiben auch nach der Rehydratisierung erhalten.

Das vorab beschriebene Herstellungsverfahren führt zu Citrusfasern, die in hohem Maße geschmacks- und geruchsneutral sind und daher vorteilhaft für die Anwendung im Lebensmittelbereich sind. Das Eigenaroma der übrigen Zutaten wird nicht maskiert und kann sich daher optimal entfalten.

Die erfindungsgemäß einzusetzenden Citrusfasern werden aus Citrusfrüchten gewonnen und stellen so natürliche Inhaltsstoffe mit bekannten positiven Eigenschaften dar.

Der saure Aufschluss im Schritt (b) des Verfahrens dient der Entfernung von Pektin durch Überführung des Protopektins in lösliches Pektin und gleichzeitiger Aktivierung der Faser durch Vergrößerung der inneren Oberfläche. Weiterhin wird das Rohmaterial durch den Aufschluss thermisch zerkleinert. Durch die saure Inkubation im wässrigen Milieu unter Einwirkung von Hitze zerfällt es in Citrusfasern. Damit wird eine thermische Zerkleinerung erreicht, ein mechanischer Zerkleinerungsschritt ist im Rahmen des Herstellungsverfahrens damit nicht notwendig. Dies stellt einen entscheidenden Vorteil gegenüber herkömmlichen Faser-Herstellungsverfahren dar, die im Gegensatz dazu einen Scherungsschritt (wie beispielsweise eine (Hoch-)Druckhomogenisierung) benötigen, um eine Faser mit ausreichenden rheologischen Eigenschaften zu erhalten.

Durch den sauren Aufschluss als Prozessschritt im Herstellungsverfahren kann die Faserstruktur aufgeschlossen werden und durch anschließende alkoholische Waschschritte mit schonendem Trocknen diese Struktur entsprechend aufrechterhalten werden.

Aufgrund des sauren Extraktionsschritts weist die aktivierte, pektinhaltige Citrusfaser erfindungsgemäß weniger als 10 Gew%, bevorzugt weniger als 8 Gew% und besonders bevorzugt weniger als 6 Gew% an wasserlöslichem Pektin aufweist. Die aktivierte, pektinhaltige Citrusfaser weist vorteilhafterweise einen wasserlöslichen Pektingehalt von zwischen 2 Gew% und 8 Gew% und besonders bevorzugt von zwischen 2 und 6 Gew% auf. Der Gehalt an wasserlöslichem Pektin in dieser Citrusfaser kann beispielsweise 2 Gew%, 3 Gew%, 4 Gew%, 5 Gew%, 6 Gew%, 7 Gew%, 8 Gew%, 9 Gew% oder 9,5 Gew% betragen.

Das Rohmaterial liegt bei dem Aufschluss im Schritt (b) als wässrige Suspension vor. Eine Suspension ist gemäß der Erfindung ein heterogenes Stoffgemisch aus einer Flüssigkeit und darin fein verteilten Festkörpern (Rohmaterial-Partikel). Da die Suspension zur Sedimentation und Phasentrennung tendiert, werden die Partikel geeignetermaßen durch Schütteln oder Rühren in der Schwebe gehalten. Es liegt somit keine Dispersion vor, bei der die Partikel durch mechanische Einwirkung (Scherung) so zerkleinert werden, dass sie feindispers vorliegen.

Zur Erzielung eines sauren pH-Wertes im Schritt (b) kann der Fachmann auf alle ihm bekannten Säuren oder sauren Pufferlösungen zurückgreifen. So kann beispielsweise eine organische Säure wie Citronensäure eingesetzt werden.

Alternativ oder in Kombination hierzu kann auch eine Mineralsäure eingesetzt werden. Beispielhaft seien erwähnt: Schwefelsäure, Salzsäure, Salpetersäure oder schweflige Säure. Bevorzugt wird Salpetersäure eingesetzt.

Bei dem sauren Aufschluss im Schritt (b) des Verfahrens liegt der pH-Wert der Suspension zwischen pH = 0,5 und pH = 4,0, bevorzugt zwischen pH = 1,0 und pH = 3,5 und besonders bevorzugt zwischen pH = 1,5 und pH = 3,0.

Die Inkubation bei dem sauren Aufschluss im Schritt (b) erfolgt bei einer Temperatur zwischen 60°C und 95°C, bevorzugt zwischen 70°C und 90°C und besonders bevorzugt zwischen 75°C und 85°C.

Erfindungsgemäß besteht die Flüssigkeit zur Herstellung der wässrigen Suspension zu mehr als 50 Vol%, bevorzugt zu mehr als 60, 70, 80 oder sogar 90 Vol% aus Wasser. In einer bevorzugten Ausführungsform enthält die Flüssigkeit kein organisches Lösungsmittel und insbesondere keinen Alkohol. Damit liegt eine wasserbasierte saure Extraktion vor.

In einer Ausführungsform erfolgt bei dem Herstellungsverfahren und insbesondere bei dem sauren Aufschluss im Schritt (b) keine enzymatische Behandlung des Rohmaterials durch Zugabe eines Enzyms, insbesondere keine Amylase-Behandlung.

Die Inkubation im Schritt (b) erfolgt über eine Zeitdauer zwischen 60 min und 8 Stunden und bevorzugt zwischen 2 h und 6 Stunden.

Die wässrige Suspension hat bei dem sauren Aufschluss im Schritt (b) geeignetermaßen eine Trockenmasse von zwischen 0,5 Gew% und 5 Gew%, bevorzugt von zwischen 1 Gew% und 4 Gew%, und besonders bevorzugt von zwischen 1,5 Gew% und 3 Gew%.

Die wässrige Suspension wird während des Aufschlusses im Schritt (b) gerührt oder geschüttelt. Dies erfolgt bevorzugt in kontinuierlicher Weise, damit die Partikel in der Suspension in der Schwebe gehalten werden.

Im Schritt (c) des Verfahrens wird das aufgeschlossene Material von der wässrigen Lösung getrennt und damit zurückgewonnen. Diese Trennung erfolgt als einstufige oder mehrstufige Trennung.

In vorteilhafter Weise wird das aufgeschlossene Material gemäß Schritt (c) einer mehrstufigen Trennung unterzogen. Hierbei ist es bevorzugt, wenn bei der Trennung von der wässrigen Suspension stufenweise die Abtrennung von immer feineren Partikeln erfolgt. Dies bedeutet, dass beispielsweise bei einer zweistufigen Trennung beide Stufen eine Abtrennung von größeren Partikel leisten, wobei bei der zweiten Stufe im Vergleich zur ersten Stufe feinere Partikel abgetrennt werden, um eine möglichst vollständige Abtrennung der Partikel aus der wässrigen Suspension zu erzielen. Bevorzugt erfolgt die erste Abtrennung von Partikeln mit Dekantern und die zweite Abtrennung mit Separatoren. Damit wird das Material mit jedem Trennungsschritt immer feinpartikulärer.

Nach dem sauren Aufschluss im Schritt (b) und der Abtrennung des aufgeschlossenen Materials im Schritt (c), wird das abgetrennte Material im Schritt (d) mit einer wässrigen Lösung gewaschen. Durch diesen Schritt können verbliebene wasserlösliche Stoffe, wie beispielsweise Zucker entfernt werden. Gerade die Entfernung von Zucker mit Hilfe dieses Schrittes trägt dazu bei, dass die Citrusfaser weniger adhäsiv ist und damit besser zu prozessieren und anzuwenden ist.

Im Rahmen der Erfindung wird unter der "wässrigen Lösung" die für das Waschen im Schritt (d) eingesetzte wässrige Flüssigkeit verstanden. Das Gemisch aus dieser wässrigen Lösung und dem aufgeschlossenen Material wird als "Waschmixtur" bezeichnet.

Vorteilhafterweise wird das Waschen gemäß Schritt (d) mit Wasser als wässriger Lösung durchgeführt. Besonders vorteilhaft ist hier der Einsatz von deionisiertem Wasser.

In einer Ausführungsform besteht die wässrige Lösung zu mehr als 50 Vol%, bevorzugt zu mehr als 60, 70, 80 oder sogar 90 Vol% aus Wasser. In einer bevorzugten Ausführungsform enthält die wässrige Lösung kein organisches Lösungsmittel und insbesondere keinen Alkohol. Damit liegt eine wasserbasierte Waschung vor und gerade kein Wasser-Alkohol-Austausch wie es bei der Faserwaschung mit einem Gemisch aus Alkohol und Wasser ist, wobei dieses Gemisch mehr als 50 Vol% Alkohol aufweist und typischerweise einen Alkoholgehalt von mehr als 70 Vol% besitzt.

Alternativ kann als wässrige Lösung auch eine Salzlösung mit einer Ionenstärke von I < 0.2 mol / l eingesetzt werden.

Das Waschen gemäß Schritt (d) erfolgt vorteilhafterweise bei einer Temperatur zwischen 30°C und 90°C, bevorzugt zwischen 40°C und 80°C und besonders bevorzugt zwischen 50°C und 70°C.

Die Zeitdauer des Inkontaktbringens mit der wässrigen Lösung erfolgt über eine Zeitdauer von zwischen 10 min und 2 Stunden, bevorzugt von zwischen 30 min und einer Stunde.

Bei dem Waschen gemäß Schritt (d) beträgt die Trockenmasse in der Waschmixtur zwischen 0,1 Gew% und 5 Gew%, bevorzugt zwischen 0,5 Gew% und 3 Gew% und besonders bevorzugt von zwischen 1 Gew% und 2 Gew%.

Vorteilhafter wird das Waschen gemäß Schritt (d) unter mechanischer Bewegung der Waschmixtur durchgeführt. Dies erfolgt zweckmäßiger mittels Rühren oder Schütteln der Waschmixtur.

Beim Waschen erfolgt gemäß Schritt (d) eine Abtrennung grober oder nicht aufgeschlossener Partikel. Vorteilhaft handelt es hier um eine Abtrennung von Partikeln mit einer Korngröße von mehr als 500 $\mu$m, bevorzugter von mehr als 400 $\mu$m und am bevorzugtesten von mehr als 350 $\mu$m.

Die Abtrennung erfolgt vorteilhafterweise mit einer Nasssiebung. Es kann hierzu eine Passiermaschine oder einer Bandpresse verwendet werden. Dadurch werden damit sowohl grobpartikuläre Verunreinigungen des Rohmaterials als auch unzureichend aufgeschlossenes Material entfernt.

Nach dem Waschen mit der wässrigen Lösung wird gemäß Schritt (e) das gewaschene Material von der wässrigen Lösung abgetrennt. Diese Abtrennung erfolgt vorteilhafterweise mit einem Dekanter oder einem Separator.

Im Schritt (f) erfolgt dann ein weiterer Waschschritt, der allerdings mit einem organischen Lösungsmittel erfolgt. Hierbei handelt es sich um ein mindestens zweimaliges Waschen mit einem organischen Lösungsmittel.

Das organische Lösungsmittel kann auch als Gemisch aus dem organischen Lösungsmittel und Wasser eingesetzt werden, wobei dieses Gemisch dann mehr als 50 Vol% an organischem Lösungsmittel aufweist und vorzugsweise mehr als 70 Vol% an organischem Lösungsmittel besitzt.

Das organische Lösungsmittel im Schritt (f) ist vorteilhafterweise ein Alkohol, der ausgewählt sein kann aus der Gruppe bestehend aus Methanol, Ethanol und Isopropanol.

Der Waschschritt im Schritt (f) erfolgt bei einer Temperatur zwischen 40°C und 75°C, bevorzugt zwischen 50°C und 70°C und besonders bevorzugt 60°C und 65°C.

Die Zeitdauer des Inkontaktbringens im Schritt (f) mit dem organischen Lösungsmittel erfolgt über eine Zeitdauer von zwischen 60 min und 10 h und bevorzugt von zwischen 2 h und 8 h.

Jeder Waschschritt mit dem organischen Lösungsmittel umfasst ein Inkontaktbringen des Materials mit dem organischen Lösungsmittel für eine bestimmte Zeitdauer, gefolgt von der Abtrennung des Materials von dem organischen Lösungsmittel. Für diese Abtrennung wird bevorzugt ein Dekanter oder eine Presse verwendet.

Bei dem Waschen mit dem organischen Lösungsmittel im Schritt (f) beträgt die Trockenmasse in der Waschlösung von zwischen 0,5 Gew% und 15 Gew%, bevorzugt zwischen 1,0 Gew% und 10 Gew%, und besonders bevorzugt zwischen 1,5 Gew% und 5,0 Gew%.

Das Waschen mit dem organischen Lösungsmittel im Schritt (f) wird bevorzugt unter mechanischer Bewegung der Waschmixtur durchgeführt. Bevorzugt wird das Waschen in einem Behälter mit Rührwerk durchgeführt.

Bei dem Waschen mit dem organischen Lösungsmittel im Schritt (f) wird in vorteilhafter Weise eine Vorrichtung zur Vergleichmäßigung der Suspension verwendet. Diese Vorrichtung ist bevorzugt ein Zahnkranzdispergierer.

Nach einer vorteilhaften Ausführungsform erfolgt das Waschen im Schritt (f) mit dem organischen Lösungsmittel im Gegenstromverfahren.

In einer Ausführungsform erfolgt bei dem Waschen im Schritt (f) mit dem organischen Lösungsmittel eine partielle Neutralisation durch Zugabe von Na- oder K-Salzen, NaOH oder KOH.

Bei dem Waschen mit dem organischen Lösungsmittel im Schritt (f) kann zusätzlich auch eine Entfärbung des Materials durchgeführt werden. Diese Entfärbung kann durch Zugabe eines oder mehrerer Oxidationsmittel erfolgen. Beispielhaft seien hier die Oxidationsmittel Chlordioxid und Wasserstoffperoxid erwähnt, die alleine oder in Kombination angewendet werden können.

Nach einer vorteilhaften Ausführungsform nimmt bei dem mindestens zweimaligen Waschen mit einem organischen Lösungsmittel im Schritt (f) die finale Konzentration des organischen Lösungsmittels in der Lösung mit jedem Waschschritt zu. Durch diesen inkrementell steigenden Anteil an organischem Lösungsmittel wird der Wasseranteil in dem Fasermaterial kontrolliert verringert, so dass die rheologischen Eigenschaften der Fasern bei den nachfolgenden Schritten zur Lösungsmittelentziehung und Trocknung erhalten bleiben und kein Kollabieren der aktivierten Faserstruktur erfolgt.

Vorzugsweise beträgt die finale Konzentration des organischen Lösungsmittels im ersten Waschschritt zwischen 60 bis 70 Vol.-%, im zweiten Waschschritt zwischen 70 und 85 Vol.-% und in einem optionalen dritten Waschschritt zwischen 80 und 90 Vol.-%.

Gemäß dem optionalen Schritt (g) kann das Lösungsmittel zusätzlich durch Inkontaktbringen des Materials mit Wasserdampf verringert werden. Dies wird vorzugsweise mit einem Stripper durchgeführt, bei dem das Material im Gegenstrom mit Wasserdampf als Strippgas in Kontakt gebracht wird.

Im Schritt (h) erfolgt das Trocknen des gewaschenen Materials aus Schritt (f) oder des gestrippten Materials aus Schritt (g), wobei das Trocknen eine Vakuumtrocknung umfasst und bevorzugt aus dem Vakuumtrocknen besteht. Bei der Vakuumtrocknung wird das gewaschene Material als Trockengut einem Unterdruck ausgesetzt, was den Siedepunkt reduziert und somit auch bei niedrigen Temperaturen zu einer Verdampfung des Wassers führt. Die dem Trockengut kontinuierlich entzogene Verdampfungswärme wird geeigneterweise bis zur Temperaturkonstanz von außen nachgeführt. Die Vakuumtrocknung hat den Effekt, dass sie den Gleichgewichtsdampfdruck erniedrigt, was den Kapillartransport begünstigt. Dies hat sich insbesondere für das vorliegende Citrusfasermaterial als vorteilhaft herausgestellt, da hierdurch die aktivierten geöffneten Faserstrukturen und damit die hieraus resultierenden rheologischen Eigenschaften erhalten bleiben. Vorzugsweise erfolgt die Vakuumtrocknung bei einem Unterdruck von weniger als 400 mbar, bevorzugt von weniger als 300 mbar, weiterhin bevorzugt von weniger als 250 mbar und insbesondere bevorzugt von weniger als 200 mbar.

Die Trocknung unter Vakuum im Schritt (h) erfolgt zweckmäßigerweise bei einer MantelTemperatur von zwischen 40°C und 100°C, bevorzugt von zwischen 50°C und 90°C und besonders bevorzugt von zwischen 60°C und 80°C. Im Anschluss an die Trocknung wird das Produkt zweckmäßigerweise auf Raumtemperatur abgekühlt.

Gemäß einer vorteilhaften Ausführungsform umfasst das Verfahren nach dem Trocknen in Schritt (h) zusätzlich einen Zerkleinerungs-, Vermahlungs- oder Siebschritt. Dieser ist vorteilhafterweise so ausgestaltet, dass als Ergebnis 90 Gew% der Partikel eine Korngröße von weniger 250 $\mu$m, bevorzugt eine Korngröße von weniger als 200 $\mu$m und insbesondere eine Korngröße von weniger als 150 $\mu$m aufweisen. Bei dieser Korngröße ist die Faser gut dispergierbar und zeigt ein optimales Quellvermögen.

Die für die erfindungsgemäße Verwendung eingesetzte aktivierte pektinhaltige Citrusfaser und ein Verfahren zu ihrer Herstellung wird in der Anmeldung DE 10 2020 122 518.0 offenbart.

Gemäß einer bevorzugten Ausgestaltung des erfindungsgemäßen Mehrkomponentensystems liegt die Feintexturkomponente b. in pastöser Form vor. Liegt die Feintexturkomponente in pastöser Form vor, so gelingt ein besonders schnelles und gleichmäßiges Einstellen der Textur.

Besonders vorteilhaft ist es, wenn die Feintexturkomponente b. neben den rheologischen Eigenschaften auch die geschmacklichen Eigenschaften der Soße oder Suppe beeinflusst. Gemäß einer bevorzugten Ausgestaltung der Erfindung enthält die Feintexturkomponente b. somit einen Aromastoff. Gemäß einer weiteren bevorzugten Ausgestaltung enthält die Feintexturkomponente b. mindestens zwei Aromastoffe oder mindestens drei Aromastoffe oder mindestens vier Aromastoffe oder mindestens fünf Aromastoffe. Durch den Einsatz eines oder mehrerer Aromastoffe in der Feintexturkomponente b. lässt sich der Geschmack und/oder der Geruch der Soße oder Suppe optimal einstellen und flexibel variieren.

Unter dem Begriff "Aromastoff" im Sinne der Erfindung ist ein chemischer Stoff oder ein chemisches Stoffgemisch gemeint, welches einen spezifischen Geruch und/oder Geschmack beim Menschen hervorrufen kann. Dies erfolgt im Wesentlichen durch das Binden spezifischer Geschmacksrezeptoren im Menschen durch den Aromastoff.

Besonders bevorzugt enthält die Feintexturkomponente b. einen natürlichen Aromastoff. Gemäß einer weiteren bevorzugten Ausgestaltung enthält die Feintexturkomponente b. mindestens zwei natürliche Aromastoffe oder mindestens drei natürliche Aromastoffe oder mindestens vier natürliche Aromastoffe oder mindestens fünf natürliche Aromastoffe. Mit natürlichen Aromastoffen lässt sich besonders gut der gewünschte Geschmack erzielen. Zudem werden natürliche Aromastoffe von Verbrauchern besonders gut angenommen.

Unter dem Begriff "natürlicher Aromastoff" im Sinne der Erfindung ist hierbei ein Aromastoff gemeint, der aus natürlichen Quellen, beispielsweise und vorzugsweise aus Pflanzen, insbesondere mittels Extraktion, gewonnen wird. Im Gegensatz zu einem natürlichen Aromastoff steht ein synthetischer Aromastoff, der im Labor mittels synthetischer Verfahren hergestellt wird.

Mit dem Aromastoff oder der Kombination mehrerer Aromastoffe lassen sich ganz unterschiedliche Geschmacksrichtungen für die Soße oder Suppe erzielen. So kann die Feintexturkomponente b. als Geschmacksrichtung beispielsweise Ente, Gans, Schwein, Wild, Lamm, Rind, Kalb, Huhn, Fisch, Krustentiere, Gemüse, Röstgemüse, Trüffel, Steinpilz, Champignon, Zwiebel, Knoblauch, Orange, Zitrone, Limone, Rauch, Essig, Essiggurke, Kapern, Butter, Senf, Curry, Safran, Kresse, Thymian, Basilikum, Rosmarin, Muskatnuss, Wacholder oder Lorbeer aufweisen. Die Feintexturkomponente b. kann auch einen für Gerichte aus bestimmten Regionen typischen Geschmack wie zum Beispiel Französisch, Asiatisch, skandinavisch oder Afrikanisch aufweisen. Weiter ist es möglich, dass der Geschmack bestimmten Getränken ähnelt, beispielsweise, dass die Textkomponente b. als Geschmacksrichtung Rotwein, Weißwein, Sherry, Portwein, Whiskey oder Cognac aufweist. Andere Geschmacksrichtungen der Feintexturkomponente b. können in Abhängigkeit der eingesetzten Aromastoffe erzielt werden.

Gemäß einer bevorzugten Ausgestaltungsform ist die Feintexturkomponente b. vegan. Unter dem Begriff "vegan" im Sinne der Erfindung ist hierbei gemeint, dass die Feintexturkomponente b. keine Bestandteile tierischen Ursprungs enthält. Dabei kann die Feintexturkomponente b. einen tierähnlichen Geschmack aufweisen, welcher von Testpersonen als nach Huhn, Wild oder Fisch schmeckend wahrgenommen wird, und gleichzeitig vegan sein. Dies gelingt durch einen oder mehrere Aromastoffe, die veganer Natur sind, aber einen Geschmack wie beispielsweise Huhn, Wild oder Fisch nachahmen.

Die Feintexturkomponente b. kann unterschiedliche Bestandteile in breit variierenden Bereichen enthalten. Eine besonders bevorzugte Feintexturkomponente b. des Mehrkomponentensystems zur Herstellung einer Soße oder einer Suppe enthält (1) von 0,1 bis 30 Gew%, vorzugsweise von 0,5 bis 25 Gew%, weiter bevorzugt von 1 bis 15 Gew% oder besonders bevorzugt von 2 bis 10 Gew% aktivierte Pflanzenfaser, (2) von 50 bis 99 Gew%, vorzugsweise von 60 bis 95 Gew%, weiter bevorzugt von 70 bis 92 Gew% und besonders bevorzugt von 78 bis 90 Gew% Wasser, (3) Rest Aromastoffe und weitere Bestandteile, Gew%-Angaben beziehen sich jeweils auf das gesamte Gewicht der Feintexturkomponente b.

## Verfeinerungskomponente

Das erfindungsgemäße Mehrkomponentensystem enthält optional eine Verfeinerungskomponente c. Die Verfeinerungskomponente ermöglicht die optimale individuelle Ausgestaltung der Soße oder Suppe in Abhängigkeit der spezifischen Anwendung.

Als Verfeinerungskomponente können hierbei unterschiedliche Zutaten gewählt werden. So können beispielsweise Kräuter und Gewürze wie Anis, Bärlauch, Basilikum, Bockshornklee, Cayennepfeffer, Chili, Cumin, Curry, Dill, Estragon, Fenchel, Gewürznelke, Ingwer, Kamille, Kardamom, Knoblauch, Koriander, Kümmel, Kurkuma, Meerrettich, Melisse, Muskat, Paprika, Petersilie, Pfeffer, Pfefferminz, Piment, Safran, Salbei, Sternanis, Thymian, Vanille, Wacholderbeeren, Zimt oder Zitronengras als Verfeinerungskomponente eingesetzt werden. Weiterhin kann die Verfeinerungskomponente einen Gemüsebestandteil aufweisen wie Zwiebel, Knoblauch, Schnittlauch, Lauch, Porree, Schalotten oder Frühlingszwiebeln, aufweisen.

In einer weiteren Ausführungsform enthält die Verfeinerungskomponente ein ätherisches Öl, wie ein Zitronenöl, Orangenöl, Basilikumöl, Pfefferminzöl, Vanilleöl, Thymianöl, Lorbeeröl, Zitronengrasöl oder Rosmarinöl oder eine Schale einer ölhaltigen Frucht wie Orangenschale, Zitronenschale oder Limonenschale. Die Verfeinerungskomponente kann auch ein aromatisiertes Speiseöl wie Trüffelöl oder Zitronenöl enthalten oder ein aus einer aromatischen ölhaltigen Frucht durch Pressen gewonnenes Öl wie Sesamöl oder Kürbiskernöl.

Die Verfeinerungskomponente kann auch ein fetthaltiges Lebensmittel, wie Butter, Sahne, Butterfett (Ghee).

In einer Ausführungsform kann die Verfeinerungskomponente aufweisen: Fonds, Beeren oder andere Früchte oder Knospen und deren Bestandteile, Säfte und alkoholhaltige Flüssigkeiten wie Weinbrand oder Wein.

Diesen Materialien können auch schon von anderen Anbietern auch bereits als fertige, direkt einsetzbare Produkte (sog. "Convenience-Produkte) vorliegen wie z.B. Würzpasten wie Ingwerpaste, Knoblauchpaste, Rotweinreduktion, Pilzpulver, Kräuterpasten wie Bärlauch, Basilikum, Majoran, oder als Auszugsöle, wie im Fall: Trüffelöl, Sesamöl oder Kürbiskernöl.

Möglich ist auch der Einsatz eines oder mehrerer Aromastoffe als Verfeinerungskomponente, insbesondere auch von natürlichen Aromastoffen. Die genannten Verfeinerungskomponenten lassen sich auch nach Bedarf zur Herstellung der Soße oder Suppe kombinieren.

**Mehrkomponentensystem**

Das erfindungsgemäße Mehrkomponentensystem enthält

a. eine Grundkomponente, die ein Wasserbindemittel enthält,

b. eine Feintexturkomponente, und

c. optional eine Verfeinerungskomponente.

Die Komponenten können in unterschiedlichen Anteilen zueinander im Mehrkomponentensystem eingesetzt werden, um variabel Soßen und/oder Suppen mit gewünschten Geschmacks- und Textureigenschaften zu erhalten.

Gemäß einer bevorzugten Ausgestaltung der Erfindung weist das Mehrkomponentensystem einen Anteil an Grundkomponente a. von 20 bis 95 Gew%, bevorzugt von 40 bis 90 Gew% oder besonders bevorzugt von 50 bis 80 Gew%, bezogen auf das kombinierte Gewicht der Grundkomponente a. und der Feintexturkomponente b., auf. Entsprechend ist es vorteilhaft, wenn das Mehrkomponentensystem einen Anteil an Feintexturkomponente b. von 5 bis 80 Gew%, insbesondere von 10 bis 60 Gew% oder von 20 bis 50 Gew%, bezogen auf das kombinierte Gewicht der Grundkomponente a. und der Feintexturkomponente b., aufweist.

Das erfindungsgemäße Mehrkomponentensystem weist gemäß einer Ausführungsform einen Anteil an Verfeinerungskomponente c., bezogen auf das Gesamtgewicht der Komponenten a., b. und c., von 0,01 bis 20 Gew%, bevorzugt von 0,1 bis 15 Gew% und besonders bevorzugt von 1 bis 10 Gew%. Bei einem solchen Anteil kann mit der Verfeinerungskomponente der Geschmack der Soße oder Suppe optimal nach individuellen Wünschen justiert werden, ohne die Textur oder den Grundgeschmack der Soße oder Suppe zu stark zu beeinflussen.

Gemäß einer bevorzugten Ausgestaltungsform weisen die Komponenten Grundkomponente a., Feintexturkomponente b. und Verfeinerungskomponente c. des Mehrkomponentensystems einen Gesamtpflanzenfaseranteil von 0,1 bis 40 Gew%, vorzugsweise von 0,5 bis 10 Gew% oder besonders bevorzugt von 1 bis 5 Gew%, bezogen auf das kombinierte Gewicht der Komponenten Grundkomponente a., Feintexturkomponente b. und Verfeinerungskomponente c., auf. Bei einem solchen Anteil an Pflanzenfasern in den Komponenten des Mehrkomponentensystems wird eine Soße oder Suppe mit besonders guten rheologischen Eigenschaften und hervorragendem Kochverhalten erhalten.

In einer besonders vorteilhaften Ausgestaltungsform des erfindungsgemäßen Mehrkomponentensystems enthält die Grundkomponente a. als Wasserbindemittel eine native Pflanzenfaser und die Feintexturkomponente b. eine aktivierte Pflanzenfaser. Es hat sich überraschenderweise herausgestellt, dass sich durch die Wechselwirkung der nativen Pflanzenfaser als Wasserbindemittel in der Grundkomponente a. mit der aktivierten Pflanzenfaser in der Feintexturkomponente b. eine besonders cremige Textur der Soße oder Suppe erzielen lässt. Eine Soße oder Suppe, die aus diesem bevorzugten erfindungsgemäßen Mehrkomponentensystem hergestellt wird, weist ein besonders angenehmes Mundgefühl und eine geringe Rauigkeit auf. Ohne an eine bestimmte wissenschaftliche Theorie gebunden sein zu wollen, scheint dieser überraschende Effekt auf die Verringerung der Faserabstände der nativen Pflanzenfasern durch die aktivierte Pflanzenfaser zurückzuführen zu sein.

**Verwendung**

In einem weiteren Aspekt betrifft die vorliegende Erfindung die Verwendung des erfindungsgemäßen Mehrkomponentensystems zur Herstellung einer Soße oder einer Suppe. Das erfindungsgemäße Mehrkomponentensystem kann zur Herstellung von Soßen oder Suppen im industriellen Maßstab verwendet werden. Vorzugsweise betrifft die Verwendung des erfindungsgemäßen Mehrkomponentensystems die Herstellung von Soßen oder Suppen im gastronomischen Gewerbe, besonders bevorzugt zur frischen Herstellung von Soßen oder Suppen. Hierbei fallen unter den Begriff des gastronomischen Gewerbes grundsätzlich sämtliche Anbieter von Nahrungsmitteln an Kunden zum direkten Verzehr, beispielsweise Restaurants, Bars, Bistros, Hotels, Kneipen, Lieferdienste, Imbisshallen, Kantinen und Mensen. Unter dem Begriff der "frischen Herstellung" ist hierbei die Herstellung einer Soße oder Suppe gemeint, die zum teilweisen oder vollständigen Verzehr in den 24 Stunden nach Herstellung vorgesehen ist.

Das zu dem erfindungsgemäßen Mehrkomponentensystem und zu der Grundkomponente a., der Feintexturkomponente b. und der Verfeinerungskomponente c. des erfindungsgemäßen Mehrkomponentensystems Gesagte gilt gleichermaßen für die erfindungsgemäße Verwendung des Mehrkomponentensystems.

**Verfahren**

In einem weiteren Aspekt betrifft die vorliegende Erfindung ein Verfahren zur Herstellung einer Soße und/oder Suppe durch Einsatz des erfindungsgemäßen Mehrkomponentensystems. Das erfindungsgemäße Verfahren durchläuft die folgenden Schritte:

> (1) Bereitstellen einer Grundkomponente a., einer Feintexturkomponente b. und optional einer Verfeinerungskomponente c.,
> (2) Einbringen der in Schritt (1) bereitgestellten Komponenten in Wasser und Mischen, um eine Mischung zu erhalten,
> (3) Optionales Erhitzen der in Schritt (2) erhaltenen Mischung.

Die Schritte des erfindungsgemäßen Verfahrens können in unterschiedlicher Reihenfolge durchgeführt werden. Insbesondere kann zunächst die Grundkomponente a. in Wasser eingebracht werden, die so erhaltene Lösung oder Suspension gemischt und optional bereits erhitzt werden und erst im Anschluss die Feintexturkomponente b. und optional die Verfeinerungskomponente c. hinzugefügt werden.

Besonders vorteilhafterweise wird zunächst die Grundkomponente a. bereitgestellt, in Wasser eingebracht und gemischt, um eine Mischung zu erhalten. Anschließend wird diese Mischung vorzugsweise erhitzt. Danach wird die Feintexturkomponente b. bereitgestellt und in die Mischung enthaltend die Grundkomponente a. eingebracht und die Mischung wird erneut vermischt. Dabei kann die Mischung zu dem Zeitpunkt des Einbringens der Feintexturkomponente b. erhitzt sein. Abschließend kann die Verfeinerungskomponente c. bereitgestellt und in die Mischung enthaltend Grundkomponente a. und Feintexturkomponente b. eingebracht und mit diesen Komponenten vermischt werden.

Das im erfindungsgemäßen Verfahren eingesetzte Wasser kann bereits Geschmacksträger oder andere Bestandteile enthalten. So kann als Wasser eine Brühe oder ein Fond eingesetzt werden.

Das Verhältnis der Grundkomponente a., der Feintexturkomponente b., der Verfeinerungskomponente c. und dem für die Herstellung der Soße oder Suppe eingesetzten Wassers kann in breiten Bereichen variieren. Vorzugsweise wird auf einen Liter Wasser von 10 bis 150 g, vorzugsweise von 20 bis 100 g, bevorzugt von 30 bis 90 g oder besonders bevorzugt von 40 bis 80 g, Grundkomponente a., von 10 bis 50 g, vorzugsweise von 15 bis 45 g, bevorzugt von 20 bis 40 g oder besonders bevorzugt von 25 bis 35 g, Feintexturkomponente b. und von 1 bis 50 g, vorzugsweise von 5 bis 40 g, Verfeinerungskomponente c., eingesetzt.

Das zu dem erfindungsgemäßen Mehrkomponentensystem und zu der Grundkomponente a., der Feintexturkomponente b. und der Verfeinerungskomponente c. des erfindungsgemäßen Mehrkomponentensystems Gesagte gilt gleichermaßen für das erfindungsgemäße Verfahren.

## Definitionen

Eine "Citrusfaser" gemäß der Anmeldung ist eine hauptsächlich aus Fasern bestehende Komponente, die aus einer nichtverholzten pflanzlichen Zellwand einer Citrusfrucht isoliert wird und hauptsächlich aus Cellulose besteht. Der Begriff der Faser stellt in gewisser Hinsicht ein Misnomer dar, weil die Citrusfasern makroskopisch nicht als Fasern in Erscheinung treten, sondern ein pulverförmiges Produkt darstellen. Weitere Bestandteile der Citrusfaser sind unter anderem Hemicellulose und Pektin. Die Citrusfaser kann vorteilhafterweise aus Citruspulpe, Citrusschale, Citrusvesikel, Segmentmembranen oder einer Kombination hiervon gewonnen werden.

Eine "Apfelfaser" gemäß der Anmeldung ist eine hauptsächlich aus Fasern bestehende Komponente, die aus einer nichtverholzten pflanzlichen Zellwand eines Apfels isoliert wird und hauptsächlich aus Cellulose besteht. Der Begriff der Faser stellt in gewisser Hinsicht ein Misnomer dar, weil die Apfelfasern makroskopisch nicht als Fasern in Erscheinung treten, sondern ein pulverförmiges Produkt darstellen. Weitere Bestandteile der Apfelfaser sind unter anderem Hemicellulose und Pektin.

Ein Apfel ist gemäß der Erfindung definiert als Frucht des Kulturapfels (*Malus domestica*).

Eine aktivierte Apfelfaser gemäß der vorliegenden Anmeldung ist in Abgrenzung von einer aktivierbaren (und damit lediglich partiell-aktivierten) Apfelfaser durch die Fließgrenze der Faser in 2.5 Gew%iger Dispersion definiert. Eine aktivierte Apfelfaser ist damit dadurch gekennzeichnet, dass sie eine Fließgrenze I (Rotation) von mehr als 5,0 Pa oder eine Fließgrenze I (Cross over) von mehr als 5,0 Pa aufweist. Eine aktivierbare Apfelfaser ist damit dadurch gekennzeichnet, dass sie eine Fließgrenze I (Rotation) von zwischen 0,75 - 3,75 Pa oder eine Fließgrenze I (Cross over) von zwischen 0,75 - 4,25 Pa aufweist.

Eine aktivierte Citrusfaser gemäß der vorliegenden Anmeldung ist in Abgrenzung von einer aktivierbaren (und damit lediglich partiell-aktivierten) Citrusfaser durch die Fließgrenze der Faser in 2.5 Gew%iger Dispersion oder durch die Viskosität definiert. Eine aktivierte Citrusfaser ist damit dadurch gekennzeichnet, dass sie eine Fließgrenze I (Rotation) von mehr als 5,5 Pa, eine Fließgrenze I (Cross over) von mehr als 6,0 Pa oder eine Viskosität von mehr als 650 mPa*s aufweist. Eine aktivierbare Citrusfaser ist damit dadurch gekennzeichnet, dass sie eine Fließgrenze I (Rotation) von zwischen 1,0 - 4,0 Pa, eine Fließgrenze I (Cross over) von zwischen 1,0 - 4,5 Pa oder eine Viskosität von 150 bis 600 mPa*s aufweist.

An dieser Stelle sei explizit darauf hingewiesen, dass Merkmale der vorstehend bzw. in den Ansprüchen und/oder Figuren beschriebenen Lösungen gegebenenfalls auch kombiniert werden können, um die erläuterten Merkmale, Effekte und Vorteile entsprechend kumuliert umsetzen bzw. erzielen zu können.

Sämtliche in den Anmeldungsunterlagen offenbarten Merkmale werden als erfindungswesentlich beansprucht, sofern sie einzeln oder in Kombination miteinander gegenüber dem Stand der Technik neu sind.

Es sei noch ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei..." usw., sofern sich nicht aus dem jeweiligen Kontext ausdrücklich ergibt oder es für den Fachmann offensichtlich oder technisch zwingend ist, dass dort nur "genau ein.", "genau zwei." usw. gemeint sein können.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

**Ausführungsbeispiele**

**1 Herstellung einer erfindungsgemäßen Citrus- oder Apfelfaser**

**A. Herstellung einer aktivierbaren pektinhaltigen Citrusfaser**

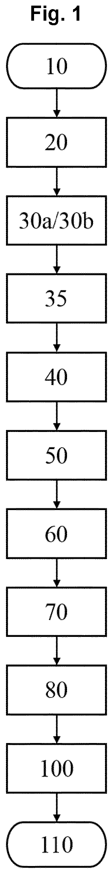

In Figur 1 ist ein Verfahren zur Herstellung der aktivierbaren pektinhaltigen Citrusfaser als Fließdiagramm schematisch dargestellt. Ausgehend von dem Citrus-Trester 10 wird der Trester durch Inkubation in einer aciden Lösung bei 70° bis 80°C durch Hydrolyse 20 aufgeschlossen. Darauf folgen zwei separate Schritte 30a (Dekanter) und 30b (Separator) zur möglichst vollständigen Abtrennung aller Partikel aus der Flüssigphase. Das abgetrennte Material wird im Schritt 35 mit einer wässrigen Lösung gewaschen, aus der dabei erhaltenen Waschmixtur werden durch Nasssiebung grobe oder nicht aufgeschlossene Partikel abgetrennt. Im Schritt 40 erfolgt dann die Abtrennung des Feststoffs von der flüssigen Phase. Anschließend werden zwei Alkoholwaschschritte 50 und 70 mit jeweils anschließender Fest-Flüssigtrennung mittels Dekanter60 und 80 durchgeführt, Im Schritt 100 erfolgt schließlich das schonende Trocknen der Fasern mittels einer Fließbetttrocknung um dann die erfindungsgemäß verwendeten Citrusfasern 110 zu erhalten.

**B. Herstellung einer aktivierbaren pektinhaltigen Apfelfaser**

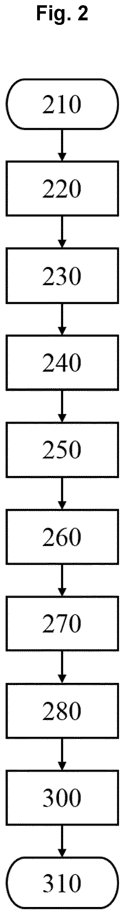

In Figur 2 ist ein Verfahren zur Herstellung der aktivierbaren pektinhaltigen Apfelfaser als Fließdiagramm schematisch dargestellt. Ausgehend von dem Apfel-Trester 210 wird der Trester durch Inkubation in einer aciden Lösung bei 70° bis 80°C durch Hydrolyse 220 aufgeschlossen. Darauf wird das Material als wässrige Suspension einem ein- oder mehrstufigen Abtrennungsschritt 230 zur Abtrennung von groben Partikeln unterzogen, wobei dies abschließend eine Abtrennung des so erhaltenen, von groben Partikeln befreiten Material aus der wässrigen Suspension beinhaltet (auch Bestandteil des Schrittes 230). Bei einer mehrstufigen Abtrennung grober Partikel geschieht dies bevorzugt mit Siebtrommeln unterschiedlicher Siebmaschenweite. Im Schritt 240 wird das von groben Partikeln befreite Material mit Wasser gewaschen und mittels einer Fest-Flüssig-Trennung die Waschflüssigkeit abgetrennt. Anschließend werden zwei Alkoholwaschschritte 250 und 270 mit jeweils anschließender Fest-Flüssigtrennung 260 und 280 durchgeführt. Im Schritt 300 erfolgt schließlich das schonende Trocknen der Fasern mittels einer Fließbetttrocknung um dann die erfindungsgemäß verwendeten aktivierbaren Apfelfasern 310 zu erhalten.

**C. Herstellung einer aktivierten pektinhaltigen Apfelfaser**

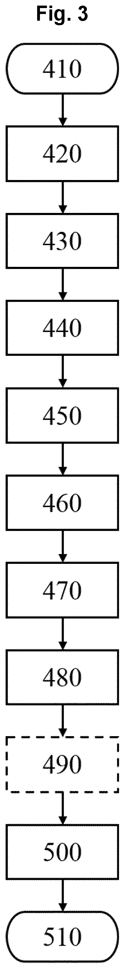

In Figur 3 ist ein Verfahren zur Herstellung der erfindungsgemäß verwendeten Apfelfaser als Fließdiagramm schematisch dargestellt. Ausgehend von dem Apfel-Trester 410 wird der Trester durch Inkubation in einer aciden Lösung bei 70° bis 80°C durch Hydrolyse 420 aufgeschlossen. Darauf wird das Material als wässrige Suspension einem ein- oder mehrstufigen Abtrennungsschritt 430 zur Abtrennung von groben Partikeln unterzogen, wobei dies abschließend eine Abtrennung des so erhaltenen, von groben Partikeln befreiten Material aus der wässrigen Suspension beinhaltet (auch Bestandteil des Schrittes 430). Bei einer mehrstufigen Abtrennung grober Partikel geschieht dies bevorzugt mit Siebtrommeln unterschiedlicher Siebmaschenweite. Im Schritt 440 wird das von groben Partikeln befreite Material mit Wasser gewaschen und mittels einer Fest-Flüssig-Trennung die Waschflüssigkeit abgetrennt. Anschließend werden zwei Alkoholwaschschritte 450 und 470 mit jeweils anschließender Fest-Flüssigtrennung 460 und 480 durchgeführt. Im optionalen Schritt 490 kann residual vorhandener Alkohol durch das Einblasen von Wasserdampf entfernt werden. Im Schritt 500 erfolgt schließlich das schonende Trocknen der Fasern mittels einer Vakuumtrocknung, um dann die erfindungsgemäß verwendbaren Apfelfasern 510 zu erhalten.

**D. Herstellung einer aktivierten pektinhaltigen Citrusfaser**

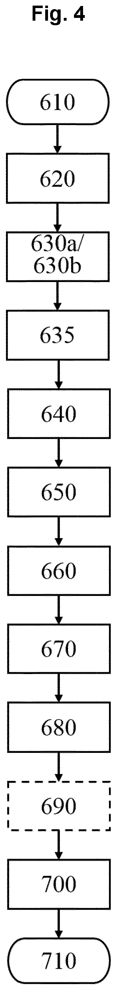

In Figur 4 ist ein Verfahren zur Herstellung der erfindungsgemäß verwendeten aktivierten pektinhaltigen Citrusfaser als Fließdiagramm schematisch dargestellt. Ausgehend von dem Citrus-Trester 610 wird der Trester durch Inkubation in einer aciden Lösung bei 70° bis 80°C durch Hydrolyse 620 aufgeschlossen. Darauf folgen zwei separate Schritte 630a (Dekanter) und 630b (Separator) zur möglichst vollständigen Abtrennung aller Partikel aus der Flüssigphase. Das abgetrennte Material wird mit einer wässrigen Lösung 635 gewaschen. Aus der dabei erhaltenen Waschmixtur werden durch Nasssiebung grobe oder nicht aufgeschlossene Partikel abgetrennt. Durch einen Dekanter-Schritt 640 erfolgt die Abtrennung des Feststoffs von der flüssigen Phase. Anschließend werden zwei Alkoholwaschschritte 650 und 670 mit jeweils anschließender Fest-Flüssigtrennung mittels Dekanter 660 und 680 durchgeführt, Im optionalen Schritt 690 kann residual vorhandener Alkohol durch das Einblasen von Wasserdampf entfernt werden. Im Schritt 700 erfolgt schließlich das schonende Trocknen der Fasern mittels einer Vakuumtrocknung um dann die Citrusfasern 710 zu erhalten.

**2 Testmethode zur Bestimmung der Fließgrenze (Rotationsmessung)**

Messprinzip:

Diese Fließgrenze macht eine Aussage über die Strukturstärke und wird im Rotationsversuch bestimmt, indem die Schubspannung, die auf die Probe wirkt, über die Zeit so lange erhöht wird, bis die Probe anfängt zu fließen.
Schubspannungen, die unterhalb der Fließgrenze liegen, verursachen lediglich eine elastische Deformation, die erst bei Schubspannungen oberhalb der Fließgrenze in ein Fließen mündet. Bei dieser Bestimmung wird dieses messtechnisch durch das Überschreiten einer festgelegten Mindest-Schergeschwindigkeit $\dot{\gamma}$ erfasst. Gemäß der vorliegenden Methode ist die Fließgrenze $\tau_o$ [Pa] bei der Schergeschwindigkeit $\dot{\gamma} \geq 0.1$ s$^{-1}$ überschritten.

| | |
|---|---|
| Messgerät: | Rheometer Physica MCR-Serie (z.B. MCR 301, MCR 101) |
| Messsystem: | Z3 DIN bzw. CC25 |
| Messbecher: | CC 27 P06 (geriffelter Messbecher) |
| Anzahl Messabschnitte: | 3 |
| Messtemperatur: | 20 °C |

Messparameter:

1. Abschnitt (Ruhephase):

| | | |
|---|---|---|
| Abschnittseinstellungen: | - Vorgabegröße: | Schubspannung [Pa] |
| | - Wert: | 0 Pa konstant |
| | - Abschnittsdauer: | 180 s |
| | - Temperatur: | 20 °C |

2. Abschnitt (Bestimmung der Fließgrenze nach Rotationsmessung):

| | | |
|---|---|---|
| Abschnittseinstellungen: | - Vorgabegröße: | Schubspannung [Pa] |
| | - Profil: | Rampe log. |
| | - Startwert: | 0,1 Pa |
| | - Endwert: | 80 Pa |
| | - Abschnittsdauer: | 180 s |
| | - Temperatur: | 20 °C |

Auswertung:

Die Fließgrenze $\tau_o$ (Einheit [Pa] wird in Abschnitt 2 abgelesen und ist die Schubspannung (Einheit: [Pa]), bei der die Schergeschwindigkeit zum letzten Mal $\dot{\gamma} \leq 0{,}10$ s$^{-1}$ beträgt.

Die mit der Rotationsmethode gemessene Fließgrenze wird auch als "Fließgrenze (Rotation)" bezeichnet.

Die Fließgrenze (Rotation) wurde anhand einer Fasersuspension (einfaches Einrühren der Faser mit einem Löffel = entspricht einer nicht aktivierten Faser) gemessen und wird im Rahmen der Erfindung auch als "Fließgrenze Rotation II" bezeichnet. Die Fließgrenze wurde zudem anhand einer Faserdispersion (eingerührt unter Einwirkung hoher Scherkräfte; z.B. mit Ultra Turrax = entspricht einer aktivierten Faser) gemessen und wird im Rahmen der Erfindung auch als "Fließgrenze Rotation I" bezeichnet.

**3 Testmethode zur Bestimmung der Fließgrenze (Oszillationsmessung)**

Messprinzip:

Diese Fließgrenze macht ebenfalls eine Aussage über die Strukturstärke und wird im Oszillationsversuch bestimmt, indem die Amplitude bei konstanter Frequenz so lange erhöht wird, bis die Probe durch die immer größer werdende Auslenkung zerstört wird und dann anfängt zu fließen.

Dabei verhält sich die Substanz unterhalb der Fließgrenze wie ein elastischer Festkörper, das heißt, die elastischen Anteile (G') liegen über den viskosen Anteilen (G"), während bei Überschreiten der Fließgrenze die viskosen Anteile der Probe ansteigen und die elastischen Anteile abnehmen.

Per Definition ist die Fließgrenze bei der Amplitude überschritten, wenn gleich viele viskose wie elastische Anteile vorliegen G' = G" (Cross Over), die zugehörige Schubspannung ist der entsprechende Messwert.

| | |
|---|---|
| Messgerät: | Rheometer Physica MCR-Serie (z.B. MCR 301, MCR 101) |
| Messsystem: | Z3 DIN bzw. CC25 |
| Messbecher: | CC 27 P06 (geriffelter Messbecher) |

Messparameter:

| Abschnittseinstellungen: | - Amplitudenvorgaben: | Deformation |
|---|---|---|
| | - Profil: | Rampe log. |
| | - Wert: | 0,01 - 1000% |
| | - Frequenz: | 1,0 Hz |
| | - Temperatur: | 20 °C |

Auswertung:

Mit Hilfe der Rheometersoftware Rheoplus wird die Schubspannung am Cross-Over nach Überschreiten des linear-viskoelastischen Bereiches ausgewertet.

Die mit der Oszillationsmethode gemessene Fließgrenze wird auch als "Fließgrenze Cross Over" bezeichnet.

Die Fließgrenze Cross Over wurde anhand einer Fasersuspension (einfaches Einrühren der Faser mit einem Löffel = entspricht einer nicht aktivierten Faser) gemessen und wird im Rahmen der Erfindung auch als "Fließgrenze Cross Over II" bezeichnet. Die Fließgrenze wurde zudem anhand einer Faserdispersion (eingerührt unter Einwirkung hoher Scherkräfte; z.B. mit Ultra Turrax = entspricht einer aktivierten Faser) gemessen und wird im Rahmen der Erfindung auch als "Fließgrenze Cross Over I" bezeichnet.

Messergebnisse und ihre Bedeutung:

Betrachtet man die Fließgrenze für die Suspensionen der erfindungsgemäß verwendeten Fasern, eingerührt mit dem Löffel (entsprechend einer nicht scheraktivierten Faser), mit einer Faserdispersion eingerührt mit hohen Scherkräften z.B. Ultra Turrax (entsprechend einer aktivierten Faser), kann man eine Aussage über die Vorteilhaftigkeit/Notwendigkeit einer Aktivierung treffen. Die Messergebnisse sind in der folgenden Tabelle zusammengefasst. Erwartungs-

**EP 4 255 216 B1**

gemäß steigt die Fließgrenze jeweils durch die Scher-Aktivierung in der Dispersion an.

Für die aktivierbare pektinhaltige Citrusfaser zeigte sich, dass aufgrund der relativ geringen Fließgrenze der Fasersuspension mit $\tau_o$ II = 0,8 Pa für die vollständige Implementierung der Fasereigenschaften eine Aktivierung der Faser erforderlich ist, um die gewünschte cremige Textur zu erhalten.

Für die aktivierbare pektinhaltige Apfelfaser zeigte sich, dass aufgrund der relativ geringen Fließgrenze der Fasersuspension mit $\tau_o$ II = 0,3 Pa für die vollständige Implementierung der Fasereigenschaften eine Aktivierung der Faser erforderlich ist.

Für die aktivierte pektinhaltige Apfelfaser zeigte sich, dass aufgrund der relativ geringen Fließgrenze der Fasersuspension mit $\tau_o$ II = 0,1 Pa für die vollständige Implementierung der Fasereigenschaften eine Aktivierung der Faser erforderlich ist.

Erwartungsgemäß steigt auch bei der aktivierten pektinhaltigen Citrusfaser die Fließgrenze jeweils durch die Scher-Aktivierung in der Dispersion an. Allerdings besitzt auch die Fasersuspension eine Fließgrenze, die mit $\tau_o$ II >1.5 Pa ausreichend hoch ist, um eine cremige Textur zu erreichen. Daher ist eine Aktivierung der Faser nicht unbedingt erforderlich.

| Faser | Rotation | | Cross Over | | Aktivierung |
|---|---|---|---|---|---|
| | $\tau_o$ II [Pa] Suspension | $\tau_o$ I [Pa] Dispersion | $\tau_o$ II [Pa] Suspension | $\tau_o$ I [Pa] Dispersion | |
| aktivierbare pektinhaltige Citrusfaser | 0,8 | 3,0 | 0,6 | 3,4 | erforderlich |
| Aktivierbare pektinhaltige Apfelfaser | 0,3 | 2,1 | 0,4 | 2,3 | erforderlich |
| Aktivierte pektinhaltige Apfelfaser | 0,1 | 6,7 | 0,2 | 6,5 | erforderlich |
| Aktivierte pektinhaltige Citrusfaser | 2,3 | 6,9 | 1,8 | 7,2 | Nicht unbedingt erforderlich |

**4 Testmethode zur Bestimmung der dynamischen Weißenbergzahl**

Messprinzip und Bedeutung der dynamischen Weissenberazahl:

Die dynamische Weißenbergzahl W' (Windhab E, Maier T, Lebensmitteltechnik 1990, 44: 185f) ist eine abgeleitete Größe, bei der die im Oszillationsversuch im linear-viskoelastischen Bereich ermittelten elastischen Anteile (G') mit den viskosen Anteilen (G") ins Verhältnis gesetzt werden:

$$W' = \frac{G'(\omega)}{G''(\omega)} = \frac{1}{tan\,\delta}$$

Mit der dynamischen Weißenbergzahl erhält man eine Größe, die besonders gut mit der sensorischen Wahrnehmung der Konsistenz korreliert und relativ unabhängig von der absoluten Festigkeit der Probe betrachtet werden kann.

Ein hoher Wert für W' bedeutet, dass die Fasern eine überwiegend elastische Struktur aufgebaut haben, während ein tiefer Wert für W' auf Strukturen mit deutlich viskosen Anteilen spricht. Die für Fasern typische cremige Textur wird erreicht, wenn die W' Werte im Bereich von ca. 6 - 8 liegen, bei tieferen Werten wird die Probe als wässrig (weniger stark angedickt) beurteilt.

Material und Methoden:

| | |
|---|---|
| Messgerät: | Rheometer Physica MCR-Serie, z.B. MCR 301, MCR 101 |
| Messsystem: | Z3 DIN bzw. CC25 |
| Messbecher: | CC 27 P06 (geriffelter Messbecher) |

Messparameter:

| | Abschnittseinstellungen: | - Amplitudenvorgaben: | Deformation |
|---|---|---|---|
| | | - Profil: | Rampe log |
| | | - Wert: | 0,01 - 1000 % |
| | | - Frequenz: | 1,0 Hz |
| | | - Temperatur: | 20 °C |

Auswertung:

Der Phasenverschiebungswinkel δ wird im linear-viskoelastischen Bereich abgelesen. Die dynamische Weißenbergzahl W' wird anschließend mit folgender Formel berechnet:

$$W' = \frac{1}{\tan \delta}$$

Messergebnisse und ihre Bedeutung:

Betrachtet man die dynamische Weißenbergzahl W' für die Suspension einer erfindungsgemäß verwendeten Faser, eingerührt mit dem Löffel (entsprechend einer nicht scheraktivierten Faser), mit einer Faserdispersion eingerührt mit hohen Scherkräften z.B. Ultra Turrax (entsprechend einer aktivierten Faser), kann man eine Aussage über die Textur und darüber hinaus über die Notwendigkeit einer Aktivierung treffen. Die Messergebnisse sind in der folgenden Tabelle zusammengefasst.

Die aktivierbare pektinhaltige Citrusfaser gemäß der Erfindung liegt mit W' Werten von 7,2 in der Suspension und 7,5 für die Dispersion im idealen Bereich und weist damit eine optimale Textur auf. Sie ist in beiden Fällen von cremiger Textur. Die Ergebnisse zur dynamischen Weißenbergzahl zeigen, dass hinsichtlich der erwünschten cremigen Textur eine Aktivierung der Faser nicht unbedingt erforderlich ist.

Die aktivierbare pektinhaltige Apfelfaser gemäß der Erfindung liegt mit einem W' Wert von 4,8 in der Suspension im suboptimalen Bereich und liegt erst als Dispersion mit einem W' = 5,9 im idealen Bereich Somit weist die aktivierbare Apfelfaser erst in dispergierter Form eine optimale Textur auf. Die Ergebnisse zur dynamischen Weissenbergzahl zeigen, dass hinsichtlich der erwünschten cremigen Textur eine Aktivierung der Faser erforderlich ist.

Die aktivierte pektinhaltige Apfelfaser gemäß der Erfindung liegt mit die W' Werten von 5,0 in der Suspension im suboptimalen Bereich erst als Dispersion mit W' = 9,2 im idealen Bereich und weist damit erst in dispergierter Form eine optimale Textur auf. Die Ergebnisse zur dynamischen Weissenbergzahl zeigen, dass hinsichtlich der erwünschten cremigen Textur eine Aktivierung der Faser erforderlich ist.

Die aktivierte pektinhaltige Citrusfaser gemäß der Erfindung liegt mit die W' Werten von 8,1 in der Suspension und 7,3 für die Dispersion im idealen Bereich und weist damit eine optimale Textur auf. Sie ist in beiden Fällen von cremiger Textur. Somit zeigen auch die Ergebnisse zur dynamischen Weissenbergzahl, dass eine Aktivierung der Faser nicht unbedingt erforderlich ist.

| Faser | W' Suspension | W' Dispersion | Textur |
|---|---|---|---|
| aktivierbare pektinhaltige Citrusfaser | 7,2 | 7,5 | mit und ohne Aktivierung cremig, Viskosität/Fließgrenze wird über die Dosierung reguliert |
| aktivierbare pektinhaltige Apfelfaser | 4,8 | 5,9 | Nur nach Aktivierung cremig, Viskosität/Fließgrenze wird über die Dosierung reguliert |
| aktivierte pektinhaltige Apfelfaser | 5,0 | 9,2 | Nur nach Aktivierung cremig, Viskosität/Fließgrenze wird über die Dosierung reguliert |
| aktivierte pektinhaltige Citrusfaser | 8,1 | 7,3 | mit und ohne Aktivierung cremig, Viskosität/Fließgrenze wird über die Dosierung reguliert |

**5 Testmethode zur Bestimmung der Festigkeit**

Durchführung:

150 ml destilliertes Wasser werden in einem Becherglas vorgelegt. Dann rührt man mit einem Löffel 6,0 g Citrusfasern bzw. 9,0 g Apfelfasern klumpenfrei in das Wasser ein. Zum Ausquellen lässt man dieses Faser-Wasser-Gemisch 20 min stehen. Man überführt die Suspension in ein Gefäß (Ø 90 mm). Anschließend wird die Festigkeit mit der folgenden Methode gemessen.

Messgerät: Texture Analyser TA-XT 2 (Fa. Stable Micro Systems, Godalming, UK)

Test-Methode/Option: Messung der Kraft in Druckrichtung / einfacher Test

Parameter:

- Test-Geschwindigkeit: 1,0 mm/s
- Weg: 15,0 mm/s

Messwerkzeug: P/50

Gemäß der vorliegenden Methode entspricht die Festigkeit der Kraft, die der Messkörper braucht, um 10 mm in die Suspension einzudringen. Diese Kraft wird aus dem Kraft-ZeitDiagramm abgelesen.

**6 Testmethode zur Bestimmung der Korngröße**

Messprinzip:

In einer Siebmaschine ist ein Satz von Sieben, deren Maschenweite vom unteren Sieb zum oberen stets ansteigt, übereinander angeordnet. Die Probe wird auf das oberste Sieb - das mit der größten Maschenweite gegeben. Die Probeteilchen mit größerem Durchmesser als die Maschenweite bleiben auf dem Sieb zurück; die feineren Teilchen fallen auf das nächste Sieb durch. Der Anteil der Probe auf den verschiedenen Sieben wird ausgewogen und in Prozent angegeben.

Durchführung:

Die Probe wird auf zwei Stellen nach dem Komma genau eingewogen. Die Siebe werden mit Siebhilfen versehen und mit steigender Maschenweite übereinander aufgebaut. Die Probe wird auf das oberste Sieb quantitativ überführt, die Siebe werden eingespannt und nach definierten Parametern verläuft der Siebprozess. Die einzelnen Siebe werden mit Probe und Siebhilfe sowie leer mit Siebhilfe gewogen. Soll bei einem Produkt nur ein Grenzwert im Korngrößenspektrum überprüft werden (z. B. 90 Gew.% < 250 $\mu$m), dann wird nur ein Sieb mit der entsprechenden Maschenweite verwendet.

Messvorgaben:

| | | | |
|---|---|---|---|
| Probemenge: | 15 g | Siebhilfen: | 2 pro Siebboden |
| Siebmaschine: | AS 200 digit, Fa. Retsch GmbH | | |
| Siebbewegung: | dreidimensional | | |
| Schwingungshöhe: | 1,5 mm | | |
| Siebdauer: | 15 min | | |

Der Siebaufbau besteht aus den folgenden Maschenweite in $\mu$m: 1400, 1180, 1000, 710, 500, 355, 250 gefolgt vom Boden. Bei den aktivierten pektinhaltigen Citrusfasern wird zusätzlich ein Sieb mit 150 $\mu$m verwendet.

Die Berechnung der Korngröße erfolgt anhand folgender Formel:

$$Anteil\ pro\ Sieb\ in\ \% = \frac{Auswaage\ in\ g\ auf\ dem\ Sieb\ x\ 100}{Probeeinwaage\ in\ g}$$

**7 Herstellung einer 2,5 Gew%igen Faserdispersion**

Rezeptur:

    2,50 g Faserstoffe
    97,5 g demineralisiertes Wasser (Raumtemperatur)
    Einstreudauer: 15 Sekunden

In einem 250 ml Becherglas wird die jeweilige Menge an dem. Wasser (Raumtemperatur) vorgelegt. Die genau abgewogene Menge an Faserstoffen wird bei laufendem Rührwerk (Ultra Turrax) bei 8000 U/Min. (Stufe 1) langsam direkt in den Rührsog eingestreut. Die Einstreudauer richtet sich nach der Menge an Fasern, sie soll pro 2,5 g Probe 15 Sekunden dauern. Dann wird die Dispersion genau 60 Sek. bei 8000 U/Min. (Stufe 1) gerührt. Soll die Probe zur Bestimmung der Viskosität bzw. zur Bestimmung der Fließgrenze I (Rotation), der Fließgrenze I (Cross Over) oder zur Bestimmung der dynamischen Weißenbergzahl verwendet werden, wird sie in ein temperiertes Wasserbad bei 20°C gestellt.

Zur Messung der Viskosität bzw. zur Messung der Fließgrenze I (Rotation), der Fließgrenze I (Cross Over) oder zur Messung der dynamischen Weißenbergzahl wird die Probe nach genau 1 Stunde vorsichtig in das Messsystem des Rheometers gefüllt und die jeweilige Messung gestartet. Falls sich die Probe absetzt, wird sie unmittelbar vor dem Abfüllen mit Hilfe eines Löffels vorsichtig aufgerührt.

**8 Herstellung einer 2,5 Gew%igen Fasersuspension**

Rezeptur:

    2,50 g Faserstoffe
    97,5 g demineralisiertes Wasser (Raumtemperatur)

In einem 250 ml Becherglas wird die jeweilige Menge an dem. Wasser (Raumtemperatur) vorgelegt. Die genau abgewogene Menge an Faserstoffen wird unter ständigem Rühren mit einem Kunststofflöffel langsam eingestreut. Dann wird die Suspension so lange gerührt, bis alle Fasern mit Wasser benetzt sind. Soll die Probe zur Bestimmung der Viskosität bzw. zur Bestimmung der Fließgrenze II (Rotation), der Fließgrenze II (Cross Over) oder zur Bestimmung der dynamischen Weißenbergzahl verwendet werden, wird sie in ein temperiertes Wasserbad bei 20°C gestellt.

Zur Messung der Viskosität bzw. zur Messung der Fließgrenze II (Rotation), der Fließgrenze II (Cross Over) oder zur Messung der dynamischen Weißenbergzahl wird die Probe nach genau 1 Stunde vorsichtig in das Messsystem des Rheometers gefüllt und die jeweilige Messung gestartet. Falls sich die Probe absetzt, wird sie unmittelbar vor dem Abfüllen mit Hilfe eines Löffels vorsichtig aufgerührt.

**9 Testmethode zur Bestimmung des Wasserbindevermögens**

Durchführung für Wasserbindungsvermögen von nicht vorbehandelten Proben:

Man lässt die Probe mit einem Wasserüberschuss 24 Stunden bei Raumtemperatur quellen. Nach Zentrifugation und anschließendem Abdekantieren des Überstandes kann das Wasserbindungsvermögen in g $H_2O$ / g Probe gravimetrisch bestimmt werden. Der pH-Wert in der Suspension ist zu messen und zu dokumentieren.

Folgende Parameter sind einzuhalten:

Probeeinwaage:

| | | |
|---|---|---|
| - Pflanzenfaser: | 1,0 g (in Zentrifugenglas) |
| - Wasserzugabe: | 60 ml |
| - Zentrifugation: | 4000 g |
| - Zentrifugierdauer | 10 min |

20 Minuten nach Zentrifugierbeginn (bzw. 10 Minuten nach Zentrifugierende) trennt man den Wasserüberstand von der gequollenen Probe ab. Die Probe mit dem gebundenen Wasser wird ausgewogen.

Das Wasserbindungsvermögen (WBV) in g $H_2O$ / g Probe kann nun nach folgender Formel berechnet werden:

$$\text{WBV (g } H_2O/g \text{ Probe)} = \frac{\text{Probe mit gebundenem Wasser (g)} - 1,0\text{ g}}{1,0\text{ g}}$$

**10 Testmethode zur Bestimmung der Viskosität**

| | |
|---|---|
| Messgerät: | Physica MCR-Serie (z.B. MCR 301, MCR 101) |
| Messsystem: | Z3 DIN bzw. CC25 |
| | (Anmerkung: Die Messsysteme Z3 DIN und CC25 sind identische Messsysteme) |
| Anzahl Abschnitte: | 4 |

Messparameter:

1. Abschnitt:

| | | |
|---|---|---|
| Abschnittseinstellungen: | - Vorgabegröße: | Schergeschwindigkeit [s$^{-1}$] |
| | - Profil: | konstant |
| | - Wert: | 0 s$^{-1}$ |
| | - Abschnittsdauer: | 60 s |
| | - Temperatur: | 20 °C |

2. Abschnitt:

| | | |
|---|---|---|
| Abschnittseinstellungen: | - Vorgabegröße: | Schergeschwindigkeit [s$^{-1}$] |
| | - Profil: | Rampe lin |
| | - Wert: | 0,1 - 100 s$^{-1}$ |
| | - Abschnittsdauer: | 120 s |
| | - Temperatur: | 20 °C |

3. Abschnitt:

| Abschnittseinstellungen: | - Vorgabegröße: | Schergeschwindigkeit [s$^{-1}$] |
|---|---|---|
| | - Profil: | konstant |
| | - Wert: | 100 s$^{-1}$ |
| | - Abschnittsdauer: | 10 s |
| | - Temperatur: | 20 °C |

4. Abschnitt:

| Abschnittseinstellungen: | - Vorgabegröße: | Schergeschwindigkeit [s$^{-1}$] |
|---|---|---|
| | - Profil: | Rampe lin |
| | - Wert: | 100 - 0,1 s$^{-1}$ |
| | - Abschnittsdauer: | 120 s |
| | - Temperatur: | 20 °C |

Auswertung:

Die Viskosität (Einheit [mPas]) wird wie folgt abgelesen: 4. Abschnitt bei = 50 s$^{-1}$

**11 Testmethode zur Bestimmung des Veresterungsgrads**

Diese Methode entspricht der JECFA (Joint FAO/WHO Expert Committee on Food Additives) veröffentlichten Methode. Abweichend von der JECFA-Methode wird das entaschte Pektin nicht im Kalten gelöst, sondern erhitzt. Als Alkohol wird Isopropanol anstelle von Ethanol verwendet.

**12 Testmethode zur Bestimmung des Ballaststoffgehalts**

Diese Methode stimmt im Wesentlichen sachlich überein mit der von der AOAC veröffentlichten Methode (Official Method 991.43: Total, Soluble and Insoluble Dietary Fiber in Foods; Enzymatic-Gravimetric Method, MES-TRIS Buffer, First Action 1991, Final Action 1994). Hier wurde lediglich mit Isopropylalkohol anstatt mit Ethanol gearbeitet.

**13 Testmethode zur Bestimmung der Feuchtigkeit**

Prinzip:

Unter dem Feuchtigkeitsgehalt der Probe wird die nach definierten Bedingungen ermittelte Massenabnahme nach der Trocknung verstanden. Es wird der Feuchtigkeitsgehalt der Probe mittels Infrarot-Trocknung mit dem Feuchtebestimmer Sartorius MA-45 (Fa. Sartorius, Göttingen, BRD) bestimmt.

Durchführung:

Es werden ca. 2,5 g der Faserprobe auf den Sartorius Feuchtebestimmer eingewogen. Die Einstellungen des Gerätes sind den entsprechenden werkseitigen Messvorschriften zu entnehmen. Die Proben sollen zur Bestimmung etwa Raumtemperatur haben. Der Feuchtigkeitsgehalt wird vom Gerät automatisch in Prozent [% M] angegeben. Der Trockensubstanzgehalt wird vom Gerät automatisch in Prozent [% S] angegeben.

**14. Testmethode zur Bestimmung der Farbe und Helligkeit**

Prinzip:

Die Farb- und Helligkeitsmessungen werden mit dem Minolta Chromameter CR 300 bzw.
CR 400 durchgeführt. Die Bestimmung der spektralen Eigenschaften einer Probe erfolgt anhand von Normfarbwerten. Die Farbe einer Probe wird mit dem Farbton, der Helligkeit und der Sättigung beschrieben. Mit diesen drei Basiseigenschaften lässt sich die Farbe dreidimensional darstellen:

Die Farbtöne liegen auf dem Außenmantel des Farbkörpers, die Helligkeit verändert sich auf der senkrechten Achse und der Sättigungsgrad verläuft horizontal. Bei Verwendung des L*a*b*-Messsystems (sprich L-Stern, a-Stern, b-Stern) steht L* für die Helligkeit, während a* und b* sowohl den Farbton als auch die Sättigung angeben. a* und b* nennen die Positionen auf zwei Farbachsen, wobei a* der Rot-Grün-Achse und b* der Blau-Gelb-Achse zugeordnet ist. Für die Farbmessanzeigen wandelt das Gerät die Normfarbwerte in L*a*b*-Koordinaten um.

Durchführung der Messung:

Die Probe wird auf ein weißes Blatt Papier gestreut und mit einem Glasstopfen geebnet.

Zur Messung wird der Messkopf des Chromameters direkt auf sie Probe gesetzt und der Auslöser betätigt. Von jeder Probe wird eine Dreifachmessung durchgeführt und der Mittelwert berechnet. Die L*-, a*-, b*-Werte werden vom Gerät mit zwei Stellen nach dem Komma angegeben.

**15. Testmethode zur Bestimmung des wasserlöslichen Pektins in faserhaltigen Proben**

Messprinzip:

Durch eine wässrige Extraktion wird das in faserhaltigen Proben enthaltene Pektin in die flüssige Phase übergeführt. Durch Zugabe von Alkohol wird das Pektin als alkoholunlösliche Substanz (AIS, alcohol insoluble substance) aus dem Extrakt ausgefällt.

Extraktion:

10,0 g der zu untersuchenden Probe werden in eine Glasschale eingewogen. 390 g kochendes dest. Wasser werden in einem Becherglas vorgelegt und die vorher abgewogene Probe wird mittels Ultra-Turrax 1 min auf höchster Stufe eingerührt.

Die auf Raumtemperatur abgekühlte Probensuspension wird auf vier 150 ml Zentrifugenbecher aufgeteilt und 10 min bei 4000 x g zentrifugiert. Der Überstand wird gesammelt. Das Sediment eines jeden Bechers wird mit 50 g destilliertem Wasser resuspendiert und erneut für 10 min bei 4000 x g zentrifugiert. Der Überstand wird gesammelt, das Sediment wird verworfen.

Die vereinigten Zentrifugate werden in ca. 4 l Isopropanol (98 %) zur Ausfällung der alkoholunlöslichen Substanz (AIS) gegeben. Nach ½ Stunde filtriert man über ein Filtertuch und presst die AIS manuell ab. Im Filtertuch wird dann die AIS in ca. 3 l Isopropanol (98 %) gegeben und von Hand unter Verwendung von Handschuhen aufgelockert.

Der Abpressvorgang wird wiederholt, die AIS quantitativ vom Filtertuch genommen, aufgelockert und bei 60 °C 1 Stunde im Trockenschrank getrocknet.

Die abgepresste, getrocknete Substanz wird zur Berechnung der alkoholunlöslichen Substanz (AIS) auf 0,1 g ausgewogen.

Berechnung:

Die Berechnung des wasserlöslichen Pektins bezogen auf die faserhaltige Probe erfolgt anhand der folgenden Formel, wobei das wasserlösliche Pektin als alkoholunlösliche Substanz (AIS) anfällt:

$$AIS \ in \ der \ Probe \ in \ Gew.\% \left(\frac{g}{100g}\right) = \frac{getrocknete \ AIS \ [g] \ x \ 100}{Probeneinwaage \ in \ g}$$

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

**16. Herstellung einer hellen Soße mit Geschmack von Huhn und grünem Pfeffer**

Zutaten:

| 72g Grundkomponente a. | Symphony "Mise en Place" Typ hell (Fa. herbacuisine) |

(fortgesetzt)

| 30g Feintexturkomponente | Symphony "à la Carte" Typ Huhn (Fa. herbacuisine) |
| 20g Verfeinerungskomponente | Grüne Pfefferkörner, eingelegt |
| 900 ml Wasser | |

Grundkomponente a. (helle Grundsoße)

Eine Grundkomponente a. mit der Geschmacksrichtung helle Grundsoße wurde auf Basis folgender Bestandteile bereitgestellt: 25 Gew% BASIC dry hell® (Fa. herba cuisine; Anteil an aktivierbarer pektinhaltiger Pflanzenfaser 83 Gew%, bezogen auf das Gesamtgewicht von BASIC dry hell), 75 Gew% weitere Zutaten, nämlich 37,5 Gew% Sahnepulver, 12,5 Gew% Milchpulver, 5,6 Gew% Karottenpulver, 5 Gew% Lauchpulver, 3,8 Gew% Zwiebelpulver, 1,9 Gew% Selleriepulver, 2,5 Gew% helle Sauce mit Fleischaroma.

72 g Grundkomponente a. wurde in 900 ml Wasser eingebracht und mit dem Wasser vermischt.

Anschließend wurde eine Feintexturkomponente b. (Typ Huhn) mit folgenden Bestandteilen bereitgestellt: 83 Gew% Wasser, 10 Gew% Aroma und 7 Gew% aktivierte pektinhaltige Zitrusfaser.

30 g Feintexturkomponente b. wurde zu der oben hergestellten Mischung von Grundkomponente a. in Wasser hinzugefügt und die Mischung wurde weiter gerührt. Die Mischung wird für mindestens 2 Minuten auf über 80°C erhitzt und mit Hilfe eines Mixstabes eine Minute auf höchster Stufe gemixt und erneut auf über 80°C erhitzt.

Abschließend wurde als Verfeinerungskomponente c. 20g grüne eingelegte Pfefferkörner zur Mischung hinzugegeben. Nach weiterem Rühren für einen Zeitraum von mindestens einer Minute wurde eine Soße mit Geschmack nach heller Grundsauce, Huhn und grünem Pfeffer erhalten.

Wie aus dem vorgestellten Herstellungsprozess ersichtlich, lassen sich mit dem erfindungsgemäßen Mehrkomponentensystem in einfacher und unkomplizierter Weise Soßen und Suppen mit unterschiedlichen Geschmacks- und Viskositätseigenschaften herstellen.

**Bezugszeichen**

| 10 | Citrus-Trester |
| 20 | Hydrolyse (Aufschluss) durch Inkubation im aciden Milieu |
| 30a | 1. Fest-Flüssig Trennung Dekanter |
| 30b | 2. Fest-Flüssig Trennung Separator |
| 35 | Waschmixtur mit Nasssiebung |
| 40 | Fest-Flüssig Trennung |
| 50 | 1. Waschen mit Alkohol |
| 60 | Fest-Flüssig Trennung |
| 70 | 2. Waschen mit Alkohol |
| 80 | Fest-Flüssig Trennung |
| 100 | Fließbetttrocknung |
| 110 | Erhaltene aktivierbare pektinhaltige Citrusfaser |
| 210 | Apfel-Trester |
| 220 | Hydrolyse (Aufschluss) durch Inkubation im aciden Milieu |

| 230 | Abtrennen grober Partikel (ein- oder mehrstufig) mit Abtrennung des gereinigten Materials aus der wässrigen Suspension |
|---|---|
| 240 | Waschen mit Wasser und Fest-Flüssig Trennung |
| 250 | 1. Waschen mit Alkohol |
| 260 | Fest-Flüssig Trennung |
| 270 | 2. Waschen mit Alkohol |
| 280 | Fest-Flüssig Trennung |
| 300 | Fließbetttrocknung |
| 310 | Erhaltene aktivierbare pektinhaltige Apfelfaser |
| 410 | Apfel-Trester |
| 420 | Hydrolyse (Aufschluss) durch Inkubation im aciden Milieu |
| 430 | Abtrennen grober Partikel (ein- oder mehrstufig) mit Abtrennung des gereinigten Materials aus der wässrigen Suspension |
| 440 | Waschen mit Wasser und Fest-Flüssig Trennung |
| 450 | 1. Waschen mit Alkohol |
| 460 | Fest-Flüssig Trennung |
| 470 | 2. Waschen mit Alkohol |
| 480 | Fest-Flüssig Trennung |
| 490 | Optionales Einbringen von Wasserdampf |
| 500 | Vakuumtrocknung |
| 510 | Erhaltene aktivierte pektinhaltige Apfelfaser |
| 610 | Citrus-Trester |
| 620 | Hydrolyse (Aufschluss) durch Inkubation im aciden Milieu |
| 630a | 1. Fest-Flüssig Trennung Dekanter |
| 630b | 2. Fest-Flüssig Trennung Separator |
| 635 | Waschmixtur mit Nasssiebung |
| 640 | Fest-Flüssig-Trennung Dekanter |
| 650 | 1. Waschen mit Alkohol |
| 660 | Fest-Flüssig Trennung Dekanter |
| 670 | 2. Waschen mit Alkohol |

680 Fest-Flüssig Trennung Dekanter

690 Optionales Einbringen von Wasserdampf

700 Vakuumtrocknung

710 Erhaltene aktivierte pektinhaltige Citrusfaser

**Patentansprüche**

1. Mehrkomponentensystem zur Herstellung einer Soße und/oder einer Suppe enthaltend als separate Komponenten:

a. eine Grundkomponente, die als Flüssigkeitsbindemittel eine aktivierbare pektinhaltige Citrusfaser enthält, wobei die aktivierbare pektinhaltige Citrusfaser weniger als 10 Gew.% an wasserlöslichem Pektin und eine Fließgrenze I (Rotation) in der Faserdispersion von 1,0 - 4,0 Pa gemessen nach dem unter Ausführungsbeispiel 2 beschriebenen Messverfahren aufweist, und eine oder mehrere der folgenden Eigenschaften aufweist:

i. eine Fließgrenze II (Rotation) in der Fasersuspension von 0,1 - 1,0 Pa, vorteilhafterweise von 0,3 - 0,9 Pa und besonders vorteilhafterweise von 0,6 - 0,8 Pa gemessen nach dem unter Ausführungsbeispiel 2 beschriebenen Messverfahren;
ii. eine Fließgrenze II (Cross Over) in der Fasersuspension von 0,1 - 1,0 Pa, vorteilhafterweise von 0,3 - 0,9 Pa und besonders vorteilhafterweise von 0,6 - 0,8 Pa gemessen nach dem unter Ausführungsbeispiel 3 beschriebenen Messverfahren;
iii. eine Fließgrenze I (Rotation) in der Faserdispersion von 1,5 - 3,5 Pa und vorteilhafterweise von 2,0 - 3,0 Pa gemessen nach dem unter Ausführungsbeispiel 2 beschriebenen Messverfahren;
iv. eine Fließgrenze I (Cross Over) in der Faserdispersion von 1,0 - 4,5 Pa, vorteilhafterweise von 1,5 - 4,0 Pa und besonders vorteilhafterweise von - 2,0 - 3,5 Pa gemessen nach dem unter Ausführungsbeispiel 3 beschriebenen Messverfahren;
v. eine dynamische Weissenbergzahl in der Fasersuspension von 4,5 - 8,0, vorteilhafterweise von 5,0 - 7,5 und besonders vorteilhaft von 7,0 - 7,5 gemessen nach dem unter Ausführungsbeispiel 4 beschriebenen Messverfahren;
vi. eine dynamische Weissenbergzahl in der Faserdispersion von 5,0 - 9,0, vorteilhafterweise von 6,0 - 8,5 und besonders vorteilhaft von 7,0 - 8,0 gemessen nach dem unter Ausführungsbeispiel 4 beschriebenen Messverfahren;
vii. eine Festigkeit in einer 4 Gew%igen wässrigen Suspension von zwischen 60 g und 240 g hat, bevorzugt von zwischen 120 g und 200 g und besonders bevorzugt von zwischen 140 und 180 g hat;
viii. eine Viskosität von 150 bis 600 mPas, bevorzugt von 200 bis 550 mPas, und besonders bevorzugt von 250 bis 500 mPas aufweist, wobei die aktivierbare pektinhaltige Citrusfaser in Wasser als 2,5 Gew%ige Lösung dispergiert wird und die Viskosität mit einer Scherrate von 50 $s^{-1}$ bei 20°C gemessen wird;
ix. ein Wasserbindevermögen von mehr als 20 g/g, bevorzugt von mehr als 22 g/g, besonders bevorzugt von mehr als 24 g/g, und insbesondere bevorzugt von zwischen 24 und 26 g/g;
x. in 1,0 Gew%iger wässriger Suspension einen pH-Wert von 3,1 bis 4,75 und bevorzugt von 3,4 bis 4,2;
xi. eine Korngröße, bei der mindestens 90 Gew% der Partikel kleiner als 450 $\mu$m sind, bevorzugt mindestens 90 Gew% der Partikel kleiner als 350 $\mu$m sind und besonders bevorzugt mindestens 90 Gew% der Partikel kleiner als 250 $\mu$m sind;
xii. einen Helligkeitswert von L* > 84, bevorzugt von L* > 86 und besonders bevorzugt von L* > 88;
xiii. einen Ballaststoffgehalt der aktivierbaren pektinhaltigen Citrusfaser von 80 bis 95 Gew%;
xiv. weniger als 8 Gew% und vorteilhaft weniger als 6 Gew% an wasserlöslichem Pektin;

oder
die als Flüssigkeitsbindemittel eine aktivierbare pektinhaltige Apfelfaser enthält, wobei die aktivierbare pektinhaltige Apfelfaser weniger als 10 Gew.% an wasserlöslichem Pektin und eine Fließgrenze I (Rotation) in der Faserdispersion von 0,75 - 3,75 Pa gemessen nach dem unter Ausführungsbeispiel 2 beschriebenen Messverfahren aufweist, und eine oder mehrere der folgenden Eigenschaften aufweist:

i. eine Fließgrenze II (Rotation) in der Fasersuspension von 0,1 bis 1,0 Pa, vorteilhaft von 0,15 bis 0,75 Pa und besonders vorteilhaft von 0,25 bis 0,5 Pa gemessen nach dem unter Ausführungsbeispiel 2 beschriebenen Messverfahren;

ii. eine Fließgrenze II (Cross Over) in der Fasersuspension von 0,1 bis 1,0 Pa, vorteilhaft von 0,15 bis 0,75 Pa und besonders vorteilhaft von 0,25 bis 0,5 Pa gemessen nach dem unter Ausführungsbeispiel 3 beschriebenen Messverfahren;

iii. eine Fließgrenze I (Rotation) in der Faserdispersion von 1,0 bis 3,5 Pa und vorteilhaft von 1,25 bis 3,25 Pa gemessen nach dem unter Ausführungsbeispiel 2 beschriebenen Messverfahren;

iv. eine Fließgrenze I (Cross Over) in der Faserdispersion von 0,75 bis 4,25 Pa, vorteilhaft von 1,5 bis 4,0 Pa und besonders vorteilhaft von 1,75 bis 3,75 Pa gemessen nach dem unter Ausführungsbeispiel 3 beschriebenen Messverfahren;

v. eine dynamische Weißenbergzahl in der Fasersuspension von 3,0 bis 7,0, vorteilhafterweise von 3,5 bis 6,5 Pa und besonders vorteilhaft von 4,5 bis 6,0 gemessen nach dem unter Ausführungsbeispiel 4 beschriebenen Messverfahren;

vi. eine dynamische Weißenbergzahl in der Faserdispersion von 4,0 bis 7,5, vorteilhafterweise von 4,5 bis 7,0 und besonders vorteilhaft von 5,0 bis 6,5 gemessen nach dem unter Ausführungsbeispiel 4 beschriebenen Messverfahren;

vii. eine Festigkeit von 5 bis 100 g, bevorzugt von 20 bis 60 g und besonders bevorzugt von 30 bis 50 g hat, wobei die aktivierbare pektinhaltige Apfelfaser in Wasser als 6 Gew%ige Lösung suspendiert wird.

viii. eine Viskosität von 50 bis 350 mPas, bevorzugt von 75 bis 200 mPas, und besonders bevorzugt von 100 bis 150 mPas, wobei die aktivierbare pektinhaltige Apfelfaser in Wasser als 2,5 Gew%ige Lösung dispergiert wird und die Viskosität mit einer Scherrate von 50 s$^{-1}$ bei 20°C gemessen wird;

ix. ein Wasserbindevermögen mehr als 19 g/g, bevorzugt von mehr als 21 g/g, besonders bevorzugt von mehr als 23 g/g;

x. in 1,0 Gew%iger wässriger Suspension einen pH-Wert von 3,5 bis 5,0 und bevorzugt von 4,0 bis 4,6;

xi. eine Korngröße, bei der mindestens 90 Gew% der Partikel kleiner als 450 $\mu$m sind, bevorzugt mindestens 90 Gew% der Partikel kleiner als 350 $\mu$m sind und besonders bevorzugt mindestens 90 Gew% der Partikel kleiner als 250 $\mu$m sind;

xii. einen Helligkeitswert L* > 54, bevorzugt von L* > 55 und besonders bevorzugt von L* > 56;

xiii. einen Ballaststoffgehalt der aktivierbaren pektinhaltigen Apfelfaser von 80 bis 95 Gew%;

xiv. weniger als 8 Gew% und vorteilhaft weniger als 6 Gew% an wasserlöslichem Pektin;

b. eine Feintexturkomponente, die eine aktivierte pektinhaltige Apfelfaser enthält, wobei die aktivierte pektinhaltige Apfelfaser weniger als 10 Gew.% an wasserlöslichem Pektin und eine Fließgrenze I (Rotation) in der Faserdispersion von mehr als 5,0 Pa gemessen nach dem unter Ausführungsbeispiel 2 beschriebenen Messverfahren aufweist, und eine oder mehrere der folgenden Eigenschaften aufweist:

i. eine Fließgrenze II (Rotation) in einer Fasersuspension von mehr als 0,1 Pa, vorteilhafterweise von mehr als 0,5 Pa, und besonders vorteilhafterweise von mehr als 1,0 Pa gemessen nach dem unter Ausführungsbeispiel 2 beschriebenen Messverfahren;

ii. eine Fließgrenze I (Rotation) in der Faserdispersion von mehr als 6,0 Pa und vorteilhafterweise von mehr als 7,0 Pa gemessen nach dem unter Ausführungsbeispiel 2 beschriebenen Messverfahren;

iii. eine Fließgrenze II (Cross Over) in Fasersuspension von mehr als 0,1 Pa, vorteilhafterweise von mehr als 0,5 Pa und besonders vorteilhafterweise von mehr als 1,0 Pa gemessen nach dem unter Ausführungsbeispiel 3 beschriebenen Messverfahren;

iv. eine Fließgrenze I (Cross Over) in der Faserdispersion von mehr als 5,0 Pa, vorteilhafterweise von mehr als 6,0 Pa und besonders vorteilhafterweise von mehr als 7,0 Pa gemessen nach dem unter Ausführungsbeispiel 3 beschriebenen Messverfahren;

v. eine dynamische Weissenbergzahl in der Fasersuspension von mehr als 4,0, vorteilhafterweise von mehr als 5,0 und besonders vorteilhaft von mehr als 6,0 gemessen nach dem unter Ausführungsbeispiel 4 beschriebenen Messverfahren;

vi. eine dynamische Weissenbergzahl in der Faserdispersion von mehr als 6,5 vorteilhafterweise von mehr als 7,5 und besonders vorteilhaft von mehr als 8,5 gemessen nach dem unter Ausführungsbeispiel 4 beschriebenen Messverfahren;

vii. eine Festigkeit von mehr als 50 g, bevorzugt von mehr als 75 g und besonders bevorzugt von mehr als 100 g, wobei die Apfelfaser in Wasser als 6 Gew%ige Lösung suspendiert wird.

viii. eine Viskosität von mehr als 100 mPas, bevorzugt von mehr als 200 mPas, und besonders bevorzugt von mehr als 350 mPas, wobei die Apfelfaser in Wasser als 2,5 Gew%ige Lösung dispergiert wird und die Viskosität mit einer Scherrate von 50 s$^{-1}$ bei 20°C gemessen wird;

ix. ein Wasserbindevermögen von mehr als 20 g/g, bevorzugt von mehr als 22 g/g, besonders bevorzugt von mehr als 24 g/g, und insbesondere bevorzugt von mehr als 27,0 g/g;

x. in 1,0 Gew%iger wässriger Suspension einen pH-Wert von 3,5 bis 5,0 und bevorzugt von 4,0 bis 4,6;

xi. eine Korngröße, bei der mindestens 90 Gew% der Partikel kleiner als 400 $\mu$m, bevorzugt kleiner als 350 $\mu$m und insbesondere kleiner als 300 $\mu$m sind;

xii. einen Helligkeitswert L* > 60, bevorzugt von L* > 61 und besonders bevorzugt von L* > 62;

xiii. einen Ballaststoffgehalt der Apfelfaser von 80 bis 95 Gew%;

xiv. weniger als 8 Gew% und vorteilhaft weniger als 6 Gew% an wasserlöslichem Pektin; oder

die eine aktivierte pektinhaltige Citrusfaser enthält, wobei die aktivierte pektinhaltige Citrusfaser weniger als 10 Gew.% an wasserlöslichem Pektin und eine Fließgrenze I (Rotation) in der Faserdispersion von mehr als 5,5 Pa gemessen nach dem unter Ausführungsbeispiel 2 beschriebenen Messverfahren aufweist, und eine oder mehrere der folgenden Eigenschaften aufweist:

i. eine Fließgrenze II (Rotation) in der Fasersuspension von mehr als 1,5 Pa und vorteilhafterweise von mehr als 2,0 Pa gemessen nach dem unter Ausführungsbeispiel 2 beschriebenen Messverfahren;

ii. eine Fließgrenze II (Cross Over) in der Fasersuspension von mehr als 1,2 Pa und vorteilhafterweise von mehr als 1,5 Pa gemessen nach dem unter Ausführungsbeispiel 3 beschriebenen Messverfahren;

iii. eine Fließgrenze I (Rotation) in der Faserdispersion von mehr als 6,0 Pa gemessen nach dem unter Ausführungsbeispiel 2 beschriebenen Messverfahren;

iv. eine Fließgrenze I (Cross Over) in der Faserdispersion von mehr als 6,0 Pa und vorteilhafterweise von mehr als 6,5 Pa gemessen nach dem unter Ausführungsbeispiel 3 beschriebenen Messverfahren;

v. eine dynamische Weissenbergzahl in der Fasersuspension von mehr als 7,0, vorteilhafterweise von mehr als 7,5 und besonders vorteilhaft von mehr als 8,0 gemessen nach dem unter Ausführungsbeispiel 4 beschriebenen Messverfahren;

vi. eine dynamische Weissenbergzahl in der Faserdispersion von mehr als 6,0, vorteilhafterweise von mehr als 6,5 und besonders vorteilhaft von mehr als 7,0 gemessen nach dem unter Ausführungsbeispiel 4 beschriebenen Messverfahren;

vii. eine Festigkeit in einer 4 Gew%igen wässrigen Suspension von mindestens 150 g, besonders vorteilhaft von mindestens 220 g;

viii. eine Viskosität von mindestens 650 mPas, wobei die Pflanzenfaser in Wasser als 2,5 Gew%ige Lösung dispergiert wird und die Viskosität mit einer Scherrate von 50 s$^{-1}$ bei 20°C gemessen wird;

ix. ein Wasserbindevermögen von mehr als 22 g/g;

x. in 1,0 Gew%iger wässriger Suspension einen pH-Wert von 3,1 bis 4,75 und bevorzugt von 3,4 bis 4,2;

xi. eine Korngröße, bei der mindestens 90 Gew% der Partikel kleiner als 250 $\mu$m, bevorzugt kleiner als 200 $\mu$m und insbesondere kleiner als 150 $\mu$m sind;

xii. einen Helligkeitswert L* > 90, bevorzugt von L* > 91 und besonders bevorzugt von L* > 92;

xiii. einen Ballaststoffgehalt der Citrusfaser von 80 bis 95 Gew%;

xiv. weniger als 8 Gew% und besonders vorteilhaft weniger als 6 Gew% an wasserlöslichem Pektin; und

c. optional eine Verfeinerungskomponente.

2. Mehrkomponentensystem gemäß Anspruch 1, **dadurch gekennzeichnet, dass** die Grundkomponente a. eine Geschmackskomponente ausgewählt aus der Gruppe bestehend aus Gemüsepulver, beispielsweise Selleriepulver, Karottenpulver, Zwiebelpulver, Lauchpulver, Knoblauchpulver, Tomatenpulver, Rote-Beete-Pulver und Mischungen davon, Milchpulver, Sahnepulver und Mischungen davon enthält.

3. Mehrkomponentensystem gemäß einem der Ansprüche 1 oder 2, **dadurch gekennzeichnet, dass** die Grundkomponente a. als Pulver vorliegt.

4. Mehrkomponentensystem gemäß einem der vorhergehenden Ansprüche, **dadurch gekennzeichnet, dass** die Feintexturkomponente einen Aromastoff enthält.

5. Mehrkomponentensystem gemäß einem der vorhergehenden Ansprüche, **dadurch gekennzeichnet, dass** die Feintexturkomponente eine pastöse Form aufweist.

6. Mehrkomponentensystem gemäß einem der vorhergehenden Ansprüche, **dadurch gekennzeichnet, dass** die Verfeinerungskomponente c. ausgewählt ist aus Kräutern und/oder Gewürzen, insbesondere dass die Verfeinerungskomponente c. ausgewählt ist aus der Gruppe bestehend aus Anis, Bärlauch, Basilikum, Bockshornklee, Cayennepfeffer, Chili, Cumin, Dill, Estragon, Fenchel, Gewürznelke, Ingwer, Kamille, Kardamom, Knoblauch, Koriander, Kümmel, Kurkuma, Meerrettich, Melisse, Muskat, Paprika, Petersilie, Pfeffer, Pfefferminz, Piment, Safran, Salbei, Sternanis, Thymian, Vanille, Wacholderbeeren, Zimt, Zitronengras und Mischungen davon.

7.  Mehrkomponentensystem gemäß einem der vorhergehenden Ansprüche, **dadurch gekennzeichnet, dass** das Mehrkomponentensystem einen Anteil an Grundkomponente a. von 20 bis 95 Gew%, insbesondere von 40 bis 90 Gew% oder von 50 bis 80 Gew%, bezogen auf das kombinierte Gewicht der Grundkomponente a. und der Feintexturkomponente b., aufweist.

8.  Mehrkomponentensystem gemäß einem der vorhergehenden Ansprüche, **dadurch gekennzeichnet, dass** das Mehrkomponentensystem einen Anteil an Feintexturkomponente b. von 5 bis 80 Gew%, insbesondere von 10 bis 60 Gew% oder von 20 bis 50 Gew%, bezogen auf das kombinierte Gewicht der Grundkomponente a. und der Feintexturkomponente b., aufweist.

9.  Mehrkomponentensystem gemäß einem der vorhergehenden Ansprüche, **dadurch gekennzeichnet, dass** das Mehrkomponentensystem die Grundkomponente a. als Flüssigkeitsbindemittel die aktivierbare Apfel- oder Zitrusfaser in Pulverform und die Feintexturkomponente b. die aktivierte Apfel- oder Zitrusfaser in pastöser Form aufweist und die Feintexturkomponente einen Anteil von 5 bis 80 Gew%, insbesondere von 10 bis 60 Gew% oder von 20 bis 50 Gew%, bezogen auf das kombinierte Gewicht der Grundkomponente a. und der Feintexturkomponente b., aufweist.

10. Verwendung eines Mehrkomponentensystems gemäß einem der Ansprüche 1 bis 9 zur Herstellung einer Soße oder einer Suppe.

11. Verfahren zur Herstellung einer Soße oder einer Suppe umfassend die Schritte:

    (1) Bereitstellen einer Grundkomponente a., einer Feintexturkomponente b. und optional einer Verfeinerungskomponente c. jeweils definiert gemäß einem der Ansprüche 1 bis 9,
    (2) Einbringen der in Schritt (1) bereitgestellten Komponenten in Wasser und Mischen, um eine Mischung zu erhalten,
    (3) Optionales Erhitzen der in Schritt (2) erhaltenen Mischung.


**Claims**

1.  Multi-component system for preparing a sauce and/or a soup, containing, as separate components:

    a. a base component, which contains an activatable pectin-containing citrus fibre as a liquid binding agent, wherein the activatable pectin-containing citrus fibre comprises less than 10 wt.% water-soluble pectin and has a yield point I (rotation) in the fibre dispersion of 1.0 - 4.0 Pa measured according to the measurement method described under Embodiment 2, and has one or more of the following properties:

        i. a yield point II (rotation) in the fibre suspension of 0.1 - 1.0 Pa, advantageously of 0.3 - 0.9 Pa, and particularly advantageously of 0.6 - 0.8 Pa, measured according to the measurement method described under Embodiment 2;
        ii. a yield point II (cross over) in the fibre suspension of 0.1 - 1.0 Pa, advantageously of 0.3 - 0.9 Pa, and particularly advantageously of 0.6 - 0.8 Pa, measured according to the measurement method described under Embodiment 3;
        iii. a yield point I (rotation) in the fibre dispersion of 1.5 - 3.5 Pa and advantageously of 2.0 - 3.0 Pa, measured according to the measurement method described under Embodiment 2;
        iv. a yield point I (cross over) in the fibre dispersion of 1.0 - 4.5 Pa, advantageously of 1.5 - 4.0 Pa, and particularly advantageously of 2.0 - 3.5 Pa, measured according to the measurement method described under Embodiment 3;
        v. a dynamic Weissenberg number in the fibre suspension of 4.5 - 8.0, advantageously of 5.0 - 7.5, and particularly advantageously of 7.0 - 7.5, measured according to the measurement method described under Embodiment 4;
        vi. a dynamic Weissenberg number in the fibre dispersion of 5.0 - 9.0, advantageously of 6.0 - 8.5, and particularly advantageously of 7.0 - 8.0, measured according to the measurement method described under Embodiment 4;

vii. a strength in a 4 wt.% aqueous suspension of between 60 g and 240 g, preferably of between 120 g and 200 g, and particularly preferably of between 140 and 180 g;

viii. a viscosity of 150 to 600 mPas, preferably of 200 to 550 mPas, and particularly preferably of 250 to 500 mPas, wherein the activatable pectin-containing citrus fibre is dispersed in water as a 2.5 wt.% solution and the viscosity is measured at a shear rate of 50 s$^{-1}$ at 20°C;

ix. a water binding capacity of more than 20 g/g, preferably of more than 22 g/g, particularly preferably of more than 24 g/g, and very particularly preferably of between 24 and 26 g/g;

x. in a 1.0 wt.% aqueous suspension, a pH of 3.1 to 4.75 and preferably of 3.4 to 4.2;

xi. a grain size where at least 90 wt.% of the particles are smaller than 450 $\mu$m, preferably at least 90 wt.% of the particles are smaller than 350 $\mu$m, and particularly preferably at least 90 wt.% of the particles are smaller than 250 $\mu$m;

xii. a brightness value of L* > 84, preferably of L* > 86, and particularly preferably of L* > 88;

xiii. a fibre content of the activatable pectin-containing citrus fibre of 80 to 95 wt.%;

xiv. less than 8 wt.% and advantageously less than 6 wt.% of water-soluble pectin;

or

which contains an activatable pectin-containing apple fibre as a liquid binding agent, wherein the activatable pectin-containing apple fibre comprises less than 10 wt.% water-soluble pectin and has a yield point I (rotation) in the fibre dispersion of 0.75 - 3.75 Pa measured according to the measurement method described under Embodiment 2, and has one or more of the following properties:

i. a yield point II (rotation) in the fibre suspension of 0.1 - 1.0 Pa, advantageously of 0.15 - 0.75 Pa, and particularly advantageously of 0.25 - 0.5 Pa, measured according to the measurement method described under Embodiment 2;

ii. a yield point II (cross over) in the fibre suspension of 0.1 - 1.0 Pa, advantageously of 0.15 - 0.75 Pa, and particularly advantageously of 0.25 - 0.5 Pa, measured according to the measurement method described under Embodiment 3;

iii. a yield point I (rotation) in the fibre dispersion of 1.0 - 3.5 Pa and advantageously of 1.25 - 3.25 Pa, measured according to the measurement method described under Embodiment 2;

iv. a yield point I (cross over) in the fibre dispersion of 0.75 - 4.25 Pa, advantageously of 1.5 - 4.0 Pa, and particularly advantageously of 1.75 - 3.75 Pa, measured according to the measurement method described under Embodiment 3;

v. a dynamic Weissenberg number in the fibre suspension of 3.0 - 7.0, advantageously of 3.5 - 6.5, and particularly advantageously of 4.5 - 6.0, measured according to the measurement method described under Embodiment 4;

vi. a dynamic Weissenberg number in the fibre dispersion of 4.0 - 7.5, advantageously of 4.5 - 7.0, and particularly advantageously of 5.0 - 6.5, measured according to the measurement method described under Embodiment 4;

vii. a strength of 5 g to 1000 g, preferably of 20 g to 60 g, and particularly preferably of between 30 to 50 g, wherein the activatable pectin-containing apple fibre is suspended in water as a 6 wt.% solution;

viii. a viscosity of 50 to 350 mPas, preferably of 75 to 200 mPas, and particularly preferably of 100 to 150 mPas, wherein the activatable pectin-containing apple fibre is dispersed in water as a 2.5 wt.% solution and the viscosity is measured at a shear rate of 50 s$^{-1}$ at 20°C;

ix. a water binding capacity of more than 19 g/g, preferably of more than 21 g/g, particularly preferably of more than 23 g/g;

x. in a 1.0 wt.% aqueous suspension, a pH of 3.5 to 5.0 and preferably of 4.0 to 4.6;

xi. a grain size where at least 90 wt.% of the particles are smaller than 450 $\mu$m, preferably at least 90 wt.% of the particles are smaller than 350 $\mu$m, and particularly preferably at least 90 wt.% of the particles are smaller than 250 $\mu$m;

xii. a brightness value of L* > 54, preferably of L* > 55, and particularly preferably of L* > 56;

xiii. a fibre content of the activatable pectin-containing apple fibre of 80 to 95 wt.%;

xiv. less than 8 wt.% and advantageously less than 6 wt.% of water-soluble pectin;

b. a fine texture component which contains an activated pectin-containing apple fibre, wherein the activated pectin-containing apple fibre comprises less than 10 wt.% water-soluble pectin and has a yield point I (rotation) in the fibre dispersion of more than 5.0 Pa measured according to the measurement method described under Embodiment 2, and comprises one or more of the following properties:

i. a yield point II (rotation) in a fibre suspension of more than 0.1 Pa, advantageously of more than 0.5 Pa, and particularly advantageously of more than 1.0 Pa, measured according to the measurement method described under Embodiment 2;

ii. a yield point I (rotation) in the fibre dispersion of more than 6.0 Pa and advantageously of more than 7.0 Pa, measured according to the measurement method described under Embodiment 2;

iii. a yield point II (cross over) in fibre suspension of more than 0.1 Pa, advantageously of more than 0.5 Pa, and particularly advantageously of more than 1.0 Pa, measured according to the measurement method described under Embodiment 3;

iv. a yield point I (cross over) in the fibre dispersion of more than 5.0 Pa, advantageously of more than 6.0 Pa, and particularly advantageously of more than 7.0 Pa, measured according to the measurement method described under Embodiment 3;

v. a dynamic Weissenberg number in the fibre suspension of 4.0, advantageously of more than 5.0, and particularly advantageously of more than 6.0, measured according to the measurement method described under Embodiment 4;

vi. a dynamic Weissenberg number in the fibre dispersion of more than 6.5, advantageously of more than 7.5, and particularly advantageously of more than 8.5, measured according to the measurement method described under Embodiment 4;

vii. a strength of more than 50 g, preferably of more than 75 g, and particularly preferably of more than 100 g, wherein the apple fibre is suspended in water as a 6 wt.% solution;

viii. a viscosity of more than 100 mPas, preferably of more than 200 mPas, and particularly preferably of more than 350 mPas, wherein the apple fibre is dispersed in water as a 2.5 wt.% solution and the viscosity is measured at a shear rate of 50 s$^{-1}$ at 20°C;

ix. a water binding capacity of more than 20 g/g, preferably of more than 22 g/g, particularly preferably of more than 24 g/g, and very particularly preferably of more than 27.0 g/g;

x. in a 1.0 wt.% aqueous suspension, a pH of 3.5 to 5.0 and preferably of 4.0 to 4.6;

xi. a grain size where at least 90 wt.% of the particles are smaller than 400 $\mu$m, preferably smaller than 350 $\mu$m, and particularly preferably smaller than 300 $\mu$m;

xii. a brightness value of L* > 60, preferably of L* > 61, and particularly preferably of L* > 62;

xiii. a fibre content of the apple fibre of 80 to 95 wt.%;

xiv. less than 8 wt.% and advantageously less than 6 wt.% of water-soluble pectin;

or

which contains an activated pectin-containing citrus fibre, wherein the activated pectin-containing citrus fibre comprises less than 10 wt.% water-soluble pectin and has a yield point I (rotation) in the fibre dispersion of more than 5.5 Pa measured according to the measurement method described under Embodiment 2, and has one or more of the following properties:

i. a yield point II (rotation) in the fibre suspension of more than 1.5 Pa and advantageously of more than 2.0 Pa, measured according to the measurement method described under Embodiment 2;

ii. a yield point II (cross over) in the fibre suspension of more than 1.2 Pa and advantageously of more than 1.5 Pa, measured according to the measurement method described under Embodiment 3;

iii. a yield point I (rotation) in the fibre dispersion of more than 6.0 Pa, measured according to the measurement method described under Embodiment 2;

iv. a yield point I (cross over) in the fibre dispersion of more than 6.0 Pa and advantageously of more than 6.5 Pa, measured according to the measurement method described under Embodiment 3;

v. a dynamic Weissenberg number in the fibre suspension of more than 7.0, advantageously of more than 7.5, and particularly advantageously of more than 8.0, measured according to the measurement method described under Embodiment 4;

vi. a dynamic Weissenberg number in the fibre dispersion of more than 6.0, advantageously of more than 6.5, and particularly advantageously of more than 7.0, measured according to the measurement method described under Embodiment 4;

vii. a strength in a 4 wt.% aqueous suspension of at least 150 g, particularly advantageously of at least 220 g;

viii. a viscosity of at least 650 mPas, wherein the plant fibre is dispersed in water as a 2.5 wt.% solution and the viscosity is measured at a shear rate of 50 s$^{-1}$ at 20°C;

ix. a water binding capacity of more than 22 g/g;

x. in a 1.0 wt.% aqueous suspension, a pH of 3.1 to 4.75 and preferably of 3.4 to 4.2;

xi. a grain size where at least 90 wt.% of the particles are smaller than 250 $\mu$m, preferably smaller than 200 $\mu$m, and particularly preferably smaller than 150 $\mu$m;

xii. a brightness value of L* > 90, preferably of L* > 91, and particularly preferably of L* > 92;

xiii. a fibre content of the citrus fibre of 80 to 95 wt.%;

xiv. less than 8 wt.% and particularly advantageously less than 6 wt.% of water-soluble pectin; and

c. optionally an improvement component.

2. Multi-component system according to claim 1, **characterised in that** the base component a. contains a flavour component selected from the group consisting of vegetable powder, for example celery powder, carrot powder, onion powder, leek powder, garlic powder, tomato powder, beetroot powder, and mixtures thereof, milk powder, cream powder, and mixtures thereof.

3. Multi-component system according to either claim 1 or claim 2, **characterised in that** the base component a. is present as a powder.

4. Multi-component system according to any of the preceding claims, **characterised in that** the fine texture component contains an flavoring substance.

5. Multi-component system according to any of the preceding claims, **characterised in that** the fine texture component is in a pasty form.

6. Multi-component system according to any of the preceding claims, **characterised in that** the improvement component c. is selected from herbs and/or spices, in particular **in that** the improvement component c. is selected from the group consisting of aniseed, wild garlic, basil, fenugreek, cayenne pepper, chili, cumin, dill, tarragon, fennel, cloves, ginger, camomile, cardamon, garlic, coriander, caraway, turmeric, horseradish, lemon balm, nutmeg, paprika, parsley, pepper, peppermint, pimento, saffron, sage, star anise, thyme, vanilla, juniper berries, cinnamon, lemongrass, and mixtures thereof.

7. Multi-component system according to any of the preceding claims, **characterised in that** the multi-component system has a portion of base component a. of 20 to 95 wt. %, in particular of 40 to 90 wt.% or of 50 to 80 wt.%, based on the combined weight of the base component a. and the fine texture component b.

8. Multi-component system according to any of the preceding claims, **characterised in that** the multi-component system has a portion of fine texture component b. of 5 to 80 wt.%, in particular of 10 to 60 wt.% or of 20 to 50 wt.%, based on the combined weight of the base component a. and the fine texture component b.

9. Multi-component system according to any of the preceding claims, **characterised in that** in the multi-component system the base component a. comprises the activatable apple or citrus fibre in powder form as a liquid binding agent, and the fine texture component b. comprises the activated apple or citrus fibre in pasty form, and the fine texture component is in a portion of 5 to 80 wt.%, in particular of 10 to 60 wt.% or of 20 to 50 wt.%, based on the combined weight of the base component a. and the fine texture component b.

10. Use of a multi-component system according to any of claims 1 to 9 for preparing a sauce or a soup.

11. Method for preparing a sauce or a soup comprising the steps of:

(1) providing a base component a., a fine texture component b., and optionally an improvement component c., in each case defined according to any of claims 1 to 9,
(2) introducing the components provided in step (1) into water and mixing in order to obtain a mixture,
(3) optional heating the mixture obtained in step (2).

**Revendications**

1. Système à ingrédients multiples pour la préparation d'une sauce et/ou d'une soupe contenant en tant qu'ingrédients séparés :

a. un ingrédient de base, qui contient en tant qu'agent liant les liquides une fibre d'agrume activable contenant de la pectine, dans lequel la fibre d'agrume activable contenant de la pectine présente moins de 10 % en poids de pectine hydrosoluble et une limite d'écoulement I (rotation) dans la dispersion de fibres de 1,0 - 4,0 Pa mesurée selon le procédé de mesure décrit dans l'exemple de réalisation 2, et présente une ou plusieurs des propriétés suivantes :

i. une limite d'écoulement II (rotation) dans la suspension de fibres de 0,1 - 1,0 Pa, de manière avantageuse de 0,3 - 0,9 Pa et de manière particulièrement avantageuse de 0,6 - 0,8 Pa mesurée selon le procédé de mesure décrit dans l'exemple de réalisation 2

ii. une limite d'écoulement II (croisement) dans la suspension de fibres de 0,1 - 1,0 Pa, de manière avantageuse de 0,3 - 0,9 Pa et de manière particulièrement avantageuse de 0,6 - 0,8 Pa mesurée selon le procédé de mesure décrit dans l'exemple de réalisation 3 ;

iii. une limite d'écoulement i (rotation) dans la dispersion de fibres de 1,5 - 3,5 Pa et de manière avantageuse de 2,0 - 3,0 Pa mesurée selon le procédé de mesure décrit dans l'exemple de réalisation 2 ;

iv. une limite d'écoulement I (croisement) dans la dispersion de fibres de 1,0 - 4,5 Pa, de manière avantageuse de 1,5 - 4,0 Pa et de manière particulièrement avantageuse de 2,0 - 3,5 Pa mesurée selon le procédé de mesure décrit dans l'exemple de réalisation 3 ;

v. un nombre de Weissenberg dynamique dans la suspension de fibres de 4,5 - 8,0, de manière avantageuse de 5,0 - 7,5 et de manière particulièrement avantageuse de 7,0 - 7,5 mesuré selon le procédé de mesure décrit dans l'exemple de réalisation 4 ;

vi. un nombre de Weissenberg dynamique dans la dispersion de fibres de 5,0 - 9,0, de manière avantageuse de 6,0 - 8,5 et de manière particulièrement avantageuse de 7,0 - 8,0 mesuré selon le procédé de mesure décrit dans l'exemple de réalisation 4 ;

vii. présente une résistance dans la suspension aqueuse à 4 % en poids entre 60 g et 240 g, de manière préférée entre 120 g et 200 g et de manière particulièrement préférée entre 140 et 180 g ;

viii. présente une viscosité de 150 à 600 mPas, de manière préférée de 200 à 550 mPas, et de manière particulièrement préférée de 250 à 500 mPas, dans lequel la fibre d'agrume activable contenant de la pectine est dispersée dans de l'eau en tant qu'une solution à 2,5 % en poids et la viscosité est mesurée avec un taux de cisaillement de 50 s$^{-1}$ à 20 °C ;

ix. un pouvoir de rétention d'eau supérieur à 20 g/g, de manière préférée supérieur à 22 g/g, de manière particulièrement préférée supérieur à 24 g/g, et en particulier de manière préférée entre 24 et 26 g/g ;

x. une valeur de pH de 3,1 à 4,75 et de manière préférée de 3,4 à 4,2 dans une suspension aqueuse à 1,0 % en poids ;

xi. une granulométrie, à laquelle au moins 90 % en poids des particules sont inférieurs à 450 μm, de manière préférée au moins 90 % en poids des particules sont inférieurs à 350 μm et de manière particulièrement préférée au moins 90 % en poids des particules sont inférieurs à 250 μm ;

xii. une valeur de luminosité L* > 84, de manière préférée L* > 86 et de manière particulièrement préférée L* > 88 ;

xiii. une teneur en fibres alimentaires de la fibre d'agrume activable contenant de la pectine de 80 à 95 % en poids ;

xiv. moins de 8 % en poids et de manière avantageuse moins de 6 % en poids en pectine hydrosoluble ; ou

qui contient en tant que agent liant les liquides une fibre de pomme activable contenant de la pectine, dans lequel la fibre de pomme activable contenant de la pectine présente moins de 10 % en poids de pectine hydrosoluble et une limite d'écoulement I (rotation) dans la dispersion de fibres de 0,75 - 3,75 Pa mesurée selon le procédé de mesure décrit dans l'exemple de réalisation 2, et présente une ou plusieurs des propriétés suivantes :

i. une limite d'écoulement II (rotation) dans la suspension de fibres de 0,1 à 1,0 Pa, de manière avantageuse de 0,15 à 0,75 Pa et de manière particulièrement avantageuse de 0,25 à 0,5 Pa mesurée selon le procédé de mesure décrit dans l'exemple de réalisation 2 ;

ii. une limite d'écoulement II (croisement) dans la suspension de fibres de 0,1 à 1,0 Pa, de manière avantageuse de 0,15 à 0,75 Pa et de manière particulièrement avantageuse de 0,25 à 0,5 Pa mesurée selon le procédé de mesure décrit dans l'exemple de réalisation 3 ;

iii. une limite d'écoulement I (rotation) dans la dispersion de fibres de 1,0 à 3,5 Pa et de manière avantageuse de 1,25 à 3,25 Pa mesurée selon le procédé de mesure décrit dans l'exemple de réalisation 2 ;

iv. une limite d'écoulement I (croisement) dans la dispersion de fibres de 0,75 à 4,25 Pa, de manière avantageuse de 1,5 à 4,0 Pa et de manière particulièrement avantageuse de 1,75 à 3,75 Pa mesurée selon le procédé de mesure décrit dans l'exemple de réalisation 3 ;

v. un nombre de Weissenberg dynamique dans la suspension de fibres de 3,0 à 7,0, de manière avantageuse de 3,5 à 6,5 Pa et de manière particulièrement avantageuse de 4,5 à 6,0 mesuré selon le procédé de mesure décrit dans l'exemple de réalisation 4 ;

vi. un nombre de Weissenberg dynamique dans la dispersion de fibres de 4,0 à 7,5, de manière avantageuse de 4,5 à 7,0 et de manière particulièrement avantageuse de 5,0 à 6,5 mesuré selon le procédé de mesure décrit dans l'exemple de réalisation 4 ;

vii. présente une résistance de 5 à 100 g, de manière préférée de 20 à 60 g et de manière particulièrement préférée de 30 à 50 g, dans lequel la fibre de pomme activable contenant de la pectine est mise en suspension dans de l'eau en tant que solution à 6 % en poids ;

viii. une viscosité de 50 à 350 mPas, de manière préférée de 75 à 200 mPas, et de manière particulièrement préférée de 100 à 150 mPas, dans lequel la fibre de pomme activable contenant de la pectine est dispersée dans de l'eau en tant que solution à 2,5 % en poids et la viscosité est mesurée avec un taux de cisaillement de 50 s$^{-1}$ à 20 °C ;

ix. un pouvoir de rétention d'eau supérieur à 19 g/g, de manière préférée supérieur à 21 g/g, de manière particulièrement préférée supérieur à 23 g/g ;

x. dans une suspension aqueuse à 1,0 % en poids, une valeur pH de 3,5 à 5,0 et de manière préférée de 4,0 à 4,6 ;

xi. une granulométrie, à laquelle au moins 90 % en poids des particules sont inférieurs à 450 $\mu$m, de manière préférée au moins 90 % en poids des particules sont inférieurs à 350 $\mu$m et de manière particulièrement préférée au moins 90 % des particules sont inférieurs à 250 $\mu$m ;

xii. une valeur de luminosité L* > 54, de manière préférée L* > 55 et de manière particulièrement préférée L* > 56 ;

xiii. une teneur en fibres alimentaires de la fibre de pomme activable contenant de la pectine de 80 à 95 % en poids ;

xiv. moins de 8 % en poids, et de manière avantageuse moins de 6 % en poids de pectine hydrosoluble ;

b. un ingrédient de texture fine, qui contient une fibre de pomme activée contenant de la pectine, dans lequel la fibre de pomme activée contenant de la pectine présente moins de 10 % en poids de pectine hydrosoluble et une limite d'écoulement I (rotation) dans la dispersion de fibres supérieure à 5,0 Pa selon le procédé de mesure décrit dans l'exemple de réalisation 2, et présente une ou plusieurs des propriétés suivantes :

i. une limite d'écoulement II (rotation) dans une suspension de fibres supérieure à 0,1 Pa, de manière avantageuse supérieure à 0,5 Pa, et de manière particulièrement avantageuse supérieure à 1,0 Pa mesurée selon le procédé de mesure décrit dans l'exemple de réalisation 2 ;

ii. une limite d'écoulement I (rotation) dans la dispersion de fibres supérieure à 6,0 Pa et de manière avantageuse supérieure à 7,0 Pa mesurée selon le procédé de mesure décrit dans l'exemple de réalisation 2 ;

iii. une limite d'écoulement II (croisement) dans la suspension de fibres supérieure à 0,1 Pa, de manière avantageuse supérieure à 0,5 Pa et de manière particulièrement avantageuse supérieure à 1,0 PA mesurée selon le procédé de mesure décrit dans l'exemple de réalisation 3 ;

iv. une limite d'écoulement I (croisement) dans la dispersion de fibres supérieure à 5,0 Pa, de manière avantageuse supérieure à 6,0 Pa et de manière particulièrement avantageuse supérieure à 7,0 Pa mesurée selon le procédé de mesure décrit dans l'exemple de réalisation 3 ;

v. un nombre de Weissenberg dynamique dans la suspension de fibres supérieur à 4,0, de manière avantageuse supérieur à 5,0 et de manière particulièrement avantageuse supérieur à 6,0 mesuré selon le procédé de mesure décrit dans l'exemple de réalisation 4 ;

vi. un nombre de Weissenberg dynamique dans la dispersion de fibres supérieur à 6,5, de manière avantageuse supérieur à 7,5 et de manière particulièrement avantageuse supérieur à 8,5 mesuré selon le procédé de mesure décrit dans l'exemple de réalisation 4 ;

vii. une résistance supérieure à 50 g, de manière préférée supérieure à 75 g et de manière particulièrement préférée supérieure à 100 g, dans lequel la fibre de pomme est mise en suspension dans de l'eau en tant que solution à 6 % en poids ;

viii. une viscosité supérieure à 100 mPas, de manière préférée supérieure à 200 mPas, et de manière particulièrement préférée supérieure à 350 Mpas, dans lequel la fibre de pomme est dispersée dans de l'eau en tant que solution à 2,5 % en poids, et la viscosité est mesurée avec un taux de cisaillement de 50 s$^{-1}$ à 20 °C ;

ix. un pouvoir de rétention d'eau supérieur à 20 g/g, de manière préférée supérieur à 22 g/g, de manière particulièrement préférée supérieur à 24 g/g, et en particulier de manière préférée supérieur à 27,0 g/g ;

x. dans une suspension aqueuse à 1,0 % en poids une valeur pH de 3,5 à 5,0 et de manière préférée de 4,0 à 4,6 ;

xi. une granulométrie, à laquelle au moins 90 % en poids des particules sont inférieurs à 400 $\mu$m, de manière préférée sont inférieurs à 350 $\mu$m et en particulier sont inférieurs à 300 $\mu$m ;

xii. une valeur de luminosité L* > 60, de manière préférée L* > 61 et de manière particulièrement préférée L* > 62 ;

xiii. une teneur en fibres alimentaires de la fibre de pomme de 80 à 95 % en poids ;

xiv. moins de 8 % en poids et de manière avantageuse moins de 6 % en poids de pectine hydrosoluble ; ou

qui contient une fibre d'agrume activée contenant de la pectine, dans lequel la fibre d'agrume activée contenant de la pectine présente moins de 10 % en poids de pectine hydrosoluble et une limite d'écoulement I (rotation) dans la dispersion de fibres supérieure à 5,5 Pa mesurée selon le procédé de mesure décrit dans l'exemple de réalisation 2, et présente une ou plusieurs des propriétés suivantes :

i. une limite d'écoulement II (rotation) dans la suspension de fibres supérieure à 1,5 Pa et de manière avantageuse supérieure à 2,0 Pa mesurée selon le procédé de mesure décrit dans l'exemple de réalisation 2 ;

ii. une limite d'écoulement II (croisement) dans la suspension de fibres supérieure à 1,2 Pa et de manière avantageuse supérieure à 1,5 Pa mesurée selon le procédé de mesure décrit dans l'exemple de réalisation 3 ;

iii. une limite d'écoulement I (rotation) dans la dispersion de fibres supérieure à 6,0 Pa mesurée selon le procédé de mesure décrit dans l'exemple de réalisation 2 ;

iv. une limite d'écoulement I (croisement) dans la dispersion de fibres supérieure à 6,0 Pa et de manière avantageuse supérieure à 6,5 Pa mesurée selon le procédé de mesure décrit dans l'exemple de réalisation 3 ;

v. un nombre de Weissenberg dynamique dans la suspension de fibres supérieur à 7,0, de manière avantageuse supérieur à 7,5 et de manière particulièrement avantageuse supérieur à 8,0 selon le procédé de mesure décrit dans l'exemple de réalisation 4 ;

vi. un nombre de Weissenberg dynamique dans la dispersion de fibres supérieur à 6,0, de manière avantageuse supérieur à 6,5 et de manière particulièrement avantageuse supérieur à 7,0 mesuré selon le procédé de mesure décrit dans l'exemple de réalisation 4 ;

vii. une résistance dans une suspension aqueuse à 4 % en poids d'au moins 150 g, de manière particulièrement avantageuse d'au moins 220 g ;

viii. une viscosité d'au moins 650 mPas, dans lequel la fibre végétale est dispersée dans de l'eau en tant qu'une solution à 2,5 % en poids et la viscosité est mesurée avec un taux de cisaillement de 50 s$^{-1}$ à 20 °C ;

ix. un pouvoir de rétention d'eau supérieur à 22 g/g ;

x. dans une suspension aqueuse à 1,0 % en poids une valeur pH de 3,1 à 4,75 et de manière préférée de 3,4 à 4,2 ;

xi. une granulométrie, à laquelle au moins 90 % en poids des particules sont inférieurs à 250 $\mu$m, de manière préférée inférieurs à 200 $\mu$m et en particulier inférieurs à 150 $\mu$m ;

xii. une valeur de luminosité L* > 90, de manière préférée L* > 91 et de manière particulièrement préférée L* > 92 ;

xiii. une teneur en fibres alimentaires de la fibre d'agrume de 80 à 95 % en poids ;

xiv. moins de 8 % en poids et de manière particulièrement préférée moins de 6 % en poids de pectine hydrosoluble ; et

c. en option un ingrédient d'amélioration.

2. Système à ingrédients multiples selon la revendication 1, **caractérisé en ce que** l'ingrédient de base a. contient un ingrédient exhausteur de goût choisi parmi le groupe constitué de poudre de légume, par exemple poudre de céleri, poudre de carotte, poudre d'oignon, poudre de poireau, poudre d'ail, poudre de tomate, poudre de betterave et des mélanges de celles-ci, de la poudre de lait, poudre de crème et des mélanges de celles-ci.

3. Système à ingrédients multiples selon l'une quelconque des revendications 1 ou 2, **caractérisé en ce que** l'ingrédient de base a. est présent sous la forme de poudre.

**4.** Système à ingrédients multiples selon l'une quelconque des revendications précédentes, **caractérisé en ce que** l'ingrédient de texture fine contient un agent aromatisant.

**5.** Système à ingrédients multiples selon l'une quelconque des revendications précédentes, **caractérisé en ce que** l'ingrédient de texture fine présente une forme pâteuse.

**6.** Système à ingrédients multiples selon l'une quelconque des revendications précédentes, **caractérisé en ce que** l'ingrédient d'amélioration c. est choisi parmi des aromates et/ou des épices, en particulier que l'ingrédient d'amélioration c. est choisi parmi le groupe constitué d'anis, d'ail des ours, de basilic, de fenugrec, de poivre de Cayenne, de chili, de cumin, d'aneth, d'estragon, de fenouil, de clou de girofle, de gingembre, de camomille, de cardamome, de poireau, de coriandre, de cumin, de curcuma, de raifort, de mélisse, de muscat, de paprika, de persil, de poivre, de menthe poivrée, de piment, de safran, de sauge, d'anis étoilé, de thym, de vanille, de baies de genièvre, de cannelle, de citronnelle et de mélanges de ceux-ci.

**7.** Système à ingrédients multiples selon l'une quelconque des revendications précédentes, **caractérisé en ce que** le système à ingrédients multiples présente une proportion de l'ingrédient de base a. de 20 à 95 % en poids, en particulier de 40 à 90 % en poids ou de 50 à 80 % en poids par rapport au poids combiné de l'ingrédient de base a. et de l'ingrédient de texture fine b.

**8.** Système à ingrédients multiples selon l'une quelconque des revendications précédentes, **caractérisé en ce que** le système à ingrédients multiples présente une proportion d'ingrédient de texture fine b. de 5 à 80 % en poids, en particulier de 10 à 60 % en poids ou de 20 à 50 % en poids par rapport au poids combiné de l'ingrédient de base a. et de l'ingrédient de texture fine b.

**9.** Système à ingrédients multiples selon l'une quelconque des revendications précédentes, **caractérisé en ce que** le système à ingrédients multiples présente l'ingrédient de base a. en tant qu'agent liant les liquides, la fibre de pomme ou d'agrume activable sous forme de poudre et l'ingrédient de texture fine b. présente la fibre de pomme ou d'agrume activée sous forme pâteuse et l'ingrédient de texture fine présente une proportion de 5 à 80 % en poids, en particulier de 10 à 60 % en poids ou de 20 à 50 % en poids par rapport au poids combiné de l'ingrédient de base a. et de l'ingrédient de texture fine b.

**10.** Utilisation d'un système à ingrédients multiples selon l'une quelconque des revendications 1 à 9 pour produire une sauce ou une soupe.

**11.** Procédé de préparation d'une sauce ou d'une soupe comprenant les étapes :

(1) de fourniture d'un ingrédient de base a., d'un ingrédient de texture fine b. et en option d'un ingrédient d'amélioration c. respectivement définis selon l'une quelconque des revendications 1 à 9,
(2) d'introduction des ingrédients fournis dans l'étape (1) dans de l'eau et de mélange pour obtenir un mélange,
(3) en option de chauffage du mélange obtenu dans l'étape (2).

**Fig. 1**

```
   ╭────────╮
   │   10   │
   ╰────────╯
       │
       ▼
   ┌────────┐
   │   20   │
   └────────┘
       │
       ▼
   ┌────────┐
   │ 30a/30b│
   └────────┘
       │
       ▼
   ┌────────┐
   │   35   │
   └────────┘
       │
       ▼
   ┌────────┐
   │   40   │
   └────────┘
       │
       ▼
   ┌────────┐
   │   50   │
   └────────┘
       │
       ▼
   ┌────────┐
   │   60   │
   └────────┘
       │
       ▼
   ┌────────┐
   │   70   │
   └────────┘
       │
       ▼
   ┌────────┐
   │   80   │
   └────────┘
       │
       ▼
   ┌────────┐
   │  100   │
   └────────┘
       │
       ▼
   ╭────────╮
   │  110   │
   ╰────────╯
```

# Fig. 2

```
   ┌─────────┐
  (   210    )
   └─────────┘
        │
        ▼
   ┌─────────┐
   │   220   │
   └─────────┘
        │
        ▼
   ┌─────────┐
   │   230   │
   └─────────┘
        │
        ▼
   ┌─────────┐
   │   240   │
   └─────────┘
        │
        ▼
   ┌─────────┐
   │   250   │
   └─────────┘
        │
        ▼
   ┌─────────┐
   │   260   │
   └─────────┘
        │
        ▼
   ┌─────────┐
   │   270   │
   └─────────┘
        │
        ▼
   ┌─────────┐
   │   280   │
   └─────────┘
        │
        ▼
   ┌─────────┐
   │   300   │
   └─────────┘
        │
        ▼
   ┌─────────┐
  (   310    )
   └─────────┘
```

## Fig. 3

```
     ┌─────────┐
    (    410    )
     └─────────┘
          │
          ▼
     ┌─────────┐
     │   420   │
     └─────────┘
          │
          ▼
     ┌─────────┐
     │   430   │
     └─────────┘
          │
          ▼
     ┌─────────┐
     │   440   │
     └─────────┘
          │
          ▼
     ┌─────────┐
     │   450   │
     └─────────┘
          │
          ▼
     ┌─────────┐
     │   460   │
     └─────────┘
          │
          ▼
     ┌─────────┐
     │   470   │
     └─────────┘
          │
          ▼
     ┌─────────┐
     │   480   │
     └─────────┘
          │
          ▼
     ┌ ─ ─ ─ ─ ┐
       490
     └ ─ ─ ─ ─ ┘
          │
          ▼
     ┌─────────┐
     │   500   │
     └─────────┘
          │
          ▼
     ┌─────────┐
    (    510    )
     └─────────┘
```

## Fig. 4

```
  ┌─────────┐
 (    610    )
  └─────────┘
       │
       ▼
  ┌─────────┐
  │   620   │
  └─────────┘
       │
       ▼
  ┌─────────┐
  │  630a/  │
  │  630b   │
  └─────────┘
       │
       ▼
  ┌─────────┐
  │   635   │
  └─────────┘
       │
       ▼
  ┌─────────┐
  │   640   │
  └─────────┘
       │
       ▼
  ┌─────────┐
  │   650   │
  └─────────┘
       │
       ▼
  ┌─────────┐
  │   660   │
  └─────────┘
       │
       ▼
  ┌─────────┐
  │   670   │
  └─────────┘
       │
       ▼
  ┌─────────┐
  │   680   │
  └─────────┘
       │
       ▼
  ┌ ─ ─ ─ ─ ┐
  │   690   │
  └ ─ ─ ─ ─ ┘
       │
       ▼
  ┌─────────┐
  │   700   │
  └─────────┘
       │
       ▼
  ┌─────────┐
 (    710    )
  └─────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0070971 A1
- EP 0653166 A1
- WO 2019048715 A2
- DE 19943188
- DE 102020122510
- DE 102020115525
- DE 102020122520
- DE 102020122518

**In der Beschreibung aufgeführte Nicht-Patentliteratur**

- **WINDHAB E** ; **MAIER T**. *Lebensmitteltechnik*, 1990, vol. 44, 185f